# EUROPEAN PATENT SPECIFICATION

(11) **EP 4 270 102 B1**
(45) Date of publication and mention of the grant of the patent: **18.11.2026**
(21) Application number: 21910902.2
(22) Date of filing: 22.12.2021
(51) Int. Cl.: G02F 1/1333, B32B 1/00, B32B 3/08, B32B 7/12, B32B 17/10, E06B 9/24, B32B 27/08

(54) **LIQUID CRYSTAL DEVICE**
FLÜSSIGKRISTALLVORRICHTUNG
DISPOSITIF À CRISTAUX LIQUIDES

(30) Priority: 24.12.2020 JP 2020215203; 24.12.2020 JP 2020215335; 07.07.2021 JP 2021112658; 07.07.2021 JP 2021112876; 12.07.2021 JP 2021115152
(43) Date of publication of application: 01.11.2023
(73) Proprietor: Dai Nippon Printing Co., Ltd., Tokyo 162-8001 (JP)
(72) Inventor: IKEZAWA, Takao, Tokyo 162-8001 (JP); SHIRAISHI, Isamu, Tokyo 162-8001 (JP); TAMAKI, Atsushi, Tokyo 162-8001 (JP); HAYASHI, Hirofumi, Tokyo 162-8001 (JP); OKABE, Katsumi, Tokyo 162-8001 (JP); NAKASHIMA, Yoshiko, Tokyo 162-8001 (JP)
(74) Representative: Müller-Boré & Partner Patentanwälte PartG mbB
(86) International application number: PCT/JP2021/047693
(87) International publication number: WO 2022/138762

(56) References cited:
- EP-A1- 3 467 578
- WO-A1-2014/191234
- WO-A1-2019/004160
- WO-A1-2019/004160
- WO-A1-2019/198748
- WO-A1-2019/198748
- WO-A1-2020/003252
- JP-A- 2016 122 097
- JP-A- 2016 126 283
- JP-A- 2016 126 283
- JP-A- 2017 112 108
- JP-A- 2019 214 364
- JP-A- 2019 533 188
- JP-A- 2020 042 252
- KR-A- 20160 002 104
- US-A1- 2019 086 709

## Description

### Technical Field

The present invention relates to a liquid crystal device which is disclosed herein as a sixth embodiment. The scope of the present invention is defined as set out in the appended claims.

### Background Art

Hitherto, a light modulating member, using a liquid crystal, used in combination with a translucent member, such as a window, and available for electronic blinds and the like that control transmission of ambient light, a light modulating device using such a light modulating member, and the like have been suggested (see, for example, PTL 1). PTL 2 describes a laminated glazing with a switchable liquid crystal layer. PTL 3 describes a laminated glass, a method for producing the laminated glass, a light control device, a light control cell, and a laminate for a light control device. PTL 4 describes a light-adjusting member, a sun visor including a light-adjusting member, and a moving body including a sun visor. PTL 5 describes a display device having a liquid crystal panel, and a method for manufacturing a display device having a liquid crystal panel. PTL 6 describes a light modulating device including a light modulating cell of a liquid crystal drive system attached to a curved surface. PTL 7 describes a flexible display including a plurality of adhesive layers that block ultraviolet light.

### Citation List

### Patent Literature

PTL 1: International Publication No. 2019/198748
PTL 2: WO 2020/003252 A1
PTL 3: WO 2019/198748 A1
PTL 4: WO 2019/004160 A1
PTL 5: JP 2016 126283 A
PTL 6: EP 3 467 578 A1
PTL 7: US 2019/086709 A1

### Technical Problem

Generally, when a light modulating device is manufactured, a laminated structure including a pair of glass plates, a light modulating cell located between the glass plates, and a bonding element provided between each glass plate and the light modulating cell is heated in a high-pressure environment with an autoclave or the like (final compression bonding process). In order to suppress impairment of the quality of the light modulating device resulting from a foaming phenomenon that can occur in an interlayer of the light modulating device, the laminated structure may be heated in a vacuum environment (a temporary compression bonding process and a deairing process) in advance of the heating process with the autoclave.

When the light modulating cell is sandwiched between the pair of glass plates in high-temperature, high-pressure conditions in this way, it is not easy to apply a uniform pressure over the entire surface of the light modulating cell through each of the glass plates. If a pressure applied to the surface of the light modulating cell through each of the glass plates is not uniform, accumulation of liquid crystal that is a phenomenon in which the liquid crystal of the light modulating cell is locally unevenly distributed can occur. Accumulation of liquid crystal lowers the light modulating performance of the light modulating cell and impairs the appearance of the light modulating device.

When the completed light modulating device is exposed to a high-temperature environment, the interlayer softens, while the substrate material and liquid crystal of the light modulating cell slightly expand. As a result, a restraining force of the interlayer restraining the light modulating cell reduces, with the result that the above-described accumulation of liquid crystal may occur. When the light modulating device in an upright position is exposed to a high-temperature environment, the liquid crystal of the light modulating cell may fall due to gravity and the thickness of a liquid crystal layer of a liquid crystal film may locally change. In other words, the amount of liquid crystal is greater on the vertically lower side due to gravity, so the thickness of the liquid crystal layer increases. In this case, the amount of liquid crystal and pigment increases at a vertically lower part, and unevenness may occur in the plane of the light modulating member.

An embodiment provides a light modulating device, a manufacturing method therefor, and a liquid crystal device, which are capable of reducing accumulation of liquid crystal that is a phenomenon in which a large amount of liquid crystal is locally present and suppressing a phenomenon in which liquid crystal is unevenly distributed downward in a vertical direction due to gravity.

The liquid crystal device, such as the light modulating device, includes a pair of glass plates, a liquid crystal cell disposed between the glass plates, and a bonding layer provided between each glass plate and the liquid crystal cell.

However, when the completed liquid crystal device is exposed to a high-temperature environment, the bonding layer softens, while the substrate material and liquid crystal of the liquid crystal cell and the bonding layer expand. As a result, a position retaining force of the bonding layer maintaining the form of the liquid crystal cell reduces, with the result accumulation of liquid crystal that is a phenomenon in which liquid crystal of the liquid crystal cell is locally unevenly distributed may occur. Accumulation of liquid crystal lowers the performance of the liquid crystal cell and impairs the appearance of the liquid crystal device.

Particularly, when the liquid crystal device in an upright position is exposed to a high-temperature environment, the liquid crystal of the liquid crystal cell may fall due to gravity and the thickness of a liquid crystal layer of a liquid crystal film may locally change. In other words, the amount of liquid crystal is greater on the vertically lower side of the liquid crystal device due to gravity, so the thickness of the liquid crystal layer increases. In this case, the amount of liquid crystal and pigment increases at a vertically lower part of the liquid crystal device, and unevenness may occur in the plane of the liquid crystal cell.

An embodiment provides a light modulating device, a manufacturing method therefor, and a liquid crystal device, which are capable of reducing accumulation of liquid crystal even when exposed to a high-temperature environment.

If the cure shrinkage of the bonding layer is large in manufacturing the above-described liquid crystal device, a "liquid crystal accumulated part" where the thickness of the liquid crystal layer is not uniform and the thickness is significantly greater than that of the other part, such as accumulation of liquid crystal that is a phenomenon in which the liquid crystal of the liquid crystal cell is locally unevenly distributed at the time of completion of curing of the bonding layer due to the influence of shrinkage on curing of the bonding layer, and liquid crystal unevenness that the thickness of the liquid crystal layer is not uniform may occur.

When the completed liquid crystal device is exposed to a high-temperature environment, the bonding layer softens, while the substrate material and liquid crystal of the liquid crystal cell and the bonding layer expand. As a result, a position retaining force of the bonding layer maintaining the form of the liquid crystal cell reduces, with the result that liquid crystal unevenness may occur.

A task of the embodiment is to provide a liquid crystal device capable of reducing liquid crystal unevenness.

A light modulating device according to the embodiment includes a first transparent substrate, a second transparent substrate, a light modulating cell disposed between the first transparent substrate and the second transparent substrate, a first bonding layer disposed between the first transparent substrate and the light modulating cell, and a second bonding layer disposed between the second transparent substrate and the light modulating cell. The first bonding layer and the second bonding layer each are a bonding element containing a non-pressure-sensitive adhesive component.

In the light modulating device according to the embodiment, the first bonding layer and the second bonding layer each may be an OCA.

The light modulating device according to the embodiment may include an outer circumferential film disposed around the light modulating cell between the first bonding layer and the second bonding layer.

In the light modulating device according to the embodiment, the outer circumferential film may have a shape such that part of a shape corresponding to an outer circumference of the light modulating cell is removed.

In the light modulating device according to the embodiment, a bonding element containing a pressure-sensitive adhesive component does not have to be included.

The light modulating device according to the embodiment may include a third bonding layer disposed between the first transparent substrate and the first bonding layer.

The light modulating device according to the embodiment may include a film disposed between the third bonding layer and the first bonding layer.

In the light modulating device according to the embodiment, the first bonding layer may be an OCR, and the second bonding layer may be an OCA.

A manufacturing method for a light modulating device according to the embodiment includes preparing a second transparent substrate, laminating a second bonding layer onto the second transparent substrate, laminating a light modulating cell onto the second bonding layer, laminating a first bonding layer onto the light modulating cell, and laminating a first transparent substrate onto the first bonding layer. The first bonding layer and the second bonding layer each are a bonding element containing a non-pressure-sensitive adhesive component.

A manufacturing method for a light modulating device according to the embodiment includes preparing a second transparent substrate, laminating a second bonding layer onto the second transparent substrate, laminating a light modulating cell onto the second bonding layer, applying a first bonding material onto the light modulating cell, laminating a first transparent substrate onto the first bonding material, and forming a first bonding layer by curing the first bonding material. The first bonding layer and the second bonding layer each are a bonding element containing a non-pressure-sensitive adhesive component.

According to the embodiment of the present disclosure, it is possible to reduce accumulation of liquid crystal that is a phenomenon in which a large amount of liquid crystal is locally present and suppress a phenomenon in which liquid crystal is unevenly distributed downward in the vertical direction due to gravity.

A light modulating device according to the embodiment includes a first transparent substrate, a second transparent substrate, a light modulating cell disposed between the first transparent substrate and the second transparent substrate, a first OCR layer disposed between the first transparent substrate and the light modulating cell, and a second OCR layer disposed between the second transparent substrate and the light modulating cell.

The light modulating device according to the embodiment may include a frame-shaped third OCR layer disposed between the first transparent substrate and the second transparent substrate and formed so as to surround the light modulating cell in a plan view.

In the light modulating device according to the embodiment, the first OCR layer may be integrated with the third OCR layer.

In the light modulating device according to the embodiment, a resin cure shrinkage of each of the first OCR layer and the second OCR layer may be lower than or equal to 2.3% and preferably lower than or equal to 2.0%.

In the light modulating device according to the embodiment, a bonding element containing a pressure-sensitive adhesive component does not have to be included.

In the light modulating device according to the embodiment, a first interface may be formed between the first OCR layer and the light modulating cell, a second interface may be formed between the second OCR layer and the light modulating cell, and the second interface may be flatter than the first interface.

A manufacturing method for a light modulating device according to the embodiment includes preparing a second transparent substrate, applying a second OCR material on the second transparent substrate, laminating a light modulating cell onto the second OCR material, forming a second OCR layer by curing the second OCR material, preparing a first transparent substrate, applying a first OCR material on the first transparent substrate, laminating the first transparent substrate to the light modulating cell by using the first OCR material, and forming a first OCR layer by curing the first OCR material.

A manufacturing method for a light modulating device according to the embodiment includes preparing a second transparent substrate, applying a second OCR material on the second transparent substrate, temporarily curing the second OCR material, laminating a light modulating cell onto the temporarily cured second OCR material, preparing a first transparent substrate, applying a first OCR material on the first transparent substrate, laminating the first transparent substrate to the light modulating cell by using the first OCR material, and forming a first OCR layer by curing the first OCR material and forming a second OCR layer by curing the second OCR material.

The manufacturing method for a light modulating device according to the embodiment may further include, after applying the second OCR material on the second transparent substrate, laminating a protection film onto the second OCR material.

According to the embodiment of the present disclosure, it is possible to reduce accumulation of liquid crystal that is a phenomenon in which a large amount of liquid crystal is locally present and suppress a phenomenon in which liquid crystal is unevenly distributed downward in the vertical direction due to gravity.

An embodiment provides a liquid crystal device. The liquid crystal device includes a first transparent substrate, a second transparent substrate, a liquid crystal cell disposed between the first transparent substrate and the second transparent substrate, a first bonding layer disposed between the first transparent substrate and the liquid crystal cell, and a second bonding layer disposed between the second transparent substrate and the liquid crystal cell. A layer thickness of the first bonding layer in a first end-side region that overlaps one-side end of the liquid crystal cell in a plan view is greater than a layer thickness of the first bonding layer in an inner region adjacent to the first end-side region and extending to an other side opposite to the one side.

An embodiment provides a liquid crystal device in which, in the above liquid crystal device, a layer thickness of the first bonding layer is greatest at a location that overlaps the one-side end of the liquid crystal cell.

An embodiment provides a liquid crystal device in which, in the above liquid crystal device, a layer thickness of the first bonding layer in a second end-side region adjacent to the inner region and extending to the other side is greater than a layer thickness of the first bonding layer in the inner region.

An embodiment provides a liquid crystal device in which, in the above liquid crystal device, the first bonding layer is an OCR, and the second bonding layer is an OCR or an OCA.

An embodiment provides a liquid crystal device in which, in the above liquid crystal device, where an average layer thickness of the first end-side region in a range in which a distance from a location corresponding to an end of the liquid crystal cell, which the first end-side region overlaps, is greater than or equal to 0 mm and less than 80 mm is t1, and an average layer thickness of the inner region in a range in which the distance from the location corresponding to the end of the liquid crystal cell, which the first end-side region overlaps, is greater than or equal to 80 mm and less than 180 mm is t0, a relationship t1/t0 ≥ 1.2 is satisfied.

According to the embodiment, it is possible to provide a liquid crystal device capable of reducing accumulation of liquid crystal even when exposed to a high-temperature environment.

An embodiment provides a liquid crystal device. The liquid crystal device includes a first transparent substrate, a second transparent substrate, a liquid crystal cell disposed between the first transparent substrate and the second transparent substrate and having a size smaller than the first transparent substrate or the second transparent substrate in a plan view, a first bonding layer disposed between the first transparent substrate and the liquid crystal cell and having a size larger than the liquid crystal cell in a plan view, and a second bonding layer disposed between the second transparent substrate and the liquid crystal cell and having a size larger than the liquid crystal cell in a plan view. The first bonding layer is an OCR, and, where a sectional area of the liquid crystal layer, taken along a vertical direction when the liquid crystal device is disposed in an upright position such that a plate plane is oriented along a gravity direction on an assumption of an actual use state, is X (mm²), and a thickness of the first bonding layer in a range overlapping the liquid crystal cell is Y (µm), a relationship Y ≥ 110X - 170 is satisfied.

An embodiment provides a liquid crystal device in which, in the above liquid crystal device, an average coefficient of linear expansion of the OCR of the first bonding layer in a range of 25°C to 85°C is greater than or equal to 24.7(E⁻⁵/°C).

An embodiment provides a liquid crystal device in which the above liquid crystal device further includes a third bonding layer that is an OCR layer provided between the first bonding layer and the second bonding layer around the liquid crystal cell and a width of a peripheral region of the first bonding layer disposed outside the liquid crystal cell and a width of the third bonding layer each are greater than or equal to 10 mm.

According to the embodiment, a liquid crystal device capable of reducing accumulation of liquid crystal even when exposed to a high-temperature environment is provided.

An embodiment according to the claimed subject-matter provides a liquid crystal device. The liquid crystal device includes a first transparent substrate, a second transparent substrate, a liquid crystal cell disposed between the first transparent substrate and the second transparent substrate, a first bonding layer disposed between the first transparent substrate and the liquid crystal cell, and a second bonding layer disposed between the second transparent substrate and the liquid crystal cell. The first bonding layer is an OCR and has an amount of change (V) from a storage elastic modulus (E1) in a room-temperature environment of 25°C to a storage elastic modulus (E2) in a high-temperature environment of 85°C is higher than or equal to 0% and lower than or equal to 30%, where V = 1 - (E2/E1).

An embodiment provides a liquid crystal device in which, in the above liquid crystal device, the amount of change (V) is higher than or equal to 2.7% and lower than or equal to 22.7%.

An embodiment provides a liquid crystal device in which, in the above liquid crystal device, a cure shrinkage of the first bonding layer is lower than or equal to 2.3%.

An embodiment provides a liquid crystal device in which, in the above liquid crystal device, a bonding element containing a pressure-sensitive adhesive component is not included.

According to the embodiment, it is possible to provide a liquid crystal device capable of reducing liquid crystal unevenness.

### Brief Description of Drawings

[Fig. 1] Fig. 1 is a perspective view showing a light modulating device according to a first embodiment.
[Fig. 2] Fig. 2 is a sectional view showing the light modulating device according to the first embodiment.
[Fig. 3] Fig. 3 is an exploded perspective view showing the light modulating device according to the first embodiment.
[Fig. 4] Fig. 4(a) to Fig. 4(d) are sectional views showing a manufacturing method for a light modulating cell.
[Fig. 5] Fig. 5(a) to Fig. 5(c) are sectional views showing the manufacturing method for a light modulating cell.
[Fig. 6] Fig. 6(a) to 6(f) are sectional views showing a method of manufacturing the light modulating device according to the first embodiment.
[Fig. 7] Fig. 7 is a sectional view showing a first modification of the light modulating device according to the first embodiment.
[Fig. 8] Fig. 8 is a sectional view showing a second modification of the light modulating device according to the first embodiment.
[Fig. 9] Fig. 9(a) to Fig. 9(d) are plan views respectively showing modifications of the outer circumferential film.
[Fig. 10] Fig. 10 is a sectional view showing a light modulating device according to a second embodiment.
[Fig. 11] Fig. 11(a) to Fig. 11(g) are sectional views showing a manufacturing method for the light modulating device according to the second embodiment.
[Fig. 12] Fig. 12 is a sectional view showing a light modulating device according to a third embodiment.
[Fig. 13] Fig. 13 is an exploded perspective view showing the light modulating device according to the third embodiment.
[Fig. 14] Fig. 14(a) to Fig. 14(h) are sectional views showing a method of manufacturing the light modulating device according to the third embodiment.
[Fig. 15] Fig. 15(a) to Fig. 15(h) are sectional views showing a manufacturing method for a light modulating device according to a first modification of the third embodiment.
[Fig. 16] Fig. 16 is a sectional view showing a light modulating device according to a modification of the third embodiment.
[Fig. 17] Fig. 17(a) to Fig. 17(i) are sectional views showing a manufacturing method for a light modulating device according to a second modification of the third embodiment.
[Fig. 18] Fig. 18 is an exploded perspective view showing the configuration of a liquid crystal device 101 according to a fourth embodiment.
[Fig. 19] Fig. 19 is a sectional view showing the layer configuration of the liquid crystal device 101 according to the fourth embodiment.
[Fig. 20] Fig. 20 shows sectional views showing a manufacturing method for the liquid crystal device 101 according to the fourth embodiment.
[Fig. 21] Fig. 21 is a view showing a state where a liquid crystal device 101X according to a comparative example in which no layer thickness difference is provided in a first bonding layer 131 is disposed in an upright position and exposed to a high-temperature environment.
[Fig. 22] Fig. 22 is a view showing the liquid crystal device 101X of Fig. 21 in a plan view.
[Fig. 23] Fig. 23 is a graph showing a distribution of the layer thickness of the first bonding layer 131 according to Example 1.
[Fig. 24] Fig. 24 is a graph showing a distribution of the layer thickness of the first bonding layer 131 according to Example 2.
[Fig. 25] Fig. 25 is a graph showing a distribution of the layer thickness of the first bonding layer 131 according to Comparative Example 1.
[Fig. 26] Fig. 26 is a view illustrating a first end-side region 131b and an inner region 131a in a plan view.
[Fig. 27] Fig. 27 is a table showing results obtained by evaluating an occurrence situation of accumulation of liquid crystal after each of Example 1, Example 2, and Comparative Example 1 is exposed to the above-described high-temperature environment.
[Fig. 28] Fig. 28 is a table summarizing results obtained by evaluating the influence of t1/t0 on accumulation of liquid crystal.
[Fig. 29] Fig. 29 is a sectional view showing the layer configuration of a liquid crystal device 101 according to a fifth embodiment.
[Fig. 30] Fig. 30 is a view showing a state where the liquid crystal device 101X according to the comparative example in which the thickness of a central region 131d is not set to an appropriate thickness is disposed in an upright position and exposed to a high-temperature environment.
[Fig. 31] Fig. 31 is a view showing the liquid crystal device 101X of Fig. 30 in a plan view.
[Fig. 32] Fig. 32 is a table showing results obtained by evaluating accumulation of liquid crystal while the sectional area of a liquid crystal layer 114 and the thickness of the first bonding layer 131 are changed.
[Fig. 33] Fig. 33 is a graph showing the sectional area of the liquid crystal layer 114 and a range in which accumulation of liquid crystal is reduced.
[Fig. 34] Fig. 34 is a table showing results obtained by evaluating whether there occurs accumulation of liquid crystal in a high-temperature environment while an average coefficient of linear expansion of an OCR used for the first bonding layer 131 is changed.
[Fig. 35] Fig. 35 is a table showing results obtained by evaluating accumulation of liquid crystal D1 while a width Wa of a peripheral region 131e of the first bonding layer 131 and a width Wa of a third bonding layer 133 are changed.
[Fig. 36] Fig. 36 is an exploded perspective view showing the configuration of a liquid crystal device 101 according to a sixth embodiment.
[Fig. 37] Fig. 37 is a sectional view showing the layer configuration of the liquid crystal device 101 according to the sixth embodiment.
[Fig. 38] Fig. 38 shows sectional views showing a manufacturing method for the liquid crystal device 101 according to the sixth embodiment.
[Fig. 39] Fig. 39 is a view showing a state where the liquid crystal device 101X according to the comparative example is disposed in an upright position and exposed to a high-temperature environment.
[Fig. 40] Fig. 40 is a view showing the liquid crystal device 101X shown in Fig. 39 in a plan view. Description of Embodiments

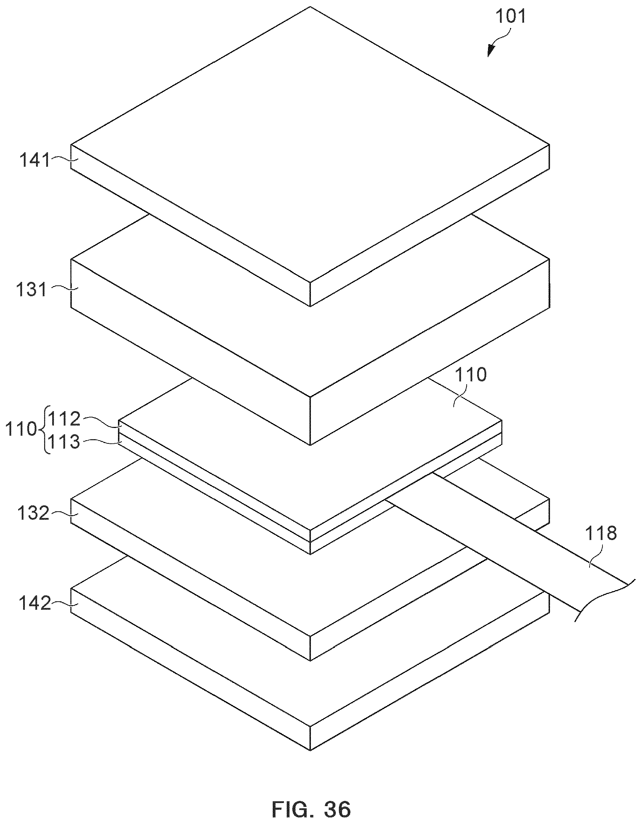

Among the embodiments described below, only the sixth embodiment described with reference to Figures 36 to 40 is according to the claimed subject-matter.

### (First Embodiment)

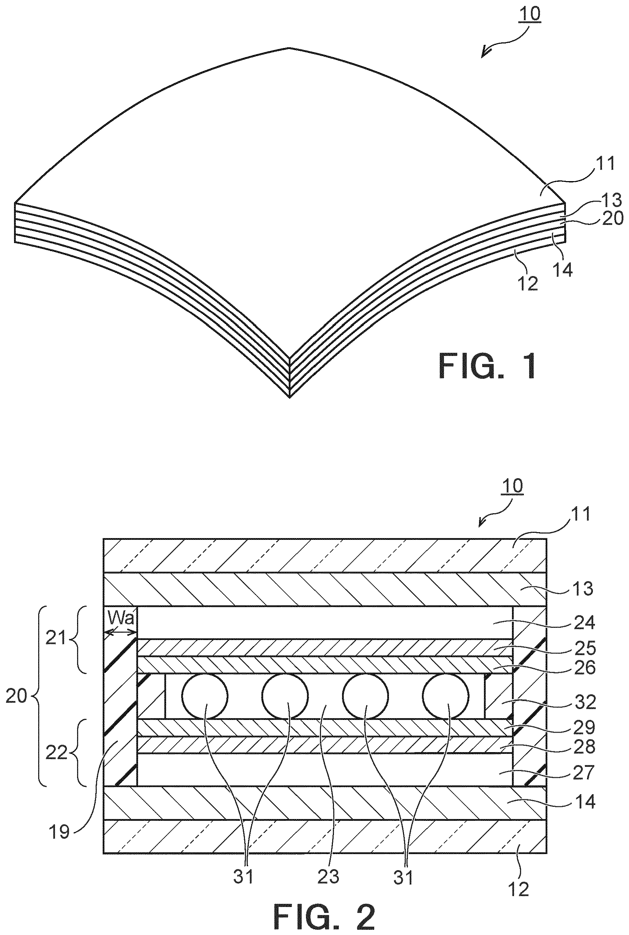

Hereinafter, a first embodiment will be described with reference to Fig. 1 to Fig. 9.

A light modulating device 10 described below is applicable to various technical fields in which adjustment of light transmittance is desired, and the scope of application is not limited. The light modulating device 10 is disposed in, for example, window glasses of buildings, show cases, transparent interior partitions, regions intended for light modulating in windows of vehicles, partition boards inside vehicles, and the like (regions where ambient light enters, for example, windows, such as windshields, side windows, rear windows, and sunroofs). With this configuration, it is possible to control the amount of incident light into buildings, vehicles, and the like or the amount of incident light into predetermined zones inside buildings, vehicles, and the like.

The light modulating device 10 described below is only one illustrative embodiment. Therefore, for example, some of elements described below as the component elements of the light modulating device 10 may be replaced with other elements or do not need to be included. Elements not described below may be included as the component elements of the light modulating device 10. In the drawings, for the sake of easiness of illustration and understanding, the scale, dimensional ratio, and the like of some portions are changed or exaggerated as needed from those of real ones.

### (Light modulating device)

Fig. 1 is a view showing the light modulating device (laminated glass) 10 according to the present embodiment. The light modulating device 10 according to the present embodiment has a three-dimensional shape such that the surface shape is a curved surface shape. In Fig. 1, for example, the light modulating device 10 has a convex shape on one side. The light modulating device 10 is not limited to this shape. For example, the surface shape may be a planar shape (that is, a flat-plate shape) or may be a two-dimensional shape such that the surface shape is a curved surface shape (for example, a shape making up part of a cylinder) or the like. Here, a three-dimensional shape is not a simple cylindrical surface but a curved surface that cannot be formed only by deforming a plane without expanding or contracting. A three-dimensional shape is distinguished from a two-dimensional shape two-dimensionally curved about a single axis (two-dimensional curved surface) or a two-dimensional shape two-dimensionally curved at different radii of curvature about a plurality of axes parallel to each other (two-dimensional curved surface). In other words, a three-dimensional shape is a shape made up of a surface partially or entirely curved about a plurality of axes inclined relative to each other. In the specification, a plan view means a view in a direction vertical to a principal surface of the light modulating device 10.

As shown in Fig. 1, the light modulating device 10 according to the present embodiment includes a first glass plate 11, a first bonding layer 13, a light modulating cell 20, a second bonding layer 14, and a second glass plate 12. The first glass plate 11, the first bonding layer 13, the light modulating cell 20, the second bonding layer 14, and the second glass plate 12 are laminated in this order.

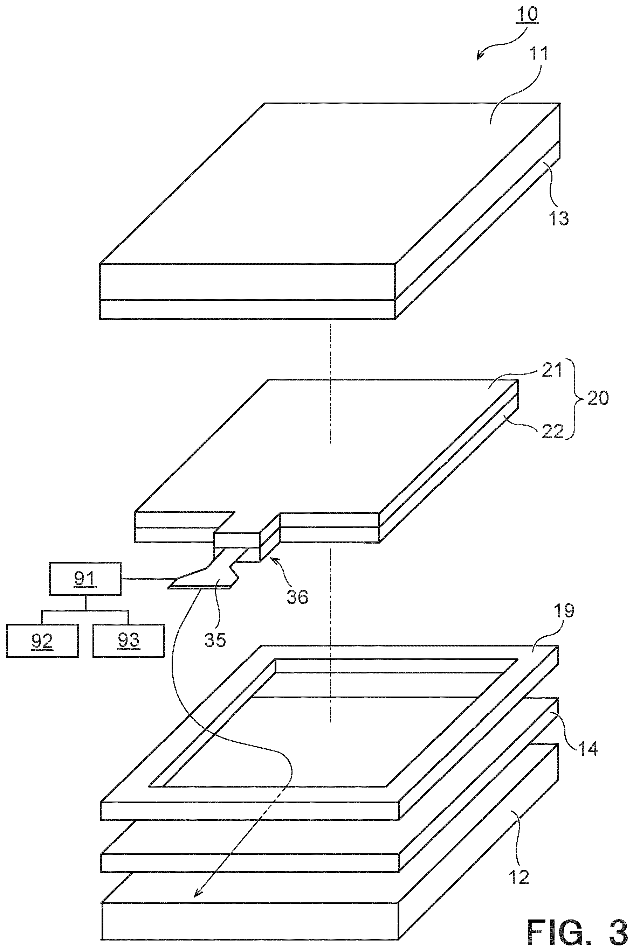

Fig. 2 is a sectional view showing the layer configuration of the light modulating device 10 according to the present embodiment. Fig. 3 is an exploded perspective view showing the layer configuration of the light modulating device 10 according to the present embodiment. The light modulating device 10 of the present embodiment has a three-dimensional surface shape; however, for the sake of easy understanding, Fig. 2 and Fig. 3 show views in the case where the surface shape of the light modulating device 10 is a planar shape.

As shown in Fig. 2, the light modulating device 10 includes the first glass plate 11, the second glass plate 12, and the light modulating cell 20 disposed between the first glass plate 11 and the second glass plate 12. The light modulating cell 20 includes a first multilayer body 21, a second multilayer body 22, and a liquid crystal layer 23. The first multilayer body 21 includes a first substrate 24, a first transparent electrode 25, and a first alignment layer 26. The second multilayer body 22 includes a second substrate 27, a second transparent electrode 28, and a second alignment layer 29. The liquid crystal layer 23 is disposed between the first multilayer body 21 and the second multilayer body 22.

The first glass plate (first transparent substrate) 11 and the second glass plate (second transparent substrate) 12 are respectively disposed at the front and back sides of the light modulating device 10 and are plate glasses having high translucency. Each of the first glass plate 11 and the second glass plate 12 is formed in advance into a three-dimensional shape such that the surface shape is a curved surface shape and the curved surface shape is a convex shape on one side (see Fig. 1). In this case, the first glass plate 11 and the second glass plate 12 are formed so as to be convex at the first glass plate 11 side with respect to the second glass plate 12 side; however, the shape is not limited thereto. The first glass plate 11 and the second glass plate 12 may be formed so as to be convex at the second glass plate 12 side with respect to the first glass plate 11 side. In the present embodiment, each of the first glass plate 11 and the second glass plate 12 has a thickness of greater than or equal to 0.5 mm and less than or equal to 4 mm. For example, a plate glass having a thickness of 2 mm is used as each of the first glass plate 11 and the second glass plate 12. Each of the first glass plate 11 and the second glass plate 12 may be made of inorganic glass or may be made of resin glass. For example, polycarbonate, acrylic, or the like may be used as the resin glass. When inorganic glass is used as each of the first glass plate 11 and the second glass plate 12, the light modulating device 10 with high heat resistance and high flaw resistance is obtained. On the other hand, when resin glass is used as each of the first glass plate 11 and the second glass plate 12, the weight of the light modulating device 10 is reduced. A surface treatment, such as hard coating, may be applied as needed to each of the first glass plate 11 and the second glass plate 12. Each of the first glass plate 11 and the second glass plate 12 may be made of a transparent resin substrate material instead of the first glass plate 11 and the second glass plate 12.

The first bonding layer 13 is disposed between the first glass plate 11 and the light modulating cell 20. The first bonding layer 13 is a member that joins the first glass plate 11 and the light modulating cell 20 with each other. Similarly, the second bonding layer 14 is disposed between the second glass plate 12 and the light modulating cell 20. The second bonding layer 14 is a member that joins the second glass plate 12 and the light modulating cell 20 with each other.

In the present embodiment, the first bonding layer 13 and the second bonding layer 14 each are a bonding element containing a non-pressure-sensitive adhesive component. Here, the "bonding element containing a non-pressure-sensitive adhesive component" is a bonding element that does not need application of pressure to be appropriately bonded to an adjacent object and that can be moderately bonded to the adjacent object under a normal pressure. Examples of the "bonding element containing a non-pressure-sensitive adhesive component" include optically transparent resins, such as an OCA and an OCR, and cured resins (such as thermosetting resins, cold setting resins, two-part resins, ultraviolet curing resins, and electron radiation curing resins).

In the present embodiment, the first bonding layer 13 and the second bonding layer 14 each may be made of an optical clear adhesive (OCA). An OCA is, for example, a layer manufactured as follows. Initially, a liquid curing adhesive layer composition containing a polymerizable compound is applied onto a mold releasing film of polyethylene terephthalate (PET) or the like, and the composition is cured with, for example, ultraviolet (UV) light, with the result that an OCA sheet is obtained. The curing adhesive layer composition may be an optical pressure-sensitive adhesive, such as an acrylic resin, a silicone resin, and a urethane resin. When the OCA sheet is laminated to an object and then the mold releasing film is peeled and removed, a layer made of the OCA is obtained. The first bonding layer 13 and the second bonding layer 14, made of an OCA, each have optical transparency and preferably further have heat resistance up to at least about 120°C, moist heat resistance, and weather resistance.

In the present embodiment, the first bonding layer 13 directly joins the first glass plate 11 with the light modulating cell 20. The second bonding layer 14 directly joins the second glass plate 12 with the light modulating cell 20. However, the configuration is not limited thereto. For example, a film, such as an ultraviolet (UV) cut film, may be interposed between the first bonding layer 13 and the light modulating cell 20 and/or between the second bonding layer 14 and the light modulating cell 20.

The thickness of each of the first bonding layer 13 and the second bonding layer 14 may be selected as needed according to the material or the like. Specifically, the thickness of each of the first bonding layer 13 and the second bonding layer 14 may be greater than or equal to 30 µm and less than or equal to 500 µm and preferably greater than or equal to 50 µm and less than or equal to 200 µm. The size of the first bonding layer 13 may be the same as the size of the first glass plate 11 or may be greater than the size of the first glass plate 11. The size of the second bonding layer 14 may be the same as the size of the second glass plate 12 or may be greater than the size of the second glass plate 12. The first bonding layer 13 and the second bonding layer 14 may be made of the same material or may be respectively made of materials different from each other.

As shown in Fig. 2 and Fig. 3, an outer circumferential film 19 is disposed around the light modulating cell 20 between the first bonding layer 13 and the second bonding layer 14. The outer circumferential film 19 is joined with the first bonding layer 13 and the second bonding layer 14. The outer circumferential film 19 is a resin layer having a frame shape in a plan view. More specifically, the outer circumferential film 19 has a hollow square shape (hollow rectangular shape) or a shape in which part of the hollow square shape is removed (described later). The outer circumferential film 19 may be any one of materials listed as materials used for a first substrate 24 and a second substrate 27 (described later) and preferably may be a resin film, such as polyethylene terephthalate (PET), of these. With the outer circumferential film 19, it is possible to suppress exposure of the side of the light modulating cell 20 or part of the side to the side of the light modulating device 10 and also to reduce entry of moisture or the like from the side of the light modulating device 10 and further enhance the water shut-off capability of the light modulating device 10.

The outer circumferential film 19 is a layer formed at a thickness part of the light modulating cell 20 in a sectional view when the first bonding layer 13 and the second bonding layer 14 each are greater than the light modulating cell 20 (in a plan view). The outer circumferential film 19 is formed so as to surround the light modulating cell 20 in a plan view and has a frame shape such that the shape of the light modulating cell 20 is hollowed from the shape of each of the first bonding layer 13 and the second bonding layer 14. In this case, the outer circumferential film 19 is formed in a part corresponding to around the light modulating cell 20 between the first bonding layer 13 and the second bonding layer 14.

The outer circumference of the outer circumferential film 19 may be the same size as the outer circumference of each of the first glass plate 11 and the second glass plate 12 or may be greater than the outer circumference of each of the first glass plate 11 and the second glass plate 12. The inner circumference of the outer circumferential film 19 may be the same size as the outer circumference of the light modulating cell 20 or may be greater than the outer circumference of the light modulating cell 20. A width Wa (see Fig. 3) of the outer circumferential film 19 is preferably greater than 0 mm and less than or equal to about 1/4 of a glass width. The thickness of the outer circumferential film 19 may be greater than or equal to 50 µm and less than or equal to 500 µm and preferably greater than or equal to 200 µm and less than or equal to 300 µm. Alternatively, as long as the side of the light modulating cell 20 or part of the side is not exposed from the side of the light modulating device 10, the outer circumferential film 19 may be omitted.

The light modulating cell 20 (a light modulating film or a liquid crystal film) is a film capable of controlling the amount of transmitted light by changing an applied voltage. The light modulating cell 20 is disposed so as to be held between the first glass plate 11 and the second glass plate 12. The light modulating cell 20 has a guest-host liquid crystal layer using a dichroism pigment. The light modulating cell 20 is a member that changes the amount of transmitted light by an electric field applied to liquid crystal. The light modulating cell 20 includes the film first multilayer body 21, the film second multilayer body 22, and the liquid crystal layer 23 disposed between the first multilayer body 21 and the second multilayer body 22.

As shown in Fig. 2, the first multilayer body 21 is formed by laminating the first substrate 24, the first transparent electrode 25, and the first alignment layer 26. In other words, the first substrate 24, the first transparent electrode 25, and the first alignment layer 26 are laminated in this order from the first bonding layer 13 side. The second multilayer body 22 is formed by laminating the second substrate 27, the second transparent electrode 28, and the second alignment layer 29. In other words, the second substrate 27, the second transparent electrode 28, and the second alignment layer 29 are laminated in this order from the second bonding layer 14 side.

A plurality of bead spacers 31 is disposed between the first multilayer body 21 and the second multilayer body 22. The liquid crystal layer 23 is filled in between the plurality of bead spacers 31 between the first multilayer body 21 and the second multilayer body 22. The plurality of bead spacers 31 may be irregularly arranged or regularly arranged.

The light modulating cell 20 changes the alignment of the liquid crystal material made of a guest-host liquid crystal composition provided in the liquid crystal layer 23 by driving the first transparent electrode 25 and the second transparent electrode 28 respectively provided in the first multilayer body 21 and the second multilayer body 22, thus changing the amount of transmitted light.

A flexible film made of transparent resin may be used as each of the first substrate 24 and the second substrate 27. It is desirable that a transparent resin film having a low optical anisotropy with a transmittance of 80% or higher at wavelengths in the visible range (greater than or equal to 380 nm and less than or equal to 800 nm) be used as each of the first substrate 24 and the second substrate 27. Examples of the material of the transparent resin film include cellulose acetate resins, such as cellulose triacetate (TAC), polyester resins, such as polyethylene terephthalate (PET) and polyethylene naphthalate (PEN), polyolefin resins, such as polyethylene (PE), polypropylene (PP), polystyrene, polymethyl pentene, and EVA, vinyl resins, such as polyvinyl chloride and polyvinylidene chloride, acrylic resins, polyurethane resins, and resins, such as polysulfone (PSF), polyether sulfone (PES), polycarbonate (PC), polyether (PE), polyether ketone (PEK), (meth)acrylonitrile, cycloolefin polymer (COP), and cycloolefin copolymer. Particularly, resins, such as polycarbonate, cycloolefin polymer, and polyethylene terephthalate, are preferable as the material of the transparent resin film. The thickness of the transparent resin film to be used as each of the first substrate 24 and the second substrate 27 depends on the material and can be selected as needed within the range in which the transparent resin film has flexibility. The thickness of each of the first substrate 24 and the second substrate 27 may be greater than or equal to 50 µm and less than or equal to 200 µm. In the present embodiment, a polyethylene terephthalate film with a thickness of 125 µm is used as an example of each of the first substrate 24 and the second substrate 27.

Each of the first transparent electrode 25 and the second transparent electrode 28 is made up of a transparent conductive film laminated on an associated one of the first substrate 24 and the second substrate 27 (transparent resin film). Various transparent electrode materials to be used as transparent resin films of this type may be used as the transparent conductive film. The transparent conductive film may be a transparent metal thin film made of an oxide with a total light transmittance of higher than or equal to 50%. Examples of the transparent conductive film include tin oxides, indium oxides, and zinc oxides.

Tin oxides (SnO₂) include NESA (tin oxide SnO₂), antimony tin oxide (ATO: antimony-doped tin oxide), and fluorine-doped tin oxide. Indium oxides (In₂O₃) include indium oxide, indium tin oxide (ITO), and indium zinc oxide (IZO). Zinc oxides (ZnO) include zinc oxide, aluminum-doped zinc oxide (AZO), and gallium-doped zinc oxide. In the present embodiment, the transparent conductive film that makes up each of the first transparent electrode 25 and the second transparent electrode 28 is made of ITO.

The bead spacers 31 are members that define the thickness (cell gap) of a portion other than an outer circumferential part in the liquid crystal layer 23. In the present embodiment, spherical bead spacers are used as the bead spacers 31. The diameter of each bead spacer 31 may be greater than or equal to 1 µm and less than or equal to 20 µm and preferably greater than or equal to 3 µm and less than or equal to 15 µm. A configuration made of an inorganic material, such as silica, a configuration made of an organic material, a configuration of a core-shell structure combining these materials, and other configurations are widely used as the bead spacers 31. The bead spacers may have a rod shape, such as a circular cylinder shape, an elliptic cylinder shape, and a polygonal prism shape, other than a spherical shape. The bead spacers 31 are manufactured from transparent members. Where necessary, the color of the bead spacers 31 may be adjusted by applying a colored material.

In the present embodiment, the bead spacers 31 are provided on the second multilayer body 22; however, the configuration is not limited thereto. The bead spacers 31 may be provided on both the first multilayer body 21 and the second multilayer body 22 or may be provided only on the first multilayer body 21. Alternatively, the bead spacers 31 do not necessarily need to be provided. Alternatively, instead of the bead spacers 31 or in addition to the bead spacers 31, columnar spacers may be used.

The first alignment layer 26 and the second alignment layer 29 are members for aligning liquid crystal molecules contained in the liquid crystal layer 23 in a desired direction. The first alignment layer 26 and the second alignment layer 29 each are made up of an optical alignment layer. Various materials to which an optical alignment technique is applicable may be widely used as an optical alignment material applicable to the optical alignment layer. Examples of the optical alignment material include a photolytic material, a photodimerization material, and a photoisomerization material. In the present embodiment, a photodimerization material is used. Examples of the photodimerization material include polymers containing cinnamate, coumarin, benzylidene phthalimidine, benzylidene acetophenone, diphenylacetylene, stilbazole, uracil, quinolinone, maleimide, or cinnamylidene acetic acid derivative. Among these materials, in terms of good alignment control force, polymers containing one or both of cinnamate and coumarin are preferably used.

Instead of the optical alignment layer, a rubbing alignment layer may be used. For the rubbing alignment layer, an alignment layer does not need to be subjected to rubbing process or an alignment layer may be prepared by performing rubbing process and molding micro linear asperities. In the present embodiment, the light modulating cell 20 includes the first alignment layer 26 and the second alignment layer 29; however, the configuration is not limited thereto. The light modulating cell 20 does not need to include the first alignment layer 26 or the second alignment layer 29.

A guest-host liquid crystal composition or a dichroism pigment composition may be widely used for the liquid crystal layer 23. A chiral agent may be contained in a guest-host liquid crystal composition to cause the liquid crystal material to be aligned in a spiral shape in the thickness direction of the liquid crystal layer 23 when the liquid crystal material is aligned horizontally. The sealant 32 annular or frame-shaped in a plan view is disposed so as to surround the liquid crystal layer 23 between the first multilayer body 21 and the second multilayer body 22. With the sealant 32, the first multilayer body 21 and the second multilayer body 22 are held together, and leakage of the liquid crystal material is suppressed. For example, a thermosetting resin or an ultraviolet curing resin, such as epoxy resin and acrylic resin, may be used as the sealant 32.

The first alignment layer 26 and the second alignment layer 29 each are made up of a vertical alignment layer for which alignment control force for pretilt is set in a certain direction such that the guest-host liquid crystal composition during shading of the light modulating cell 20 is aligned during application of electric field. Thus, the light modulating cell 20 is configured to be normally clear. The light modulating cell 20 may be configured to be normally dark by setting the configuration during light transmission is achieved during application of electric field. Here, the normally dark configuration is a structure such that liquid crystal has a minimum transmittance and the screen becomes black when no voltage is applied to the liquid crystal. The normally clear configuration is a structure such that liquid crystal has a maximum transmittance and becomes clear when no voltage is applied.

The example in which the light modulating cell 20 according to the present embodiment includes the guest-host liquid crystal layer 23 has been described; however, the configuration is not limited thereto. The light modulating cell 20 may include the liquid crystal layer 23 of a twisted nematic (TN) type, a vertical alignment (VA) type, an in-plane-switching (IPS) type, or the like without using a dichroism pigment composition. When the light modulating cell 20 includes the liquid crystal layer 23 of such a type, the light modulating cell 20 can be caused to function as a light modulating film by further providing a linear polarization layer on each of the surfaces of the first substrate 24 and the second substrate 27.

In the present embodiment, as described above, the first bonding layer 13 is disposed between the first glass plate 11 and the light modulating cell 20, and the second bonding layer is disposed between the second glass plate 12 and the light modulating cell 20. The first bonding layer 13 joins the first glass plate 11 and the light modulating cell 20 with each other. The second bonding layer 14 joins the second glass plate 12 and the light modulating cell 20 with each other. With this configuration, even when the light modulating device 10 is put in a high-temperature environment, such as inside a vehicle in midsummer, an OCA having high heat resistance does not soften, so it is possible to reduce accumulation of liquid crystal that is a phenomenon in which the liquid crystal of the light modulating cell 20 is unevenly distributed.

The light modulating device 10 preferably does not include a bonding element containing a pressure-sensitive adhesive component. Examples of the bonding element containing a pressure-sensitive adhesive component include an interlayer made of polyvinyl butyral (PVB) resin or the like. For this reason, no interlayer, such as a PVB resin, is interposed between the first glass plate 11, the light modulating cell 20, and the second glass plate 12. It is possible to reduce uneven distribution of the liquid crystal of the light modulating cell 20 due to softening of an interlayer, such as a PVB resin, in a high-temperature condition. The "bonding element containing a pressure-sensitive adhesive component" is a bonding element that needs application of pressure (that is, a pressure higher than a normal pressure) to be appropriately bonded to an adjacent object. The normal pressure is an environmental pressure. The normal pressure is ordinarily equal to atmospheric pressure and can be a standard atmospheric pressure.

As shown in Fig. 3, the light modulating device 10 is connected to a light controller 91, and a sensor device 92 and a user operating portion 93 are connected to the light controller 91. The light controller 91 is capable of switching between transmission and blocking of light with the light modulating device 10 or changing the transmittance of light in the light modulating device 10 by controlling the light modulating status of the light modulating device 10. Specifically, the light controller 91 is connected to an external electrode substrate 35 of the light modulating device 10. The light controller 91 is capable of switching between transmission and blocking of light with the light modulating device 10 or changing the transmittance of light by adjusting an electric field to be applied to the liquid crystal layer 23 of the light modulating device 10 to change the alignment of liquid crystal molecules in the liquid crystal layer 23.

The light controller 91 is capable of adjusting an electric field to be applied to the liquid crystal layer 23 in accordance with a selected technique. The light controller 91 is capable of switching between transmission and blocking of light with the light modulating device 10 or changing the transmittance of light by adjusting an electric field to be applied to the liquid crystal layer 23 in accordance with, for example, a measured result of the sensor device 92 or an instruction (command) input by a user through the user operating portion 93. Therefore, the light controller 91 may automatically adjust an electric field to be applied to the liquid crystal layer 23 in accordance with a measured result of the sensor device 92 or may manually adjust the electric field in accordance with an instruction of the user through the user operating portion 93. A measuring object to be measured by the sensor device 92 is not limited. For example, the brightness of a usage environment may be measured. In this case, the light modulating device 10 switches between transmission and blocking of light and changes the transmittance of light according to the brightness of the usage environment. Both the sensor device 92 and the user operating portion 93 do not necessarily need to be connected to the light controller 91. Only any one of the sensor device 92 and the user operating portion 93 may be connected to the light controller 91.

The external electrode substrate 35 is sandwiched between the first multilayer body 21 and the second multilayer body 22. In a region in which the external electrode substrate 35 is formed, the first multilayer body 21 and the second multilayer body 22 have an electrode projection 36 that projects outward in the plane direction. The external electrode substrate 35 is embedded in the electrode projection 36. As indicated by the arrow in Fig. 3, the external electrode substrate 35 and the electrode projection 36 are sandwiched between the outer circumferential film 19 and the second bonding layer 14 and protrude outward from the outer circumferential film 19 and the second bonding layer 14. However, the configuration is not limited thereto. The external electrode substrate 35 and the electrode projection 36 may be sandwiched between the outer circumferential film 19 and the first bonding layer 13.

### (Manufacturing Method for Light Modulating Cell)

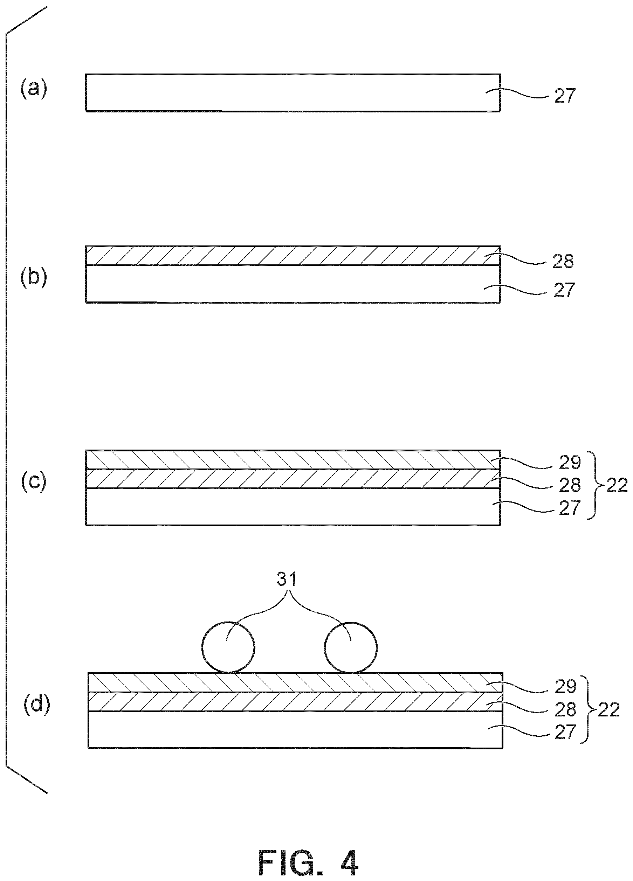

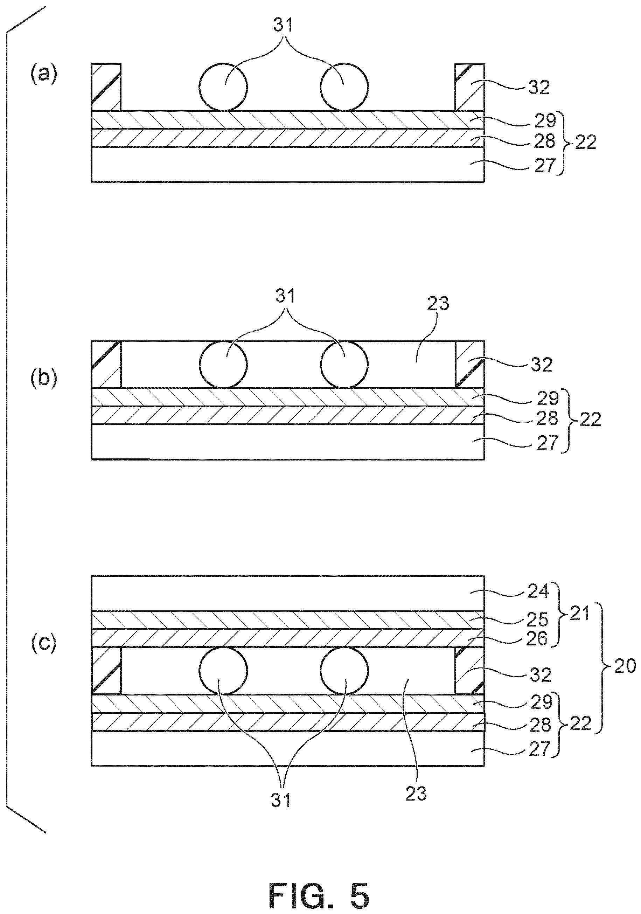

Next, a manufacturing method for the light modulating cell 20 of the light modulating device 10 according to the present embodiment will be described with reference to Fig. 4(a) to Fig. 4(d) and Fig. 5(a) to Fig. 5(c). Fig. 4(a) to Fig. 4(d) and Fig. 5(a) to Fig. 5(c) are sectional views showing the manufacturing method for the light modulating cell 20 according to the present embodiment.

Initially, as shown in Fig. 4(a), the second substrate 27 supplied in a roll is prepared. Subsequently, as shown in Fig. 4(b), the second transparent electrode 28 made of, for example, ITO is formed on the second substrate 27 by, for example, sputtering with a sputtering apparatus. At this time, the transparent electrode may be patterned into a predetermined pattern shape.

After that, as shown in Fig. 4(c), coating liquid for the second alignment layer 29 is applied onto the second substrate 27 on which the second transparent electrode 28 is formed, and then subjected to exposure to prepare the second alignment layer 29. In this way, the second multilayer body 22 in which the second substrate 27, the second transparent electrode 28, and the second alignment layer 29 are laminated is prepared.

As in the case of the steps shown in Fig. 4(a) to Fig. 4(c), the first multilayer body 21 in which the first substrate 24, the first transparent electrode 25, and the first alignment layer 26 are laminated is also prepared.

Subsequently, as shown in Fig. 4(d), the bead spacers 31 are disposed on the second alignment layer 29 of the second multilayer body 22. Various disposition methods, including wet/dry spraying, may be used to dispose the bead spacers 31. For example, coating liquid manufactured by dispersing the bead spacers 31 in a solvent with a resin component is partially applied, and then sequentially subject to drying and firing processes. Thus, the bead spacers 31 may be randomly disposed on the second alignment layer 29 and held so as to be hard to move. Although not shown in the drawing, the outer circumferences of the bead spacers 31 may be covered with the second alignment layer 29. Specifically, by mixing the bead spacers 31 with the coating liquid for the second alignment layer 29 to form the second alignment layer 29, the bead spacers 31 are held so as to be covered with a light coating of the second alignment layer 29.

Subsequently, as shown in Fig. 5(a), the sealant 32 is applied onto the second alignment layer 29 of the second multilayer body 22 with a dispenser or screen printing. The sealant 32 is applied in a frame shape so as to surround a region where the liquid crystal layer 23 is made.

After that, as shown in Fig. 5(b) and Fig. 5(c), the liquid crystal layer 23 is disposed by laminating the second multilayer body 22 and the first multilayer body 21 on each other. During then, initially, as show in Fig. 5(b), liquid crystal for making up the liquid crystal layer 23 is dripped into the region surrounded by the sealant 32. At this time, the liquid crystal layer 23 is filled around the bead spacers 31 inside the sealant 32.

Subsequently, as shown in Fig. 5(c), the second multilayer body 22 on which the liquid crystal layer 23 is disposed and the first multilayer body 21 prepared in advance are laminated on each other and pressed. After that, the sealant 32 is semi-cured by irradiating ultraviolet light, and then heated. Thus, the first multilayer body 21 and the second multilayer body 22 are integrated. After that, the multilayer body of the first multilayer body 21 and the second multilayer body 22, prepared in this way, is trimmed into a desired size. The sealant 32 may be the one that is cured only by irradiating ultraviolet light and that does not need to be heated.

As described above, after the liquid crystal layer 23 is disposed, the second multilayer body 22 and the first multilayer body 21 are preferably laminated on each other; however, the configuration is not limited thereto. The liquid crystal layer 23 may be disposed after the second multilayer body 22 and the first multilayer body 21 are laminated on each other. After that, by attaching the external electrode substrate 35 (see Fig. 3) between the first multilayer body 21 and the second multilayer body 22, the light modulating cell 20 according to the present embodiment is obtained.

### (Manufacturing Method for Light Modulating Device)

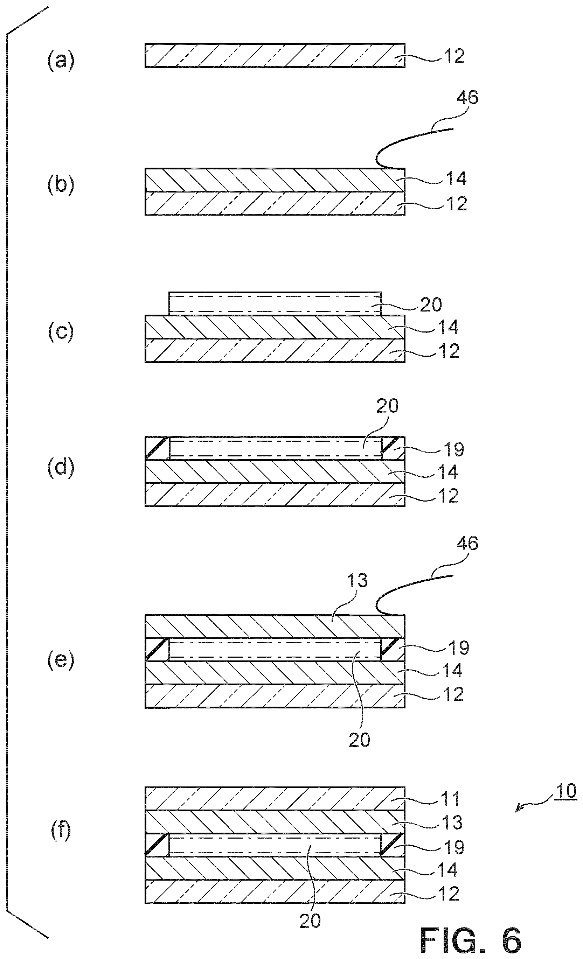

Next, a manufacturing method for the light modulating device 10 according to the present embodiment will be described with reference to Fig. 6(a) to Fig. 6(f). Fig. 6(a) to Fig. 6(f) are sectional views showing the manufacturing method for the light modulating device 10 according to the present embodiment.

Initially, as shown in Fig. 6(a), the second glass plate 12 is prepared.

Subsequently, the second bonding layer 14 made of an OCA is laminated onto the second glass plate 12. In this case, initially, for example, an OCA sheet including the second bonding layer 14 and the mold releasing film 46 is laminated to the second glass plate 12, and then the mold releasing film 46 is peeled and removed, with the result that the second bonding layer 14 is laminated onto the second glass plate 12. The second bonding layer 14 may be laminated to the entire region or part of the region of one side of the second glass plate 12.

Subsequently, the above-described light modulating cell 20 is laminated onto the second bonding layer 14, and the light modulating cell 20 is laminated to the second glass plate 12 by the second bonding layer 14 (Fig. 6(c)). The second bonding layer 14 made of an OCA is a bonding element containing a non-pressure-sensitive adhesive component as described above. For this reason, the light modulating cell 20 and the second glass plate 12 are bonded without application of pressure (that is, under an environmental pressure (ordinarily, under atmospheric pressure)). The second bonding layer 14 is bonded to the light modulating cell 20 and the second glass plate 12 at a room temperature (for example, higher than or equal to 10°C and lower than or equal to 30°C).

Subsequently, the frame-shaped outer circumferential film 19 is laminated to around the light modulating cell 20 on the second bonding layer 14, and the outer circumferential film 19 is laminated to the second glass plate 12 by the second bonding layer 14 (Fig. 6(d)). A resin film, such as polyethylene terephthalate (PET), is preferably used as the outer circumferential film 19. The second bonding layer 14 made of an OCA is a bonding element containing a non-pressure-sensitive adhesive component as described above. For this reason, the outer circumferential film 19 is bonded to the second glass plate 12 via the second bonding layer 14 without application of pressure at a room temperature.

Subsequently, the first bonding layer 13 made of an OCA is laminated onto the light modulating cell 20 and the outer circumferential film 19 (Fig. 6(e)). In this case, initially, for example, an OCA sheet including the first bonding layer 13 and the mold releasing film 46 is laminated to the light modulating cell 20 and the outer circumferential film 19, and then the mold releasing film 46 is peeled and removed, with the result that the first bonding layer 13 is laminated onto the light modulating cell 20 and the outer circumferential film 19.

Subsequently, the first glass plate 11 is prepared, and the first glass plate 11 is laminated onto the first bonding layer 13 (Fig. 6(f)). Thus, the first glass plate 11 is laminated to the light modulating cell 20 and the outer circumferential film 19 by using the first bonding layer 13. The first bonding layer 13 made of an OCA is a bonding element containing a non-pressure-sensitive adhesive component as described above. For this reason, the light modulating cell 20 and the outer circumferential film 19 are bonded to the first glass plate 11 without application of pressure (that is, under an environmental pressure (ordinarily, under atmospheric pressure)). The first bonding layer 13 is bonded to the light modulating cell 20, the outer circumferential film 19, and the first glass plate 11 at a room temperature (for example, higher than or equal to 10°C and lower than or equal to 30°C). In this way, the light modulating device 10 in which the first glass plate 11, the first bonding layer 13, the light modulating cell 20, the second bonding layer 14, and the second glass plate 12 are laminated with one another is obtained.

As described above, according to the present embodiment, the first bonding layer 13 is disposed between the first glass plate 11 and the light modulating cell 20, and the second bonding layer 14 is disposed between the second glass plate 12 and the light modulating cell 20. The first bonding layer 13 and the second bonding layer 14 each are a bonding element containing a non-pressure-sensitive adhesive component. Therefore, in a manufacturing process for the light modulating device 10, the light modulating cell 20 is not exposed to a high-pressure condition, and the light modulating device 10 can be manufactured under a normal pressure. With this configuration, a high pressure is not applied to the surface of the light modulating cell 20, so it is possible to reduce accumulation of liquid crystal that is a phenomenon in which the liquid crystal of the light modulating cell 20 is locally unevenly distributed. As a result, it is possible to enhance the quality and external appearance of the light modulating device 10. In contrast, as a comparative example, when a bonding element containing a pressure-sensitive adhesive component, such as an interlayer made of PVB, is interposed between the first glass plate 11 and the second glass plate 12, a high pressure is applied to the surface of the light modulating cell 20 through the first glass plate 11 and the second glass plate 12 with, for example, an autoclave. If the pressure is not uniform, accumulation of liquid crystal that is a phenomenon in which the liquid crystal of the light modulating cell 20 is locally unevenly distributed may occur.

According to the present embodiment, the first bonding layer 13 and the second bonding layer 14 each are made of an OCA with high heat resistance. With this configuration, even when, for example, the light modulating device 10 is put in a high-temperature environment, such as inside a vehicle in midsummer, an OCA having high heat resistance does not soften, so it is possible to reduce accumulation of liquid crystal that is a phenomenon in which a relatively large amount of liquid crystal is locally present in the light modulating cell 20. When the light modulating device 10 is disposed in an upright position on a vertical wall surface or the like in a high-temperature environment, it is possible to suppress falling of part of the liquid crystal of the liquid crystal layer 23 downward in the vertical direction due to gravity and distribute the amount of liquid crystal of the liquid crystal layer 23 uniform in the plane of the light modulating device 10. As a result, it is possible to suppress a phenomenon in which unevenness occurs in the external appearance of the light modulating device 10 (gravity unevenness) and enhance the quality and external appearance of the light modulating device 10.

According to the present embodiment, the outer circumferential film 19 is formed so as to surround the light modulating cell 20 in a plan view, and the outer circumferential film 19 is located between the first bonding layer 13 and the second bonding layer 14. Thus, it is possible to suppress entry of moisture or the like from the side of the light modulating device 10 and further enhance the water shut-off capability of the light modulating device 10. It is also possible to suppress separation of the first bonding layer 13 and the second bonding layer 14 in a thickness direction around the light modulating cell 20. Since the outer circumferential film 19 is uniform in thickness, the space between the first bonding layer 13 and the second bonding layer 14 on the side of the light modulating cell 20 can be made uniform. Particularly, the same film substrate as the first substrate 24 and the second substrate 27 of the light modulating cell 20 may be used as the outer circumferential film 19. In this case, it is possible to reduce occurrence of peeling between the outer circumferential film 19 and both the first substrate 24 and the second substrate 27 due to a difference in physical properties (the coefficient of thermal expansion, hardness, and the like) between the outer circumferential film 19 and both the first substrate 24 and the second substrate 27.

According to the present embodiment, both the first bonding layer 13 and the second bonding layer 14 are made of an OCA. In this case, because the OCA is made of a film layer having high flatness, both surfaces of the light modulating cell 20 located between the first bonding layer 13 and the second bonding layer 14 can be formed into flat. Thus, the thickness of the light modulating cell 20 becomes uniform, so it is possible to reduce accumulation of liquid crystal that is a phenomenon in which a large amount of liquid crystal is locally present in the light modulating cell 20.

According to the present embodiment, both the first bonding layer 13 and the second bonding layer 14 are made of an OCA. Because the film thickness of the OCA is made uniform in the plane, it is possible to suppress a phenomenon in which unevenness occurs in the external appearance of the light modulating device 10 while suppressing a pressure distribution on the surface of the light modulating cell 20.

### (Modifications of Light Modulating Device)

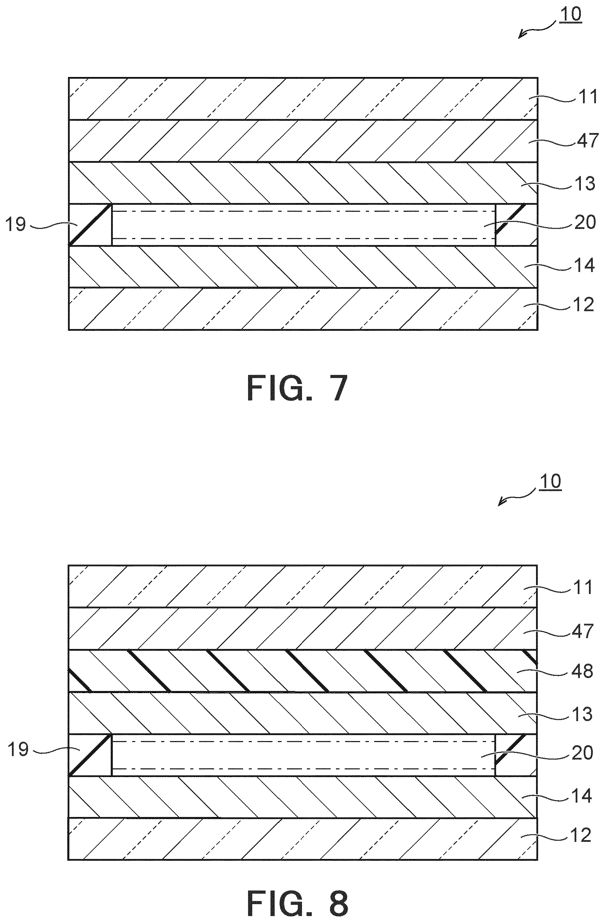

Next, some modifications of the light modulating device according to the present embodiment will be described with reference to Fig. 7 and Fig. 8. Fig. 7 and Fig. 8 are views respectively showing light modulating devices 10 according to the modifications. In Fig. 7 and Fig. 8, like reference signs are assigned to the same portions as those of the embodiment shown in Fig. 1 to Fig. 6, and the detailed description is omitted.

### (First Modification of Light Modulating Device)

Fig. 7 is a view showing the light modulating device 10 according to a first modification. As shown in Fig. 7, a third bonding layer 47 is disposed between the first glass plate 11 and the first bonding layer 13. The third bonding layer 47 may be made of, for example, an optical clear resin (OCR). The OCR is a cured material obtained by curing a liquid curing adhesive layer composition containing a polymerizable compound. Specifically, the OCR is the one obtained by applying a liquid resin that is a mixture of a base resin, such as an acrylic resin, a silicone resin, and a urethane resin, with an additive, onto an object and curing the resin with, for example, ultraviolet (UV) light. In this way, the third bonding layer 47 is interposed between the first glass plate 11 and the first bonding layer 13. With this configuration, when the space between the first glass plate 11 and the first bonding layer 13 cannot be completely filled with only the first bonding layer 13 due to the influence of unevenness of the light modulating cell 20, the space between the first glass plate 11 and the first bonding layer 13 can be completely filled with the third bonding layer 47.

### (Second Modification of Light Modulating Device)

Fig. 8 is a view showing the light modulating device 10 according to a second modification. As shown in Fig. 8, the third bonding layer 47 is disposed between the first glass plate 11 and the first bonding layer 13. A film 48 is disposed between the third bonding layer 47 and the first bonding layer 13. The third bonding layer 47 is made of an optical clear resin (OCR). The material of the film 48 may be any one of the materials listed as the materials used for the first substrate 24 and the second substrate 27 and preferably may be a resin film, such as polyethylene terephthalate (PET), of these. In this way, with the film 48 interposed between the third bonding layer 47 and the first bonding layer 13, it is possible to improve the adhesive property between the first bonding layer 13 and the third bonding layer 47.

### (Modifications of Outer Circumferential Film)

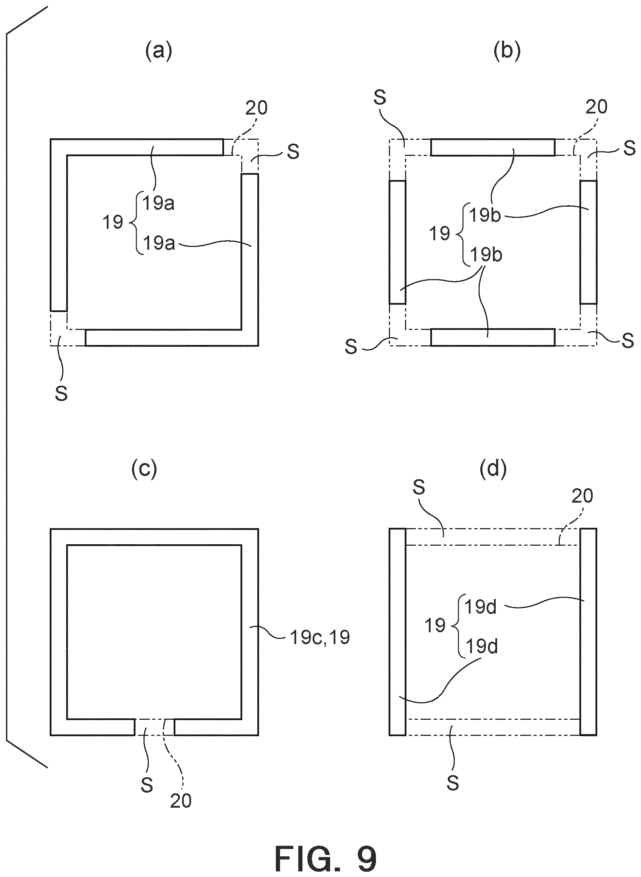

Next, some modifications of the outer circumferential film 19 will be described with reference to Fig. 9(a) to Fig. 9(d). Fig. 9(a) to Fig. 9(d) are plan views respectively showing modifications of the outer circumferential film 19.

As shown in Fig. 9(a) to Fig. 9(d), each of the outer circumferential films 19 has a shape in which part of a shape corresponding to the outer circumference of the light modulating cell 20 (hollow rectangular shape) is removed.

As shown in Fig. 9(a), the outer circumferential film 19 may be made up of two parts 19a each having an L-shape in a plan view. Each of the L-shaped parts 19a extends along adjacent two sides of the light modulating cell 20. Gaps S where no outer circumferential film 19 is present are formed at the outer circumference of the light modulating cell 20 between the two L-shaped parts 19a.

As shown in Fig. 9(b), the outer circumferential film 19 may be made up of four parts 19b each having a rod shape in a plan view. Each of the rod-shaped parts 19b extends along one side of the light modulating cell 20. Gaps S where no outer circumferential film 19 is present are respectively formed near four corners of the light modulating cell 20.

As shown in Fig. 9(c), the outer circumferential film 19 may be made up of one part 19c having a substantially C-shape in a plan view. The substantially C-shaped part 19c has a shape in which a part adjacent to one side of the light modulating cell 20 is removed from the hollow square-shaped outer circumferential film 19. A gap S where no outer circumferential film 19 is present is formed at the one part adjacent to one side of the light modulating cell 20.

As shown in Fig. 9(d), the outer circumferential film 19 may be made up of two parts 19d each having a rod shape in a plan view. The two rod-shaped parts 19d extend parallel to each other along a pair of opposite sides of the light modulating cell 20. In the outer circumference of the light modulating cell 20, gaps S where no outer circumferential film 19 is present are formed at a pair of sides where the two rod-shaped parts 19d are not provided.

In this way, when the outer circumferential film 19 has a shape in which part of the shape corresponding to the outer circumference of the light modulating cell 20 (hollow rectangular shape) is removed, gaps S are formed around the light modulating cell 20. With this configuration, when the light modulating device 10 is put in a high-temperature environment, it is possible to release air remaining between the light modulating cell 20 and the outer circumferential film 19 through the gaps S even when the air thermally expands. Thus, the expanded air does not compress the light modulating cell 20, with the result that it is possible to suppress a deformation of the light modulating cell 20.

### (Second Embodiment)

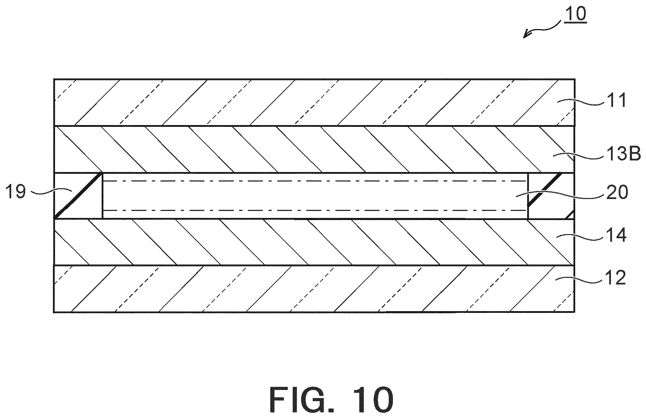

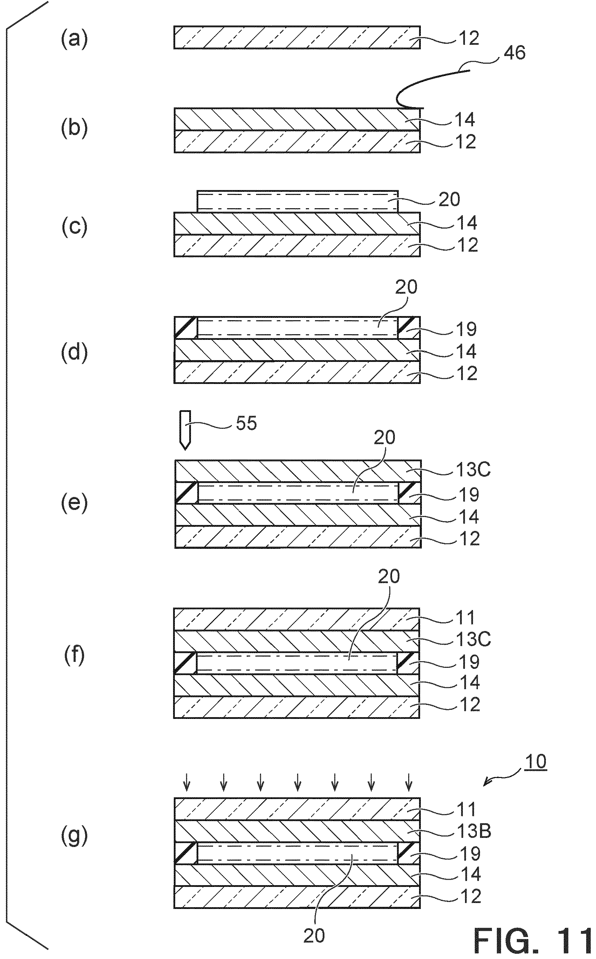

Next, a second embodiment will be described with reference to Fig. 10 to Fig. 11. Fig. 10 to Fig. 11 are views showing the second embodiment. The second embodiment shown in Fig. 10 and Fig. 11 differs mainly in that a first bonding layer 13B is made of an OCR, and the remaining configuration is substantially similar to that of the first embodiment shown in Fig. 1 to Fig. 9. In Fig. 10 and Fig. 11, like reference signs are assigned to the same portions as those of the embodiment shown in Fig. 1 to Fig. 9, and the detailed description is omitted.

### (Light Modulating Device)

As shown in Fig. 10, the light modulating device 10 according to the present embodiment includes the first glass plate 11, the first bonding layer 13B, the light modulating cell 20, the second bonding layer 14, and the second glass plate 12.

In the present embodiment, the first bonding layer 13B is made of an optical clear resin (OCR). The OCR is a cured material obtained by curing a liquid curing adhesive layer composition containing a polymerizable compound. Specifically, the OCR is the one obtained by applying a liquid resin that is a mixture of a base resin, such as an acrylic resin, a silicone resin, and a urethane resin, with an additive, onto an object and curing the resin with, for example, ultraviolet (UV) light. The first bonding layer 13B made of an OCR has optical transparency and preferably further has heat resistance up to at least about 120°C, moist heat resistance, and weather resistance. The second bonding layer 14 is made of an optical clear adhesive (OCA).

### (Manufacturing Method for Light Modulating Device)

Next, a manufacturing method for the light modulating device 10 according to the present embodiment will be described with reference to Fig. 11(a) to Fig. 11(g). Fig. 11(a) to Fig. 11(g) are sectional views showing the manufacturing method for the light modulating device 10 according to the present embodiment.

Initially, as shown in Fig. 11(a), the second glass plate 12 is prepared.

Subsequently, substantially as in the case of the above-described step shown in Fig. 6(b), the second bonding layer 14 made of an OCA is laminated onto the second glass plate 12 (Fig. 11(b)).

Subsequently, substantially as in the case of the above-described step shown in Fig. 6(c), the light modulating cell 20 is laminated on the second bonding layer 14, and the light modulating cell 20 is laminated to the second glass plate 12 by the second bonding layer 14 (Fig. 11(c)).

Subsequently, substantially as in the case of the above-described step shown in Fig. 6(d), the frame-shaped outer circumferential film 19 is laminated around the light modulating cell 20 on the second bonding layer 14, and the outer circumferential film 19 is laminated to the second glass plate 12 by the second bonding layer 14 (Fig. 11(d)).

Subsequently, an uncured liquid first bonding material 13C is applied onto the light modulating cell 20 and the outer circumferential film 19 (Fig. 11(e)). The first bonding material 13C is an OCR material containing an OCR. The OCR is a liquid curing adhesive layer composition containing a polymerizable compound and may be a liquid curing adhesive layer composition obtained by mixing a base resin, such as an acrylic resin, a silicone resin, and a urethane resin, with an additive. The first bonding material 13C may be applied to the entire region or part of the region of one side of each of the light modulating cell 20 and the outer circumferential film 19 with an application nozzle 55, such as a dispenser and a slit coater.

Subsequently, the first glass plate 11 is prepared, the first glass plate 11 is laminated on the first bonding material 13C, and the first glass plate 11 is laminated to the light modulating cell 20 and the outer circumferential film 19 by the first bonding material 13C (Fig. 11(f)). The first bonding material 13C is an OCR and is a bonding element containing a non-pressure-sensitive adhesive component. For this reason, the first glass plate 11 is bonded to the light modulating cell 20 and the outer circumferential film 19 without application of pressure (that is, under an environmental pressure (ordinarily, under atmospheric pressure)). The first glass plate 11 is bonded to the light modulating cell 20 and the second glass plate 12 at a room temperature (for example, higher than or equal to 10°C and lower than or equal to 30°C).

After that, the first bonding material 13C is cured by applying ultraviolet (UV) light to the second glass plate 12, the second bonding layer 14, the light modulating cell 20, the first bonding material 13C, and the first glass plate 11 laminated with one another (Fig. 11(g)). When the first bonding material 13C is cured, the first bonding layer 13B made of an OCR is formed. In this way, the light modulating device 10 in which the first glass plate 11, the first bonding layer 13B, the light modulating cell 20, the second bonding layer 14, and the second glass plate 12 are laminated with one another is obtained.

According to the present embodiment, the first bonding layer 13B is disposed between the first glass plate 11 and the light modulating cell 20, and the second bonding layer 14 is disposed between the second glass plate 12 and the light modulating cell 20. The first bonding layer 13B and the second bonding layer 14 each are a bonding element containing a non-pressure-sensitive adhesive component. With this configuration, in a manufacturing process for the light modulating device 10, the light modulating cell 20 is not exposed to a high-pressure condition, and the light modulating device 10 can be manufactured under a normal pressure. Therefore, a high pressure is not applied to the surface of the light modulating cell 20, so it is possible to reduce accumulation of liquid crystal that is a phenomenon in which the liquid crystal of the light modulating cell 20 is locally unevenly distributed. As a result, it is possible to enhance the quality and external appearance of the light modulating device 10.

According to the present embodiment, the first bonding layer 13B is made of an OCR with high heat resistance, and the second bonding layer 14 is made of an OCA with high heat resistance. With this configuration, even when, for example, the light modulating device 10 is put in a high-temperature environment, such as inside a vehicle in midsummer, an OCA and an OCR having high heat resistance do not soften, so it is possible to reduce accumulation of liquid crystal that is a phenomenon in which a relatively large amount of liquid crystal is locally present in the light modulating cell 20. When the light modulating device 10 is disposed in an upright position on a vertical wall surface or the like in a high-temperature environment, it is possible to suppress falling of part of the liquid crystal of the liquid crystal layer 23 downward in the vertical direction due to gravity and distribute the amount of liquid crystal of the liquid crystal layer 23 uniform in the plane of the light modulating device 10. As a result, it is possible to suppress a phenomenon in which unevenness occurs in the external appearance of the light modulating device 10 (gravity unevenness) and enhance the quality and external appearance of the light modulating device 10.

When the thickness distribution of the light modulating cell 20 is not uniform, the OCA disposed on the surface of the light modulating cell 20 possibly cannot follow the surface shape of the light modulating cell 20. On the other hand, according to the present embodiment, since an OCR that is a component of the first bonding layer 13B is liquid before being cured, the OCR can follow the uneven surface shape of the light modulating cell 20. Since the second bonding layer 14 is made of an OCA, the second glass plate 12-side surface of the light modulating cell 20 can be a horizontal geometry. For this reason, it is possible to form a state where no gap (air bubble) is present between the light modulating cell 20 and the first bonding layer 13B or the second bonding layer 14 while suppressing a pressure distribution on the surface of the light modulating cell 20.

### (Third Embodiment)

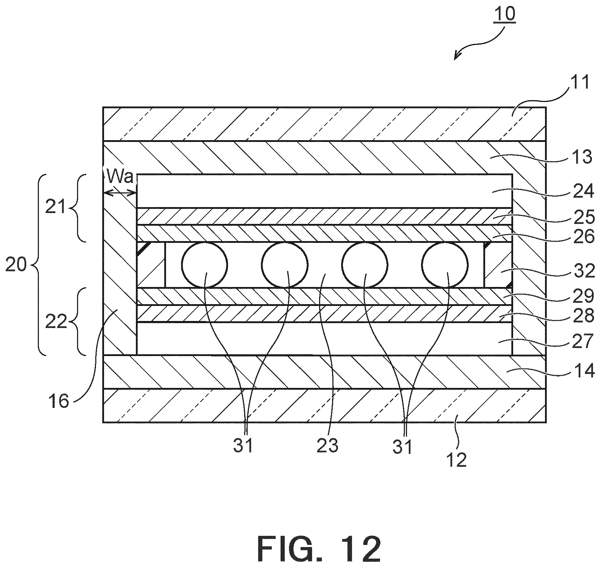

Next, a third embodiment will be described with reference to Fig. 12 to Fig. 17. Fig. 12 to Fig. 17 are views showing the third embodiment. The third embodiment shown in Fig. 12 to Fig. 17 differs mainly in that the first bonding layer 13 and the second bonding layer 14 each are made of an OCR, and the remaining configuration is substantially similar to those of the above-described embodiments shown in Fig. 1 to Fig. 11. In Fig. 12 to Fig. 17, like reference signs are assigned to the same portions as those of the embodiments shown in Fig. 1 to Fig. 11, and the detailed description is omitted.

### (Light Modulating Device)

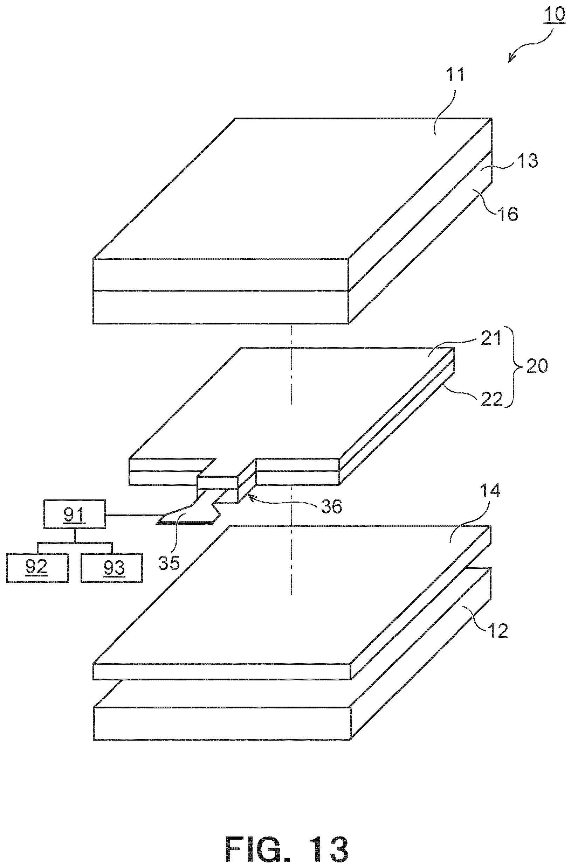

Fig. 12 is a sectional view showing the layer configuration of the light modulating device 10 according to the present embodiment. Fig. 13 is an exploded perspective view showing the layer configuration of the light modulating device 10 according to the present embodiment. The light modulating device 10 of the present embodiment may have a three-dimensional surface shape; however, for the sake of easy understanding, Fig. 12 and Fig. 13 show views in the case where the surface shape of the light modulating device 10 is a planar shape.

As shown in Fig. 12, the light modulating device 10 includes the first glass plate 11, the first bonding layer (first OCR layer) 13, the light modulating cell 20, the second bonding layer (second OCR layer) 14, and the second glass plate 12. The first glass plate 11, the first bonding layer 13, the light modulating cell 20, the second bonding layer 14, and the second glass plate 12 are laminated in this order.

In the present embodiment, the first bonding layer 13 and the second bonding layer 14 each are made of an optical clear resin (OCR). The OCR is a cured material obtained by curing a liquid curing adhesive layer composition containing a polymerizable compound. Specifically, the OCR is the one obtained by applying a liquid resin that is a mixture of a base resin, such as an acrylic resin, a silicone resin, and a urethane resin, with an additive, onto an object and curing the resin with, for example, ultraviolet (UV) light. The first bonding layer 13 and the second bonding layer 14 each have optical transparency and preferably further have heat resistance up to at least about 120°C, moist heat resistance, and weather resistance. The OCR that is a component of each of the first bonding layer 13 and the second bonding layer 14 does not need to have weather resistance. In this case, when the light modulating device 10 includes a layer with weather resistance, the light modulating device 10 can be imparted with weather resistance. Specifically, a layer having weather resistance (IR cut layer) may be provided on each of the surfaces respectively opposite to the facing surfaces of the first glass plate 11 and the second glass plate 12, between the first glass plate 11 and the first bonding layer 13, between the second glass plate 12 and the second bonding layer 14, and/or the like.

In the present embodiment, the first bonding layer 13 directly joins the first glass plate 11 with the light modulating cell 20. The second bonding layer 14 directly joins the second glass plate 12 with the light modulating cell 20. However, the configuration is not limited thereto. For example, a film, such as an ultraviolet (UV) light cut film, may be interposed between the first glass plate 11 and the first bonding layer 13, between the first bonding layer 13 and the light modulating cell 20, between the second bonding layer 14 and the light modulating cell 20, and/or between the second glass plate 12 and the second bonding layer 14.

The resin cure shrinkage of each of the first bonding layer 13 and the second bonding layer 14 may be lower than or equal to 2.3% and desirably lower than or equal to 2.0%. A resin cure shrinkage (%) can be obtained by 1 - (Specific gravity of liquid resin)/(Specific gravity of cured resin), and a specific gravity can be measured with a hydrometer. Since the resin cure shrinkage of each of the first bonding layer 13 and the second bonding layer 14 is lower than or equal to 2.3%, it is possible to reduce the influence on the light modulating cell 20 due to shrinkage on curing of the first bonding layer 13 and the second bonding layer 14. Thus, it is possible to reduce accumulation of liquid crystal that is a phenomenon in which a large amount of liquid crystal is locally present in the light modulating cell 20.

Each of the first bonding layer 13 and the second bonding layer 14 desirably has a small difference between an elastic modulus at a high temperature (for example, 90°C) and an elastic modulus at a room temperature (25°C). Specifically, the elastic modulus of each of the first bonding layer 13 and the second bonding layer 14, measured at 25°C, may be, for example, higher than or equal to 0.08 MPa and lower than or equal to 0.28 MPa and preferably higher than or equal to 0.15 MPa and lower than or equal to 0.23 MPa. The elastic modulus of each of the first bonding layer 13 and the second bonding layer 14, measured at 90°C, may be, for example, higher than or equal to 0.08 MPa and lower than or equal to 0.28 MPa and preferably higher than or equal to 0.15 MPa and lower than or equal to 0.23 MPa. An elastic modulus can be measured with, for example, a DMA measuring device (a dynamic mechanical analysis device, for example, Rheogel-E4000 made by UBM Co., Ltd.). In this way, each of the first bonding layer 13 and the second bonding layer 14 has a small difference between an elastic modulus at a high temperature (for example, 90°C) and an elastic modulus at a room temperature (25°C). With this configuration, even when, for example, the light modulating device 10 is used in a high-temperature environment, such as inside a vehicle, it is possible to reduce accumulation of liquid crystal that is a phenomenon in which a relatively large amount of liquid crystal is locally present in the light modulating cell 20.

The thickness of each of the first bonding layer 13 and the second bonding layer 14 may be selected as needed according to the material or the like. Specifically, the thickness of each of the first bonding layer 13 and the second bonding layer 14 may be greater than or equal to 30 µm and less than or equal to 500 µm and preferably greater than or equal to 50 µm and less than or equal to 200 µm. The size of the first bonding layer 13 may be the same as the size of the first glass plate 11 or may be greater than the size of the first glass plate 11. The size of the second bonding layer 14 may be the same as the size of the second glass plate 12 or may be greater than the size of the second glass plate 12. The first bonding layer 13 and the second bonding layer 14 may be made of the same material or may be respectively made of materials different from each other.

As shown in Fig. 12 and Fig. 13, the first bonding layer 13 is integrated with an OCR layer (third OCR layer) 16. The OCR layer 16 is connected to the second bonding layer 14. The OCR layer 16 is an optical clear resin (OCR) layer having a frame shape in a plan view. More specifically, the OCR layer 16 has a hollow square shape (hollow rectangular shape) or a shape in which part of the hollow square shape is cut away. The OCR layer 16 is made of the same material as the material of the first bonding layer 13 and is integrally formed with the first bonding layer 13. The OCR layer 16 may be integrally formed with the second bonding layer 14. With the OCR layer 16, it is possible to suppress exposure of the side of the light modulating cell 20 or part of the side to the side of the light modulating device 10 and also to reduce entry of moisture or the like from the side of the light modulating device 10 and further enhance the water shut-off capability of the light modulating device 10.

The OCR layer 16 is an OCR layer formed at a thickness part of the light modulating cell 20 in a sectional view when the first bonding layer 13 and the second bonding layer 14 each are greater than the light modulating cell 20 (in a plan view). The OCR layer 16 is formed so as to surround the light modulating cell 20 in a plan view and has a frame shape such that the shape of the light modulating cell 20 is hollowed from the shape of each of the first bonding layer 13 and the second bonding layer 14. In this case, the OCR layer 16 is formed in a part corresponding to around the light modulating cell 20 between the first bonding layer 13 and the second bonding layer 14.

The outer circumference of the OCR layer 16 may be the same size as the outer circumference of each of the first glass plate 11 and the second glass plate 12 or may be greater than the outer circumference of each of the first glass plate 11 and the second glass plate 12. The inner circumference of the OCR layer 16 may be the same size as the outer circumference of the light modulating cell 20 or may be greater than the outer circumference of the light modulating cell 20. A width Wa (see Fig. 13) of the OCR layer 16 is preferably greater than 0 mm and less than or equal to about 1/4 of a glass width. Alternatively, as long as the side of the light modulating cell 20 or part of the side is not exposed from the side of the light modulating device 10, the OCR layer 16 may be omitted.

The first bonding layer 13, the second bonding layer 14, and the OCR layer 16 each are a bonding element containing a non-pressure-sensitive adhesive component. Here, the "bonding element containing a non-pressure-sensitive adhesive component" is a bonding element that does not need application of pressure to be appropriately bonded to an adjacent object and that can be moderately bonded to the adjacent object under a normal pressure.

In the present embodiment, the one similar to that of the first embodiment may be used as the light modulating cell 20.

In the present embodiment, as described above, the first bonding layer (first OCR layer) 13 is disposed between the first glass plate 11 and the light modulating cell 20, and the second bonding layer (second OCR layer) 14 is disposed between the second glass plate 12 and the light modulating cell 20. The first bonding layer 13 joins the first glass plate 11 and the light modulating cell 20 with each other. The second bonding layer 14 joins the second glass plate 12 and the light modulating cell 20 with each other. With this configuration, even when the light modulating device 10 is put in a high-temperature environment, such as inside a vehicle in midsummer, an OCR having high heat resistance does not soften, so it is possible to reduce accumulation of liquid crystal that is a phenomenon in which the liquid crystal of the light modulating cell 20 is unevenly distributed.

In Fig. 13, the external electrode substrate 35 and the electrode projection 36 are sandwiched between the OCR layer 16 and the second bonding layer 14 and protrude outward from the OCR layer 16 and the second bonding layer 14. The external electrode substrate 35 and the electrode projection 36 may protrude outward only from the inside of the OCR layer 16. In this case, part of the external electrode substrate 35 and the electrode projection 36 may be embedded in the OCR layer 16.

### (Manufacturing Method for Light Modulating Device)

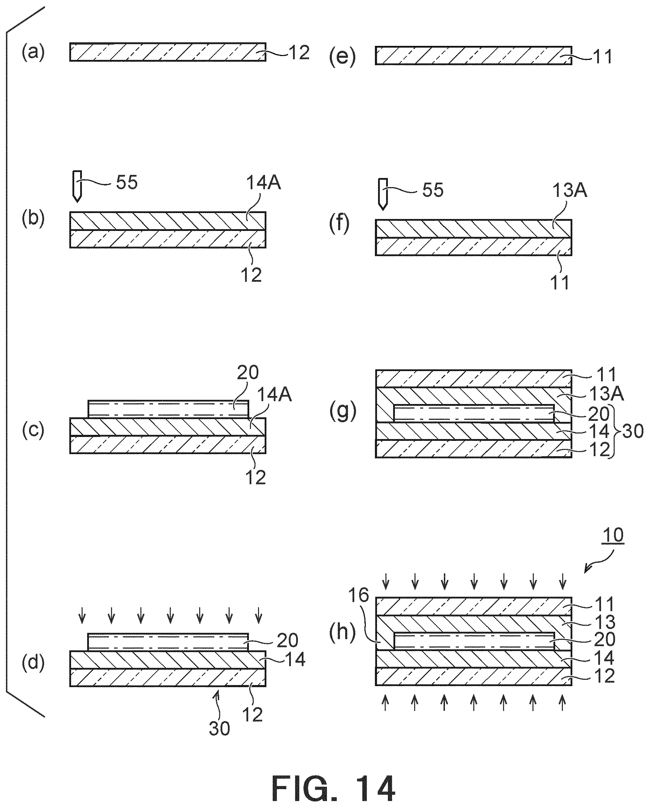

Next, a manufacturing method (OCR application method) for the light modulating device 10 according to the present embodiment will be described with reference to Fig. 14(a) to Fig. 14 (h). Fig. 14(a) to Fig. 14(h) are sectional views showing the manufacturing method for the light modulating device 10 according to the present embodiment.

Initially, for example, as in the case of the steps shown in Fig. 4(a) to Fig. 4(d) and Fig. 5(a) to Fig. 5(c), the light modulating cell 20 is manufactured.

Subsequently, as shown in Fig. 14(a), the second glass plate 12 is prepared.

Subsequently, an uncured liquid second OCR material 14A is applied onto the second glass plate 12 (Fig. 14(b)). The second OCR material 14A contains an OCR. The OCR is a liquid curing adhesive layer composition containing a polymerizable compound and may be a liquid curing adhesive layer composition obtained by mixing a base resin, such as an acrylic resin, a silicone resin, and a urethane resin, with an additive. The second OCR material 14A may be applied to the entire region or part of the region of one side of the second glass plate 12 with the application nozzle 55, such as a dispenser and a slit coater.

Subsequently, the above-described light modulating cell 20 is laminated on the second OCR material 14A, and the light modulating cell 20 is laminated to the second glass plate 12 by the second OCR material 14A (Fig. 14(c)). The second OCR material 14A is a bonding element containing an OCR that is a non-pressure-sensitive adhesive component as described above. For this reason, the light modulating cell 20 and the second glass plate 12 are bonded without application of pressure (that is, under an environmental pressure (ordinarily, under atmospheric pressure)). The second OCR material 14A is bonded to the light modulating cell 20 and the second glass plate 12 at a room temperature (for example, higher than or equal to 10°C and lower than or equal to 30°C).

Subsequently, the second OCR material 14A is cured by applying ultraviolet (UV) light to the second glass plate 12, the second OCR material 14A, and the light modulating cell 20 laminated with one another. When the second OCR material 14A is cured, the second bonding layer 14 is formed. Thus, a multilayer body 30 in which the second glass plate 12, the second bonding layer 14, and the light modulating cell 20 laminated with one another is obtained (Fig. 14(d)).

Subsequently, the first glass plate 11 is prepared (Fig. 14(e)).

Subsequently, an uncured liquid first OCR material 13A is applied onto the first glass plate 11 (Fig. 14(f)). The first OCR material 13A contains an OCR. The OCR may be the same material as the second OCR material 14A or may be a material different from the second OCR material 14A. The first OCR material 13A may be applied to the entire region or part of the region of one side of the first glass plate 11 with the application nozzle 55, such as a dispenser and a slit coater.

Subsequently, the above-described multilayer body 30 is laminated on the first OCR material 13A (Fig. 14(g)). At this time, the first OCR material 13A is disposed to face the light modulating cell 20 side of the multilayer body 30. With this configuration, the first glass plate 11 is laminated to the light modulating cell 20 of the multilayer body 30 by the first OCR material 13A. The first OCR material 13A is a bonding element containing an OCR that is a non-pressure-sensitive adhesive component as described above. For this reason, the light modulating cell 20 of the multilayer body 30 and the first glass plate 11 are bonded to the first glass plate 11 without application of pressure (that is, under an environmental pressure (ordinarily, under atmospheric pressure)). The first OCR material 13A is bonded to the light modulating cell 20 and the first glass plate 11 at a room temperature (for example, higher than or equal to 10°C and lower than or equal to 30°C). At this time, part of the first OCR material 13A flows to around the light modulating cell 20 on the second glass plate 12 of the multilayer body 30.

Subsequently, the first OCR material 13A is cured by applying ultraviolet (UV) light to the second glass plate 12, the second bonding layer 14, the light modulating cell 20, the first OCR material 13A, and the first glass plate 11 laminated with one another. When the first OCR material 13A is cured, the first bonding layer 13 is formed. The OCR layer 16 is formed of a part of the first OCR material 13A, flowing to around the light modulating cell 20. In this way, the light modulating device 10 in which the first glass plate 11, the first bonding layer 13, the light modulating cell 20, the second bonding layer 14, and the second glass plate 12 are laminated with one another is obtained (Fig. 14(h)).

As described above, according to the present embodiment, the first bonding layer (first OCR layer) 13 is disposed between the first glass plate 11 and the light modulating cell 20, and the second bonding layer (second OCR layer) 14 is disposed between the second glass plate 12 and the light modulating cell 20. An OCR that is a component of the first bonding layer 13 and the second bonding layer 14 is a bonding element containing a non-pressure-sensitive adhesive component. With this configuration, in a manufacturing process for the light modulating device 10, the light modulating cell 20 is not exposed to a high-pressure condition, and the light modulating device 10 can be manufactured under a normal pressure. Therefore, a high pressure is not applied to the surface of the light modulating cell 20, so it is possible to reduce accumulation of liquid crystal that is a phenomenon in which the liquid crystal of the light modulating cell 20 is locally unevenly distributed. As a result, it is possible to enhance the quality and external appearance of the light modulating device 10. In contrast, as a comparative example, when a bonding element containing a pressure-sensitive adhesive component, such as an interlayer made of PVB, is interposed between the first glass plate 11 and the second glass plate 12, a high pressure is applied to the surface of the light modulating cell 20 through the first glass plate 11 and the second glass plate 12 with, for example, an autoclave. If the pressure is not uniform, accumulation of liquid crystal that is a phenomenon in which the liquid crystal of the light modulating cell 20 is locally unevenly distributed may occur.

According to the present embodiment, the first bonding layer 13 and the second bonding layer 14 each are made of an OCR with high heat resistance. With this configuration, even when, for example, the light modulating device 10 is put in a high-temperature environment, such as inside a vehicle in midsummer, an OCR having high heat resistance does not soften, so it is possible to reduce accumulation of liquid crystal that is a phenomenon in which a relatively large amount of liquid crystal is locally present in the light modulating cell 20. When the light modulating device 10 is disposed in an upright position on a vertical wall surface or the like in a high-temperature environment, it is possible to suppress falling of part of the liquid crystal of the liquid crystal layer 23 downward in the vertical direction due to gravity and distribute the amount of liquid crystal of the liquid crystal layer 23 uniform in the plane of the light modulating device 10. As a result, it is possible to suppress a phenomenon in which unevenness occurs in the external appearance of the light modulating device 10 (gravity unevenness) and enhance the quality and external appearance of the light modulating device 10.

According to the present embodiment, the frame-shaped OCR layer 16 is formed so as to surround the light modulating cell 20 in a plan view, and the OCR layer 16 is located between the first bonding layer 13 and the second bonding layer 14. Thus, it is possible to suppress entry of moisture or the like from the side of the light modulating device 10 and further enhance the water shut-off capability of the light modulating device 10.

### (First Modification of Manufacturing Method for Light Modulating Device)

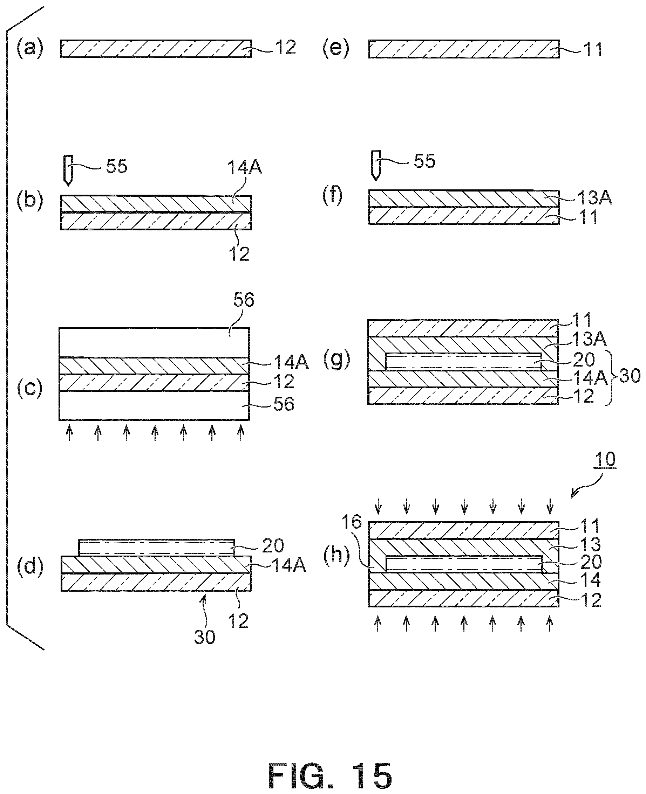

Next, a first modification of the manufacturing method for the light modulating device 10 according to the present embodiment will be described with reference to Fig. 15(a) to Fig. 15(h). Fig. 15(a) to Fig. 15(h) are sectional views showing the first modification of the manufacturing method for the light modulating device 10.

Initially, as shown in Fig. 15(a), the second glass plate 12 is prepared.

Subsequently, substantially as in the case of the above-described step shown in Fig. 14(b), an uncured liquid second OCR material 14A is applied onto the second glass plate 12 with the application nozzle 55, such as a dispenser and a slit coater (Fig. 15(b)).

Subsequently, the second OCR material 14A is temporarily cured by applying ultraviolet (UV) light to the second glass plate 12 and the second OCR material 14A laminated with each other (Fig. 15(c)). Temporarily curing means a state where the tackiness of an OCR is maintained at a certain level without completely curing the OCR. The amount of application of ultraviolet (UV) light at this time may be, for example, higher than or equal to 50% and lower than or equal to 80% of that when the second OCR material 14A is completely cured (for example, the above-described step shown in Fig. 14(d)). At this time, preferably, at least a flat jig 56 is provided on the second OCR material 14A side to planarize the surface of the second OCR material 14A, facing an opposite side to the second glass plate 12.

Subsequently, the above-described light modulating cell 20 is laminated on the temporarily cured second OCR material 14A, and the light modulating cell 20 is laminated to the second glass plate 12 by the temporarily cured second OCR material 14A (Fig. 15(d)). Thus, a multilayer body 30 in which the second glass plate 12, the second OCR material 14A, and the light modulating cell 20 laminated with one another is obtained.

Subsequently, the first glass plate 11 is prepared (Fig. 15(e)).

Subsequently, substantially as in the case of the above-described step shown in Fig. 14(f), an uncured liquid first OCR material 13A is applied onto the first glass plate 11 with the application nozzle 55, such as a dispenser and a slit coater (Fig. 15(f)).

Subsequently, substantially as in the case of the above-described step shown in Fig. 14(g), the above-described multilayer body 30 is laminated on the first OCR material 13A (Fig. 15(g)). At this time, the first OCR material 13A is disposed to face the light modulating cell 20 side of the multilayer body 30. With this configuration, the first glass plate 11 is laminated to the light modulating cell 20 of the multilayer body 30 by the first OCR material 13A.

After that, substantially as in the case of the above-described step shown in Fig. 14(h), the first OCR material 13A is cured by applying ultraviolet (UV) light to the second glass plate 12, the second OCR material 14A, the light modulating cell 20, the first OCR material 13A, and the first glass plate 11 laminated with one another. When the first OCR material 13A is cured, the first bonding layer 13 is formed. When the second OCR material 14A temporarily cured is completely cured, the second bonding layer 14 is formed. At this time, the OCR layer 16 is formed of a part of the first OCR material 13A, flowing to around the light modulating cell 20. In this way, the light modulating device 10 in which the first glass plate 11, the first bonding layer 13, the light modulating cell 20, the second bonding layer 14, and the second glass plate 12 are laminated with one another is obtained (Fig. 15(h)).

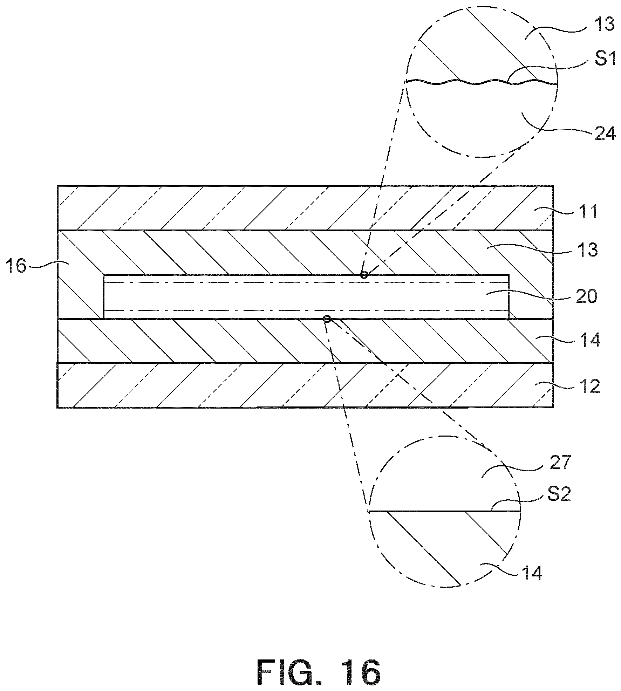

According to the present modification, after the second OCR material 14A is applied onto the second glass plate 12, the second OCR material 14A is temporarily cured before laminating the light modulating cell 20. After that, the light modulating cell 20 is laminated to the second glass plate 12 by on the temporarily cured second OCR material 14A. In this case, when the second OCR material 14A is temporarily cured, the unevenness of the surface of the light modulating cell 20 is not transferred to the second bonding layer 14 side. Thus, the flatness of the second bonding layer 14 is enhanced, with the result that it is possible to planarize a boundary surface between the light modulating cell 20 and the second bonding layer 14 (a second interface S2 shown in Fig. 16).

Fig. 16 shows the light modulating device 10 manufactured by the manufacturing method for the light modulating device 10 according to the present modification. In the light modulating device 10 shown in Fig. 16, a first interface S1 is formed between the first bonding layer 13 and the light modulating cell 20, and the second interface S2 is formed between the second bonding layer 14 and the light modulating cell 20. In this case, the second interface S2 is flatter than the first interface S1. The configuration other than this is similar to the above-described light modulating device 10.

According to the present modification, when the second OCR material 14A is temporarily cured, the second OCR material 14A does not contact with the light modulating cell 20, so it is possible to reduce the influence on the light modulating cell 20 due to cure shrinkage of the second OCR material 14A. With this configuration, it is possible to reduce accumulation of liquid crystal that is a phenomenon in which the liquid crystal of the light modulating cell 20 is locally unevenly distributed and enhance the quality and external appearance of the light modulating device 10.

### (Second Modification of Manufacturing Method for Light Modulating Device)

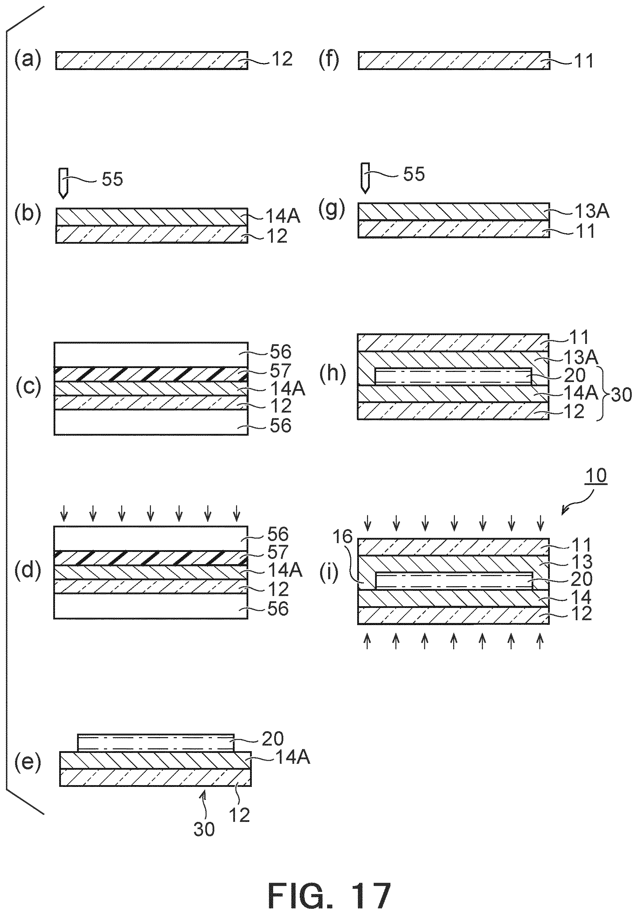

Next, a second modification of the manufacturing method for the light modulating device 10 according to the present embodiment will be described with reference to Fig. 17(a) to Fig. 17(i). Fig. 17(a) to Fig. 17(i) are sectional views showing the second modification of the manufacturing method for the light modulating device 10.

Initially, as shown in Fig. 17(a), the second glass plate 12 is prepared.

Subsequently, substantially as in the case of the above-described step shown in Fig. 14(b), an uncured liquid second OCR material 14A is applied onto the second glass plate 12 with the application nozzle 55, such as a dispenser and a slit coater (Fig. 17(b)).

Subsequently, a transparent protection film 57 is laminated on the second OCR material 14A, and the protection film 57 is laminated to the second glass plate 12 by the second OCR material 14A (Fig. 17(c)). At this time, lamination of the protection film 57 is performed on the flat jig 56. A separate film, such as a silicone mold releasing film and a non-silicone (such as fluorine) mold releasing film, may be used as the protection film 57. In this way, when the protection film 57 is laminated on the second OCR material 14A, the conveyability of the second glass plate 12 and the second OCR material 14A can be improved.

Subsequently, the second OCR material 14A is temporarily cured by applying ultraviolet (UV) light to the second glass plate 12, the second OCR material 14A, and the protection film 57 laminated with one another (Fig. 17(d)). At this time, preferably, at least the flat jig 56 is provided on the protection film 57 side to planarize the surface of the second OCR material 14A, facing an opposite side to the second glass plate 12.

Subsequently, the protection film 57 is peeled and removed and the above-described light modulating cell 20 is laminated on the temporarily cured second OCR material 14A, and the light modulating cell 20 is laminated to the second glass plate 12 by the temporarily cured second OCR material 14A (Fig. 17(e)). Thus, a multilayer body 30 in which the second glass plate 12, the second OCR material 14A, and the light modulating cell 20 laminated with one another is obtained. The light modulating cell 20 may be laminated to the second glass plate 12 by a roller lamination method using rollers. Alternatively, the light modulating cell 20 may be laminated to the second glass plate 12 by a roller vacuum lamination method or a vacuum lamination method.

Subsequently, the first glass plate 11 is prepared (Fig. 17(f)).

Subsequently, substantially as in the case of the above-described step shown in Fig. 14(f), an uncured liquid first OCR material 13A is applied onto the first glass plate 11 with the application nozzle 55, such as a dispenser and a slit coater (Fig. 17(g)).

**Subsequently,** substantially as in the case of the above-described step shown in Fig. 14(g), the above-described multilayer body 30 is laminated on the first OCR material 13A, and the first glass plate 11 is laminated to the light modulating cell 20 of the multilayer body 30 by the first OCR material 13A (Fig. 17(h)).

After that, substantially as in the case of the above-described step shown in Fig. 14(h), ultraviolet (UV) light is applied to the second glass plate 12, the second OCR material 14A, the light modulating cell 20, the first OCR material 13A, and the first glass plate 11 laminated with one another. Thus, the first OCR material 13A is cured, the first bonding layer 13 is formed. When the second OCR material 14A temporarily cured is completely cured, the second bonding layer 14 is formed. In this way, the light modulating device 10 in which the second glass plate 12, the first bonding layer 13, the light modulating cell 20, and the second bonding layer 14 are laminated with one another is obtained (Fig. 17(i)).

According to the present modification, after the second OCR material 14A is applied onto the second glass plate 12, the protection film 57 is laminated to the second OCR material 14A, and then the second OCR material 14A is temporarily cured before laminating the light modulating cell 20. After that, the protection film 57 is peeled, and the light modulating cell 20 is laminated to the second glass plate 12 by on the temporarily cured second OCR material 14A. In this case, when the second OCR material 14A is temporarily cured, the surface shape of the flat protection film 57 is transferred to the second bonding layer 14 side, and the unevenness of the surface of the light modulating cell 20 is not transferred to the second bonding layer 14 side. Thus, the flatness of the second bonding layer 14 is enhanced, with the result that it is possible to planarize the second interface S2 between the light modulating cell 20 and the second bonding layer 14. In the manufacturing method for the light modulating device 10 according to the present modification as well, the light modulating device 10 (see Fig. 16) in which the second interface S2 formed between the second bonding layer 14 and the light modulating cell 20 is flatter than the first interface S1 formed between the first bonding layer 13 and the light modulating cell 20.

According to the present modification, when the second OCR material 14A is temporarily cured, the second OCR material 14A does not contact with the light modulating cell 20, so it is possible to reduce the influence on the light modulating cell 20 due to shrinkage on curing of the second OCR material 14A. As a result, it is possible to reduce accumulation of liquid crystal that is a phenomenon in which the liquid crystal of the light modulating cell 20 is locally unevenly distributed and enhance the quality and external appearance of the light modulating device 10.

### (Fourth Embodiment)

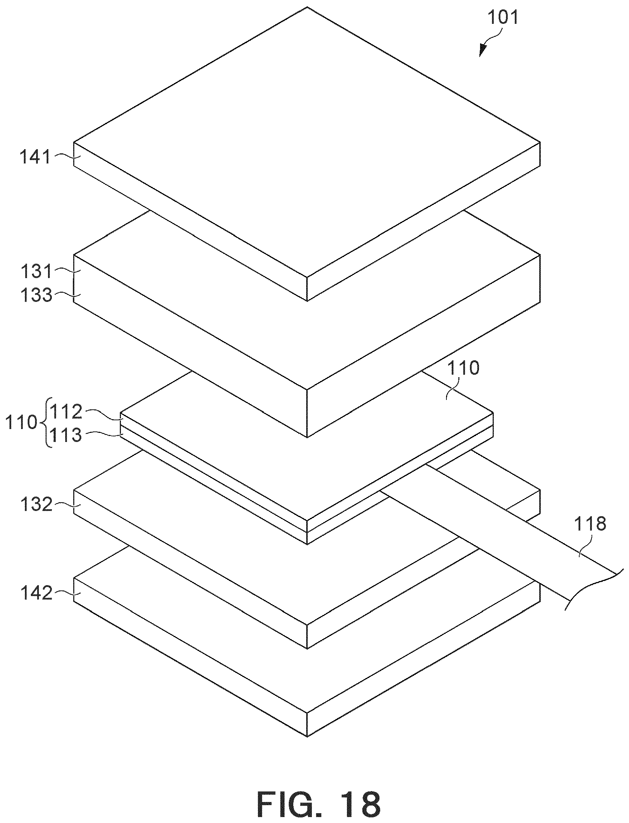

Next, a fourth embodiment will be described with reference to Fig. 18 to Fig. 28. Fig. 18 to Fig. 28 are views showing the fourth embodiment.

Fig. 18 is an exploded perspective view showing the configuration of a liquid crystal device 101 according to the present embodiment. The drawings described below, including Fig. 18, are schematic views, and the size and shape of each portion are exaggerated as needed for the purpose of easy understanding.

In the following description, the description will be made by indicating specific numeric values, shapes, materials, and the like; however, these may be changed as needed. In the specification, terms that specify shapes and geometrical conditions, for example, terms, such as parallel and perpendicular, mean not only the strict senses of the terms but also states with errors to such an extent that similar optical functions are obtained and those can be regarded as parallel or perpendicular. In the specification, words, such as plate, sheet, and film, are used; however, these are used in descending order of thickness, that is, in order of plate, sheet, and film, as a general usage and are used in conformity with this in the specification as well. However, such a way of usage does not have any technical meaning, so these wordings can be replaced as needed. In the specification, a sheet surface is assumed in each sheet as a surface spreading in a plane direction of the sheet when the sheet is viewed as a whole. The same applies to a plate surface and a film surface. A plan view is a view in a direction vertical to a principal surface of the light modulating device. In the present disclosure, a transparent member means that the member transmits at least light with wavelengths used. For example, even if a member does not transmit visible light but transmits infrared rays, the member is handled as a transparent member when used for infrared rays. Specific numeric values defined in the specification and the scope of the claims should be handled as including general error ranges. In other words, it should be interpreted that a difference of about ±10% is substantially not different and a state where a numeric value is set to a range slightly exceeding a numeric value of the subject application substantially falls within a range of the invention of the subject application.

The liquid crystal device 101 is applicable to various technical fields in which adjustment of light transmittance is desired, and the scope of application is not limited. The liquid crystal device 101 is disposed in regions intended for light modulating, for example, window glasses of buildings, show cases, transparent interior partitions, windows of vehicles (for example, windows, such as windshields, side windows, rear windows, and sunroofs), and partition boards inside vehicles. With this configuration, it is possible to control the amount of incident light into buildings, vehicles, and the like or the amount of incident light into predetermined zones inside buildings, vehicles, and the like.

The liquid crystal device 101 according to the present embodiment may have a three-dimensional shape such that the surface shape is a curved surface shape. For example, the liquid crystal device 101 may have a convex shape on one side. The liquid crystal device 101 is not limited to this shape. For example, the surface shape may be a planar shape (that is, a flat-plate shape). The following drawings including Fig. 18 are shown on the assumption that the surface shape is a planar shape for the sake of simplification.

As shown in Fig. 18, the liquid crystal device (laminated glass) 101 according to the present embodiment includes a first glass plate 141, a first bonding layer 131, a liquid crystal cell 110, a second bonding layer 132, and a second glass plate 142. The first glass plate 141, the first bonding layer 131, the liquid crystal cell 110, the second bonding layer 132, and the second glass plate 142 are laminated in this order. A third bonding layer 133 is disposed at an outer circumferential part of the liquid crystal cell 110.

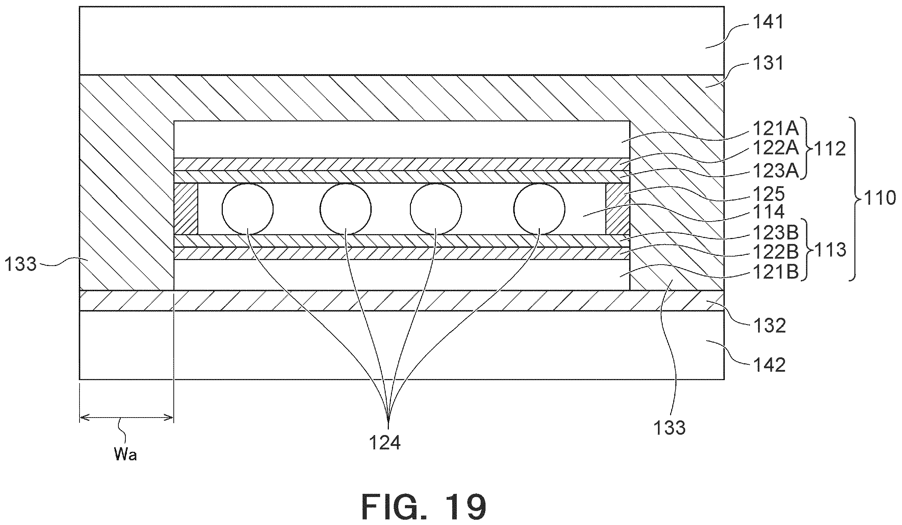

Fig. 19 is a sectional view showing the layer configuration of the liquid crystal device 101 according to the present embodiment. As shown in Fig. 19, the liquid crystal device 101 includes the first glass plate 141, the second glass plate 142, and the liquid crystal cell 110 disposed between the first glass plate 141 and the second glass plate 142. The liquid crystal cell 110 includes a first multilayer body 112, a second multilayer body 113, and a liquid crystal layer 114. The first multilayer body 112 includes a first substrate 121A, a first transparent electrode 122A, and a first alignment layer 123A. The second multilayer body 113 includes a second substrate 121B, a second transparent electrode 122B, and a second alignment layer 123B. The liquid crystal layer 114 is disposed between the first multilayer body 112 and the second multilayer body 113.

The first glass plate (first transparent substrate) 141 and the second glass plate (second transparent substrate) 142 are respectively disposed at the front and back sides of the liquid crystal device 101 and are plate glasses having high translucency. In the present embodiment, each of the first glass plate 141 and the second glass plate 142 has a thickness of greater than or equal to 0.5 mm and less than or equal to 4 mm. For example, a plate glass having a thickness of 2 mm is used as each of the first glass plate 141 and the second glass plate 142. When inorganic glass is used as each of the first glass plate 141 and the second glass plate 142, the liquid crystal device 101 with high heat resistance and high flaw resistance can be obtained. A surface treatment, such as hard coating, may be applied as needed to each of the first glass plate 141 and the second glass plate 142. Instead of inorganic glass, a transparent resin plate (so-called resin glass) may be used for the first glass plate (first transparent substrate) 141 and the second glass plate (second transparent substrate) 142. For example, polycarbonate, acrylic, or the like may be used as a transparent resin glass used as the first transparent substrate and the second transparent substrate. When the transparent resin plate is used as the first transparent substrate and the second transparent substrate, the weight of the liquid crystal device 101 can be reduced.

The first bonding layer 131 is disposed between the first glass plate 141 and the liquid crystal cell 110. The first bonding layer 131 is a member that joins the first glass plate 141 and the liquid crystal cell 110 with each other. The first bonding layer 131 is greater in size in a plan view than the liquid crystal cell 110. In the present embodiment, the first bonding layer 131 is made of an optical clear resin (OCR). The OCR is a cured material obtained by curing a liquid curing adhesive layer composition containing a polymerizable compound. Specifically, the OCR is the one obtained by applying a liquid resin that is a mixture of a base resin, such as an acrylic resin, a silicone resin, and a urethane resin, with an additive, onto an object and curing the resin with, for example, ultraviolet (UV) light. The first bonding layer 131 has optical transparency and preferably further has heat resistance up to at least about 120°C, moist heat resistance, and weather resistance.

The resin cure shrinkage of the first bonding layer 131 may be lower than or equal to 2.3% and desirably lower than or equal to 2.0%. A resin cure shrinkage (%) can be obtained by 1 - (Specific gravity of liquid resin)/(Specific gravity of cured resin), and a specific gravity can be measured with a hydrometer. Since the resin cure shrinkage of the first bonding layer 131 is lower than or equal to 2.3%, it is possible to reduce the influence on the liquid crystal cell 110 due to shrinkage on curing of the first bonding layer 131. Thus, it is possible to reduce accumulation of liquid crystal that is a phenomenon in which a large amount of liquid crystal is locally present in the liquid crystal cell 110.

The first bonding layer 131 desirably has a small difference between an elastic modulus at a high temperature (for example, 90°C) and an elastic modulus at a room temperature (25°C). Specifically, the elastic modulus of the first bonding layer 131, measured at 25°C, may be, for example, higher than or equal to 0.08 MPa and lower than or equal to 0.28 MPa and preferably higher than or equal to 0.15 MPa and lower than or equal to 0.23 MPa. The elastic modulus of the first bonding layer 131, measured at 90°C, may be, for example, higher than or equal to 0.08 MPa and lower than or equal to 0.28 MPa and preferably higher than or equal to 0.15 MPa and lower than or equal to 0.23 MPa. An elastic modulus can be measured with, for example, a DMA measuring device (a dynamic mechanical analysis device, for example, Rheogel-E4000 made by UBM Co., Ltd.). In this way, the first bonding layer 131 has a small difference between an elastic modulus at a high temperature (for example, 90°C) and an elastic modulus at a room temperature (25°C). With this configuration, even when, for example, the liquid crystal device 101 is used in a high-temperature environment, such as inside a vehicle, it is possible to reduce accumulation of liquid crystal that is a phenomenon in which a relatively large amount of liquid crystal is locally present in the liquid crystal cell 110.

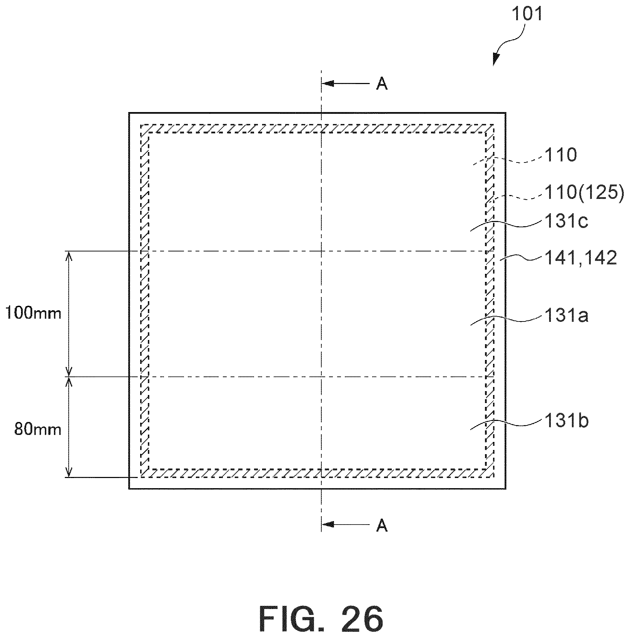

Here, a region that overlaps one-side end of the liquid crystal cell in a plan view is referred to as a first end-side region 131b, and a region adjacent to the first end-side region 131b and extending to the other side opposite to the one side is referred to as an inner region 131a (see Fig. 26). in a use state where a major surface of the liquid crystal device 101 is disposed along a gravity direction (hereinafter, also referred to as disposed in an upright position), it is desirable that the orientation of the liquid crystal device 101 be disposed such that the first end-side region 131b is on the vertically lower side. Thus, in a use state where the liquid crystal device 101 is disposed in an upright position, the "one side" is the "vertically lower side", and the "other side" is the "vertically upper side".

In the present embodiment, in the range overlapping the liquid crystal cell 110, the first end-side region 131b is greater in layer thickness than the inner region 131a. In other words, in the range overlapping the liquid crystal cell 110, the first bonding layer 131 has a part with a large layer thickness and a part with a small layer thickness (hereinafter also referred to as layer thickness difference). When the above-described layer thickness difference is provided for the thickness of the first bonding layer 131, the strength of the first bonding layer 131 in the first end-side region 131b increases, so an ability to maintain the form of the liquid crystal cell 110 is enhanced. Thus, when, for example, the liquid crystal device 101 is used in a high-temperature environment, such as inside a vehicle, it is possible to reduce accumulation of liquid crystal that is a phenomenon in which a large amount of liquid crystal is locally present in the liquid crystal cell 110 near the first end-side region 131b. A preferred numeric value range of the layer thickness difference of the first bonding layer 131 will be described later. In the present embodiment, in the first end-side region 131b, the thickness of a rectangular region located on the lower side as shown in Fig. 26 is greater than the thickness of the rectangular inner region 131a.

The maximum thickness of the first bonding layer 131 may be selected as needed according to the material or the like. Specifically, the maximum thickness of the first bonding layer 131 may be greater than or equal to 30 µm and less than or equal to 1,000 µm. The size of the first bonding layer 131 may be the same as the size of each of the first glass plate 141 and the second glass plate 142 or may be greater than or equal to the size of the liquid crystal cell 110 and less than the size of each of the first glass plate 141 and the second glass plate 142.

The second bonding layer 132 is disposed between the second glass plate 142 and the liquid crystal cell 110. The second bonding layer 132 is a member that joins the second glass plate 142 and the liquid crystal cell 110 with each other. The second bonding layer 132 is greater in size in a plan view than the liquid crystal cell 110. In the present embodiment, the second bonding layer 132 is made of an optical clear adhesive (OCA). An OCA is, for example, a layer manufactured as follows. Initially, a liquid curing adhesive layer composition containing a polymerizable compound is applied onto a mold releasing film of polyethylene terephthalate (PET) or the like, and the composition is cured with, for example, ultraviolet (UV) light, with the result that an OCA sheet is obtained. The curing adhesive layer composition may be an optical pressure-sensitive adhesive, such as acrylic resins, silicone resins, and urethane resins. When the OCA sheet is laminated to an object and then the mold releasing film is peeled and removed, a layer made of the OCA is obtained. The second bonding layer 132 made of an OCA has optical transparency and preferably further has heat resistance up to at least about 120°C, moist heat resistance, and weather resistance.

The thickness of the second bonding layer 132 may be selected as needed according to the material or the like. Specifically, the thickness of the second bonding layer 132 may be greater than or equal to 30 µm and less than or equal to 500 µm and preferably greater than or equal to 50 µm and less than or equal to 200 µm. The size of the second bonding layer 132 may be the same as the size of each of the first glass plate 141 and the second glass plate 142 or may be greater than or equal to the size of the liquid crystal cell 110 and less than the size of each of the first glass plate 141 and the second glass plate 142.

In the present embodiment, the first bonding layer 131 directly joins the first glass plate 141 with the liquid crystal cell 110. The second bonding layer 132 directly joins the second glass plate 142 with the liquid crystal cell 110. The configuration is not limited thereto. For example, a film, such as an ultraviolet (UV) light cut film, may be interposed between the first glass plate 141 and the first bonding layer 131, between the first bonding layer 131 and the liquid crystal cell 110, between the second bonding layer 132 and the liquid crystal cell 110, and/or between the second glass plate 142 and the second bonding layer 132.

The third bonding layer 133 is a layer formed at a thickness part of the liquid crystal cell 110 in a sectional view when the first bonding layer 131 and the second bonding layer 132 each are greater than the liquid crystal cell 110 in a plan view. As shown in Fig. 19, the third bonding layer 133 is disposed between the first bonding layer 131 and the second bonding layer 132 at a part corresponding to around the liquid crystal cell 110. The third bonding layer 133 is joined with the first bonding layer 131 and the second bonding layer 132. The third bonding layer 133 has a frame shape in a plan view. More specifically, the third bonding layer 133 has a hollow rectangular shape. In the present embodiment, the third bonding layer 133 is made of the same material as the material of the first bonding layer 131, that is, the third bonding layer 133 is made of an OCR and integrally formed with the first bonding layer 131. The third bonding layer 133 may have a shape in which part of the frame shape is cut away in a plan view. The third bonding layer 133 may be formed integrally with not the first bonding layer but the second bonding layer 132. With the third bonding layer 133, it is possible to suppress exposure of the side of the liquid crystal cell 110 or part of the side to the side of the liquid crystal device 101 and also to reduce entry of moisture or the like from the side of the liquid crystal device 101 and further enhance the water shut-off capability of the liquid crystal device 101.

The outer circumference of the third bonding layer 133 may coincide with the outer circumference of each of the first glass plate 141 and the second glass plate 142 or may be located outside the outer circumference of each of the first glass plate 141 and the second glass plate 142. The inner circumference of the third bonding layer 133 preferably coincides with the outer circumference of the liquid crystal cell 110. A width Wa (see Fig. 19) of the third bonding layer 133 is preferably greater than 0 mm and less than or equal to about 1/4 of a glass width. Alternatively, as long as the side of the liquid crystal cell 110 or part of the side is not exposed from the side of the liquid crystal device 101, the third bonding layer 133 may be omitted.

The first bonding layer 131, the second bonding layer 132, and the third bonding layer 133 each are a bonding element containing a non-pressure-sensitive adhesive component. Here, the "bonding element containing a non-pressure-sensitive adhesive component" is a bonding element that does not need application of pressure to be appropriately bonded to an adjacent object and that can be moderately bonded to the adjacent object under a normal pressure.

**In** the aspect of the present disclosure, the liquid crystal cell 110 (a light modulating film or a liquid crystal film) is a film capable of controlling the amount of transmitted light by changing an applied voltage. The liquid crystal cell 110 is disposed so as to be held between the first glass plate 141 and the second glass plate 142. The liquid crystal cell 110 has a guest-host liquid crystal layer using a dichroism pigment. The liquid crystal cell 110 is a member that changes the amount of transmitted light by an electric field applied to liquid crystal. The liquid crystal cell 110 includes the film first multilayer body 112, the film second multilayer body 113, and the liquid crystal layer 114 disposed between the first multilayer body 112 and the second multilayer body 113.

As shown in Fig. 19, the first multilayer body 112 is formed by laminating the first substrate 121A, the first transparent electrode 122A, and the first alignment layer 123A. In other words, the first substrate 121A, the first transparent electrode 122A, and the first alignment layer 123A are laminated in this order from the first bonding layer 131 side. The second multilayer body 113 is formed by laminating the second substrate 121B, the second transparent electrode 122B, and the second alignment layer 123B. In other words, the second substrate 121B, the second transparent electrode 122B, and the second alignment layer 123B are laminated in this order from the second bonding layer 132 side.

A plurality of bead spacers 124 is disposed between the first multilayer body 112 and the second multilayer body 113. The liquid crystal layer 114 is disposed by filling liquid crystal in between the plurality of bead spacers 124 between the first multilayer body 112 and the second multilayer body 113. The plurality of bead spacers 124 may be irregularly arranged or regularly arranged.

The liquid crystal cell 110 changes the alignment of the liquid crystal material made of a guest-host liquid crystal composition of the liquid crystal layer 114 by driving the first transparent electrode 122A and the second transparent electrode 122B respectively provided in the first multilayer body 112 and the second multilayer body 113, thus changing the amount of transmitted light.

A flexible film made of a transparent resin may be used as each of the first substrate 121A and the second substrate 121B. It is desirable that a transparent resin film having a low optical anisotropy with a transmittance of 80% or higher at wavelengths in the visible range (greater than or equal to 380 nm and less than or equal to 800 nm) be used as each of the first substrate 121A and the second substrate 121B. Examples of the material of the transparent resin film include cellulose acetate resins, such as cellulose triacetate (TAC), polyester resins, such as polyethylene terephthalate (PET) and polyethylene naphthalate (PEN), polyolefin resins, such as polyethylene (PE), polypropylene (PP), polystyrene, polymethyl pentene, and EVA, vinyl resins, such as polyvinyl chloride and polyvinylidene chloride, acrylic resins, polyurethane resins, and resins, such as polysulfone (PSF), polyether sulfone (PES), polycarbonate (PC), polyether (PE), polyether ketone (PEK), (meth)acrylonitrile, cycloolefin polymer (COP), and cycloolefin copolymer. Particularly, resins, such as polycarbonate, cycloolefin polymer, and polyethylene terephthalate, are preferable as the material of the transparent resin film. The thickness of the transparent resin film to be used as each of the first substrate 121A and the second substrate 121B depends on the material and can be selected as needed within the range in which the transparent resin film has flexibility. The thickness of each of the first substrate 121A and the second substrate 121B may be greater than or equal to 50 µm and less than or equal to 200 µm. In the present embodiment, a polyethylene terephthalate film with a thickness of 125 µm is used as an example of each of the first substrate 121A and the second substrate 121B.

Each of the first transparent electrode 122A and the second transparent electrode 122B is made up of a transparent conductive film laminated on an associated one of the first substrate 121A and the second substrate 121B (transparent resin film). Various transparent electrode materials to be used as transparent resin films of this type may be used as the transparent conductive film. The transparent conductive film may be a transparent metal thin film made of an oxide with a total light transmittance of higher than or equal to 50%. Examples of the transparent conductive film include tin oxides, indium oxides, and zinc oxides.

Tin oxides (SnO₂) include NESA (tin oxide SnO₂), antimony tin oxide (ATO: antimony-doped tin oxide), and fluorine-doped tin oxide. Indium oxides (In₂O₃) include indium oxide, indium tin oxide (ITO), and indium zinc oxide (IZO). Zinc oxides (ZnO) include zinc oxide, aluminum-doped zinc oxide (AZO), and gallium-doped zinc oxide. In the present embodiment, the transparent conductive film that makes up each of the first transparent electrode 122A and the second transparent electrode 122B is made of ITO.

The bead spacers 124 are members that define the thickness (cell gap) of the liquid crystal layer 114. In the present embodiment, spherical bead spacers are used as the bead spacers 124. The diameter of each bead spacer 124 may be greater than or equal to 1 µm and less than or equal to 20 µm and preferably greater than or equal to 3 µm and less than or equal to 15 µm. A configuration made of an inorganic material, such as silica, a configuration made of an organic material, a configuration of a core-shell structure combining these materials, and other configurations are widely used as the bead spacers 124. The bead spacers may have a rod shape, such as a circular cylinder shape, an elliptic cylinder shape, and a polygonal prism shape, other than a spherical shape. The bead spacers 124 are manufactured from transparent members. Where necessary, the color of the bead spacers 124 may be adjusted by applying a colored material.

In the present embodiment, the bead spacers 124 are provided on the second multilayer body 113; however, the configuration is not limited thereto. The bead spacers 124 may be provided on both the first multilayer body 112 and the second multilayer body 113 or may be provided only on the first multilayer body 112. Alternatively, the bead spacers 124 do not necessarily need to be provided. Alternatively, instead of the bead spacers 124 or in addition to the bead spacers 124, columnar spacers may be used.

The first alignment layer 123A and the second alignment layer 123B are members for aligning liquid crystal molecules contained in the liquid crystal layer 114 in a desired direction. The first alignment layer 123A and the second alignment layer 123B each are made up of an optical alignment layer. Various materials to which an optical alignment technique is applicable may be widely used as an optical alignment material applicable to the optical alignment layer. Examples of the optical alignment material include a photolytic material, a photodimerization material, and a photoisomerization material. In the present embodiment, a photodimerization material is used. Examples of the photodimerization material include polymers containing cinnamate, coumarin, benzylidene phthalimidine, benzylidene acetophenone, diphenylacetylene, stilbazole, uracil, quinolinone, maleimide, or cinnamylidene acetic acid derivative. Among these materials, in terms of good alignment control force, polymers containing one or both of cinnamate and coumarin are preferably used.

Instead of the optical alignment layer, a rubbing alignment layer may be used. For the rubbing alignment layer, an alignment layer does not need to be subjected to rubbing process or an alignment layer may be prepared by performing rubbing process and molding micro linear asperities. In the present embodiment, the liquid crystal cell 110 includes the first alignment layer 123A and the second alignment layer 123B; however, the configuration is not limited thereto. The liquid crystal cell 110 does not need to include the first alignment layer 123A or the second alignment layer 123B.

A guest-host liquid crystal composition or a dichroism pigment composition may be widely used for the liquid crystal layer 114. A chiral agent may be contained in a guest-host liquid crystal composition to cause the liquid crystal material to be aligned in a spiral shape in the thickness direction of the liquid crystal layer 114 when the liquid crystal material is aligned horizontally. The sealant 125 annular or frame-shaped in a plan view is disposed so as to surround the liquid crystal layer 114 between the first multilayer body 112 and the second multilayer body 113. With the sealant 125, the first multilayer body 112 and the second multilayer body 113 are held together, and leakage of the liquid crystal material is suppressed. For example, a thermosetting resin or an ultraviolet curing resin, such as epoxy resin and acrylic resin, may be used as the sealant 125.

A nematic liquid crystal compound, a smectic liquid crystal compound, or a cholesteric liquid crystal compound may be used for the liquid crystal of the liquid crystal layer 114 as a liquid crystal compound with no polymerizable functional group. Examples of the nematic liquid crystal compound include biphenyl compounds, terphenyl compounds, phenylcyclohexyl compounds, biphenylcyclohexyl compounds, phenylbicyclohexyl compounds, trifluoro compounds, phenyl benzoate compounds, cyclohexyl benzoate compounds, phenyl benzoate phenyl compounds, bicyclohexyl phenyl carboxylate compounds, azomethine compounds, azo compounds, azoxy compounds, stilbene compounds, tolan compounds, ester compounds, bicyclohexyl compounds, phenylpyrimidine compounds, biphenylpyrimidine compounds, pyrimidine compounds, and biphenyl ethyne compounds.

Examples of the smectic liquid crystal compound include ferroelectric polymer liquid crystal compounds such as polyacrylates, polymethacrylates, polychloroacrylates, polyoxiranes, polysiloxanes, and polyesters. Examples of the cholesteric liquid crystal compound include cholesteryl linoleate, cholesteryl oleate, cellulose, cellulose derivatives, and polypeptide.

A dichroism pigment used in a guest-host type is a high dichroic pigment and has solubility to liquid crystal. Examples of the dichroism pigment include azos, anthraquinones, quinophthalones, perylenes, indigos, thioindigos, merocyanines, styryls, azomethines, and tetrazines.

The first alignment layer 123A and the second alignment layer 123B each are made up of a horizontal alignment layer for which alignment control force for pretilt is set in a certain direction such that the guest-host liquid crystal composition during shading is aligned during no electric field. Thus, the liquid crystal cell 110 is configured to be normally dark. The liquid crystal cell 110 may be configured to be normally clear by setting the configuration during shading is achieved during application of electric field. Here, the normally dark configuration is a structure such that liquid crystal has a minimum transmittance and the screen becomes black when no voltage is applied to the liquid crystal. The normally clear configuration is a structure such that liquid crystal has a maximum transmittance and becomes clear when no voltage is applied.

Because it is desirable that a view or the like seen through the liquid crystal cell 110 be clear during light transmission, a haze value during light transmission is desirably low. Specifically, a haze value of the liquid crystal cell 110 during light transmission is desirably lower than or equal to 30% and more desirably lower than or equal to 15%. To implement such a low haze value, a polymerizable compound is desirably not contained in a liquid crystal mixture.

The example in which the liquid crystal cell 110 of the present embodiment includes the guest-host liquid crystal layer 114 has been described; however, the configuration is not limited thereto. The liquid crystal cell 110 may include the liquid crystal layer 114 of a twisted nematic (TN) type, a vertical alignment (VA) type, an in-plane-switching (IPS) type, or the like without using a dichroism pigment composition. When the liquid crystal cell 110 includes the liquid crystal layer 114 of such a type, the liquid crystal cell 110 can be caused to function as a light modulating film by further providing a linear polarization layer on each of the surfaces of the first substrate 121A and the second substrate 121B.

To provide electrical connection of the first transparent electrode 122A and the second transparent electrode 122B with an outside, a flexible printed wiring board 118 is disposed. The flexible printed wiring board 118 can be, for example, connected so as to be sandwiched between the first transparent electrode 122A and the second transparent electrode 122B in a region in which the first transparent electrode 122A and the second transparent electrode 122B do not sandwich the liquid crystal layer 114. The flexible printed wiring board 118 may be, for example, in a mode in which the flexible printed wiring board 118 is not sandwiched between the first transparent electrode 122A and the second transparent electrode 122B.

In the present embodiment, as described above, the first bonding layer 131 is disposed between the first glass plate 141 and the liquid crystal cell 110, and the second bonding layer 132 is disposed between the second glass plate 142 and the liquid crystal cell 110. The first bonding layer 131 joins the first glass plate 141 and the liquid crystal cell 110 with each other. The second bonding layer 132 joins the second glass plate 142 and the liquid crystal cell 110 with each other. With this configuration, even when the liquid crystal device 101 is put in a high-temperature environment, such as inside a vehicle in midsummer, an OCR and an OCA having high heat resistance do not soften, so the effect of reducing accumulation of liquid crystal that is a phenomenon in which the liquid crystal of the liquid crystal cell 110 is unevenly distributed can be expected.

The liquid crystal device 101 preferably does not include a bonding element containing a pressure-sensitive adhesive component. Examples of the bonding element containing a pressure-sensitive adhesive component include an interlayer made of polyvinyl butyral (PVB) resin or the like. For this reason, no interlayer, such as a PVB resin, is interposed between the first glass plate 141, the liquid crystal cell 110, and the second glass plate 142, and, when an interlayer, such as a PVB resin, softens in a high-temperature condition, it is possible to reduce uneven distribution of the liquid crystal of the liquid crystal cell 110. The "bonding element containing a pressure-sensitive adhesive component" is a bonding element that needs application of pressure (that is, a pressure higher than a normal pressure) to be appropriately bonded to an adjacent object. The normal pressure is an environmental pressure. The normal pressure is ordinarily equal to atmospheric pressure and can be a standard atmospheric pressure.

### (Manufacturing Method for Light Modulating Device)

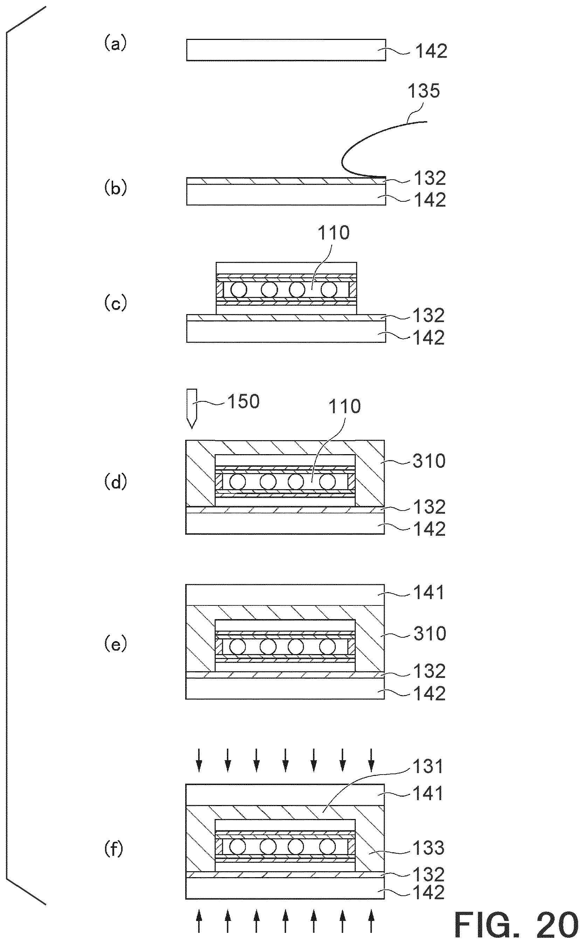

Next, a manufacturing method for the liquid crystal device 101 according to the present embodiment will be described with reference to Fig. 20. Fig. 20 shows sectional views showing a manufacturing method for the liquid crystal device 101 according to the present embodiment.

Initially, as shown in Fig. 20(a), the second glass plate 142 is prepared.

Subsequently, as shown in Fig. 20(b), the second bonding layer 132 made of an OCA is laminated onto the second glass plate 142. In this case, for example, an OCA sheet including the second bonding layer 132 and the mold releasing film 135 is laminated to the second glass plate 142, and then the mold releasing film 135 is peeled and removed, with the result that the second bonding layer 132 is laminated onto the second glass plate 142. The second bonding layer 132 may be laminated to the entire region or part of the region of one side of the second glass plate 142.

Subsequently, the separately manufactured liquid crystal cell 110 is laminated onto the second bonding layer 132, and the liquid crystal cell 110 is laminated to the second glass plate 142 by the second bonding layer 132 (Fig. 20(c)). Known various techniques may be used for the manufacturing method for the liquid crystal cell 110. The second bonding layer 132 made of an OCA is a bonding element containing a non-pressure-sensitive adhesive component as described above. For this reason, the liquid crystal cell 110 and the second glass plate 142 are bonded without application of pressure (that is, under an environmental pressure (ordinarily, under atmospheric pressure)). The second bonding layer 132 is bonded to the liquid crystal cell 110 and the second glass plate 142 at a room temperature (for example, higher than or equal to 10°C and lower than or equal to 30°C).

Subsequently, an uncured liquid first bonding material 310 for forming the first bonding layer 131 and the third bonding layer 133 after being cured is applied onto the liquid crystal cell 110 and the second bonding layer 132 exposed to around the liquid crystal cell 110 (Fig. 20(d)). The first bonding material 310 is an OCR material containing an OCR. The OCR material is a liquid curing adhesive layer composition containing a polymerizable compound and may be a liquid curing adhesive layer composition obtained by mixing a base resin, such as an acrylic resin, a silicone resin, and a urethane resin, with an additive. The first bonding material 310 is applied to the entire region or part of the region of one side of the liquid crystal cell 110 and the second bonding layer 132 exposed to around the liquid crystal cell 110 with an application nozzle 150, such as a dispenser and a slit coater. At this time, by adjusting the amount of application of the first bonding material 310, a region in which the first bonding material 310 is thick and a region in which the first bonding material 310 is thinner than the thick region are formed in a range overlapping the liquid crystal cell 110.

Subsequently, the first glass plate 141 is prepared, the first glass plate 141 is laminated onto the first bonding material 310, and the first glass plate 141 is laminated to the liquid crystal cell 110 and the second bonding layer 132 exposed to around the liquid crystal cell 110 by the first bonding material 310 (Fig. 20(e)). The first bonding material 310 is an OCR and is a bonding element containing a non-pressure-sensitive adhesive component. For this reason, the first glass plate 141 is bonded to the liquid crystal cell 110 and the second bonding layer 132 exposed to around the liquid crystal cell 110 without application of pressure (that is, under an environmental pressure (ordinarily, under atmospheric pressure)). The first glass plate 141 is bonded to the liquid crystal cell 110 and the second glass plate 142 at a room temperature (for example, higher than or equal to 10°C and lower than or equal to 30°C).

After that, the first bonding material 310 is cured by applying ultraviolet (UV) light to the second glass plate 142, the second bonding layer 132, the liquid crystal cell 110, the first bonding material 310, and the first glass plate 141 laminated with one another (Fig. 20(f)). When the first bonding material 310 is cured, the first bonding layer 131 and the third bonding layer 133, made of an OCR, are integrally formed. In this way, the liquid crystal device 101 in which the first glass plate 141, the first bonding layer 131, the liquid crystal cell 110, the second bonding layer 132, the third bonding layer 133, and the second glass plate 142 are laminated with one another is obtained.

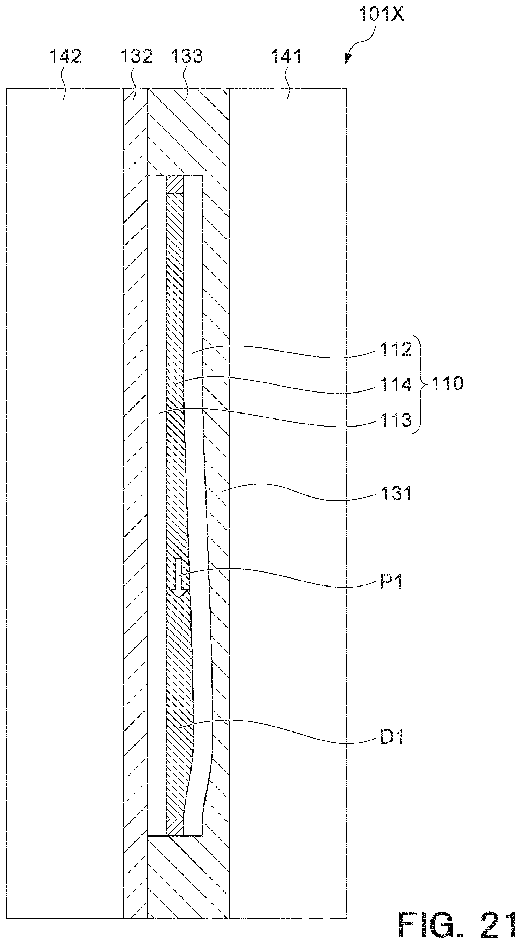

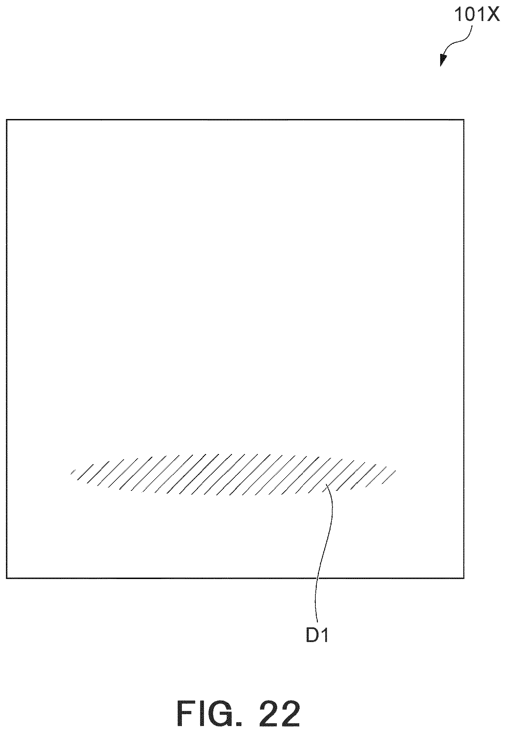

Here, the reason why a layer thickness difference is provided in the first bonding layer 131 and a preferred numeric value range of the layer thickness difference will be described. Fig. 21 is a view showing a state where a liquid crystal device 101X according to a comparative example in which no layer thickness difference is provided in the first bonding layer 131 is disposed in an upright position and exposed to a high-temperature environment. Fig. 22 is a view showing the liquid crystal device 101X of Fig. 21 in a plan view.

The liquid crystal device 101X shown in Fig. 21 has a similar configuration to the liquid crystal device 101 according to the embodiment except that no layer thickness difference is provided in the first bonding layer 131, so the description will be made by assigning the same reference signs as those of the liquid crystal device 101. In Fig. 21, the first transparent electrode 122A, the first alignment layer 123A, the second transparent electrode 122B, the second alignment layer 123B, the bead spacers 124, and the like are not shown. The direction of the arrow P1 in Fig. 21 is the direction of gravity.

As described above, the first bonding layer 131 has a small difference between an elastic modulus at a high temperature (for example, 90°C) and an elastic modulus at a room temperature (25°C). With this configuration, even when, for example, the liquid crystal device 101 is used in a high-temperature environment, such as inside a vehicle, it is possible to reduce accumulation of liquid crystal that is a phenomenon in which a relatively large amount of liquid crystal is locally present in the liquid crystal cell 110. However, in a high-temperature environment, liquid crystal in the liquid crystal cell 110 thermally expands, with the result that a force acts to push the first bonding layer 131 and the second bonding layer 132 that are in contact with the liquid crystal cell 110. At this time, when a force that the first bonding layer 131 and the second bonding layer 132 push back the liquid crystal cell 110 is weak, the shape of the liquid crystal cell 110 cannot be maintained, with the result that the liquid crystal cell 110 freely expands and a cell gap widens. Therefore, liquid crystal unevenness occurs. Particularly, since liquid crystal is attracted by gravity in the direction of the arrow P1, liquid crystal may accumulate on the lower side and accumulation of liquid crystal D1 may occur.

When there is a sufficient force that the first bonding layer 131 and the second bonding layer 132 push back the liquid crystal cell 110 in a high-temperature environment by thermal expansion against a phenomenon in which the accumulation of liquid crystal D1 or the like occurs, the shape of the liquid crystal cell 110 can be maintained. Thus, the cell gap can be retained, so it is possible to reduce liquid crystal unevenness. Here, when the thickness of each of the first bonding layer 131 and the second bonding layer 132 is increased, it is possible to increase a force pushing the liquid crystal cell 110. Since the first bonding layer 131 is formed by using an OCR, a layer thickness can be partially increased by adjusting the amount of application. In the present embodiment, the liquid crystal device in which the thickness of the first bonding layer 131 in the first end-side region 131b is greater than the thickness of the first bonding layer 131 in the inner region 131a is obtained by adjusting an application distribution of the OCR of the first bonding layer 131. Thus, the effect of increasing a force suppressing expansion of the liquid crystal cell 110 to reduce accumulation of liquid crystal D1 that occurs when liquid crystal accumulates on the lower side.

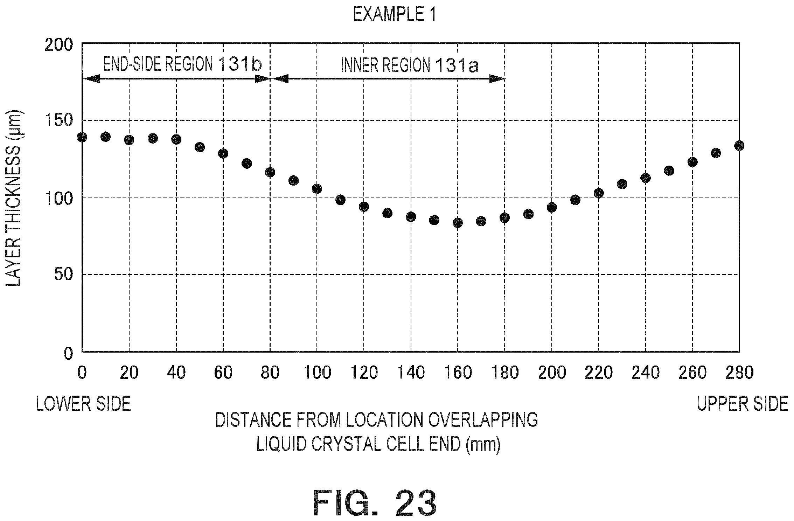

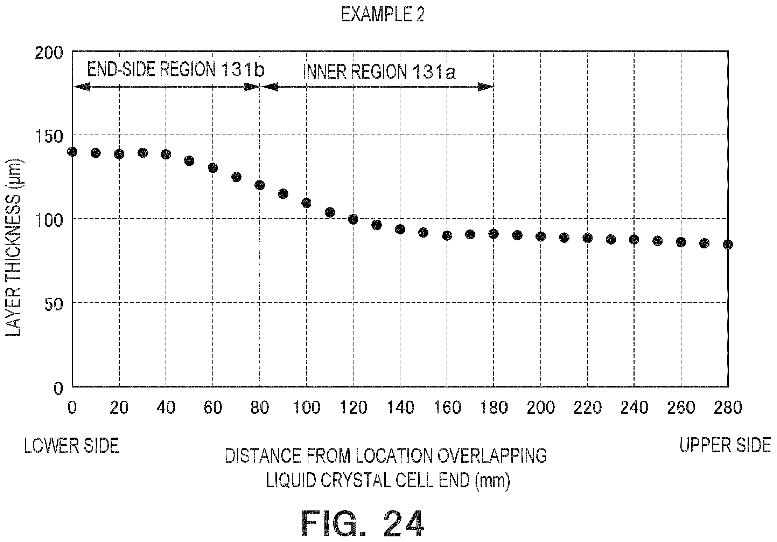

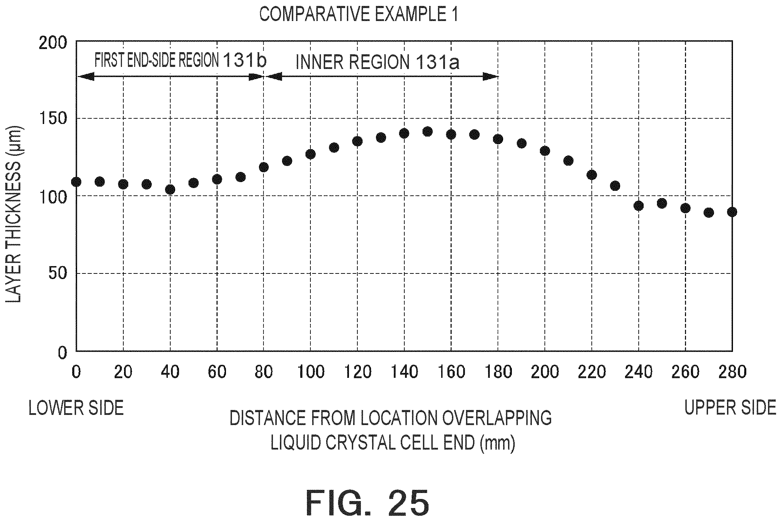

Two liquid crystal devices of Examples according to the present embodiment and one liquid crystal device of Comparative Example were manufactured, and the presence or absence of accumulation of liquid crystal in a high-temperature environment was checked. Fig. 23 is a graph showing a distribution of the layer thickness of the first bonding layer 131 according to Example 1. Fig. 24 is a graph showing a distribution of the layer thickness of the first bonding layer 131 according to Example 2. Fig. 25 is a graph showing a distribution of the layer thickness of the first bonding layer 131 according to Comparative Example 1. Fig. 26 is a view illustrating the first end-side region 131b and the inner region 131a in a plan view.

In the liquid crystal device of any one of Example 1, Example 2, and Comparative Example 1, the liquid crystal cell 110 has a square shape with a size of 280 mm × 280 mm, and the layer configuration is the same as the configuration of the liquid crystal device 101 shown in Fig. 19. Example 1, Example 2, and Comparative Example 1 are different in the distribution of the layer thickness of the first bonding layer 131 from one another, as shown in Fig. 23 to Fig. 25. In any one of Example 1, Example 2, and Comparative Example 1, the layer thickness of the first bonding layer 131 is formed by additionally increasing the thickness of the first bonding layer 131 in an area in which the layer thickness is increased with reference to 100 µm.

In the liquid crystal device of any one of Example 1, Example 2, and Comparative Example 1, the liquid crystal device was disposed in an upright position such that the major surface is oriented along the gravity direction on the assumption of an actual use state, and the presence or absence of accumulation of liquid crystal after being exposed for an hour to a high-temperature environment of 85°C was checked.

The graphs of Fig. 23 to Fig. 25 respectively show the layer thickness distributions of the first bonding layer 131 in Example 1, Example 2, and Comparative Example 1 and each show a layer thickness distribution in a cross section taken along the line A-A in Fig. 26. The abscissa axis of each of the graphs of Fig. 23 to Fig. 25 represents a distance from a location overlapping a lower-side end of the liquid crystal cell 110 (the lower side when the liquid crystal device is disposed in an upright position on the assumption of an actual use state, and the lower side on the drawing sheet of Fig. 26), and the ordinate axis represents a layer thickness of the first bonding layer 131. As shown in these graphs, the first end-side region 131b is used so as to be on the lower side in a use state of the liquid crystal device. The inner region 131a adjacent to the first end-side region 131b and extending to the other side opposite to the one side (lower side) is, in other words, provided so as to extend to the upper side of the liquid crystal cell 110 in a use state of the liquid crystal device. Measurement of the layer thickness was performed without cutting the liquid crystal device with a spectral-interference multilayer film thickness meter SIT10 made by Keyence Corporation.

In Example 1, the lower-side first end-side region 131b is thicker than the inner region 131a. In Example 1, a second end-side region 131c adjacent to the inner region 131a and extending to the upper side that is the other side is also thicker than the inner region 131a. In Example 1, the layer thickness of the first bonding layer 131 is thickest at a location overlapping the lower-side end of the liquid crystal cell 110.

In Example 2, only the lower-side first end-side region 131b is thicker than the inner region 131a. In Example 2, the layer thickness of the first bonding layer 131 is thickest at a location overlapping the lower-side end of the liquid crystal cell 110.

In Comparative Example 1, the inner region 131a is thicker than the first end-side region 131b. In Comparative Example 1, the layer thickness of the first bonding layer 131 is thickest at a location overlapping around the center of the liquid crystal cell 110.

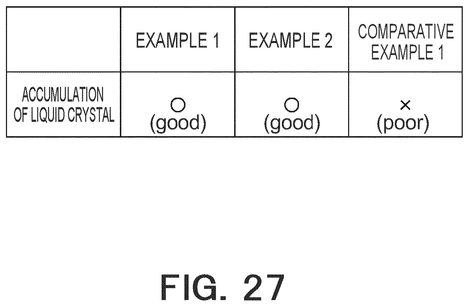

Fig. 27 is a table showing results obtained by evaluating an occurrence situation of accumulation of liquid crystal after each of Example 1, Example 2, and Comparative Example 1 is exposed to the above-described high-temperature environment.

In any of Example 1 and Example 2, accumulation of liquid crystal was not found, and the evaluation was determined as "∘ (good)". In contrast, in Comparative Example 1, accumulation of liquid crystal was found on the lower side, so the evaluation was determined as "× (poor)". From these results, it was confirmed that, when the layer thickness of the lower-side first end-side region 131b of the first bonding layer 131 was thicker than that of the inner region 131a as in the case of Example 1 and Example 2, accumulation of liquid crystal in the liquid crystal cell 110 was able to be suppressed. It appears from Example 1 that, when the layer thickness of the first bonding layer 131 in the lower-side first end-side region 131b is thicker than the layer thickness of the first bonding layer 131 in the inner region 131a, the effect of reducing accumulation of liquid crystal in the liquid crystal cell 110 even when a region of which the layer thickness of the first bonding layer 131 is thicker than that of the inner region 131a is formed other than the lower-side first end-side region 131b. In contrast, it was confirmed that, when the layer thickness of the lower-side first end-side region 131b of the first bonding layer 131 was thicker than that of the inner region 131a as in the case of Comparative Example 1, accumulation of liquid crystal in the liquid crystal cell 110 easily occurred.

Furthermore, to check a desirable amount by which the layer thickness of the first end-side region 131b is made thicker than the layer thickness of the inner region 131a, four-type samples each having a different layer thickness of the first end-side region 131b were manufactured, and a situation of accumulation of liquid crystal after being exposed to a high-temperature environment as in the case of the above-described comparative experiment was evaluated.

Here, where an average layer thickness of the first end-side region 131b in a range in which a distance from a location corresponding to an end of the liquid crystal cell 110, which the first end-side region 131b overlaps, is greater than or equal to 0 mm and less than 80 mm is t1. In addition, where an average layer thickness of the inner region 131a in a range in which the distance from the location corresponding to the end of the liquid crystal cell 110, which the first end-side region 131b overlaps, is greater than or equal to 80 mm and less than 180 mm is t0, and t1/t0 that is the ratio therebetween is an index, a desirable amount by which the first end-side region 131b is made thicker than the inner region 131a was evaluated. Four types of t1/t0, that is, 0.8, 1.2, 1.4, and 2.5, were prepared. A sample for t1/t0 = 0.8 provides a layer thickness distribution of the first bonding layer 131 as in the case of Comparative Example 1. The other samples have a layer thickness distribution of the first bonding layer 131 as in the case of Example 1.

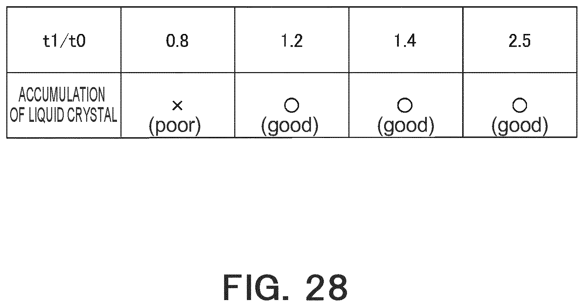

Fig. 28 is a table summarizing results obtained by evaluating the influence of t1/t0 on accumulation of liquid crystal. As shown in Fig. 28, in the sample of t1/t0 = 0.8, accumulation of liquid crystal after being exposed to a high-temperature environment was found, so the evaluation was determined as "× (poor)". In the other samples of which t1/t0 was higher than or equal to 1.2, accumulation of liquid crystal after being exposed to a high-temperature environment was not found, so the evaluation was determined as "∘ (good)". From this result, it is presumable that satisfying the relationship t1/t0 ≥ 1.2 is desirable to reduce accumulation of liquid crystal after being exposed to a high-temperature environment.

When, for example, the liquid crystal device 101 is disposed such that a direction along the plate surface of the liquid crystal device 101 is set to the vertical direction (in an upright position), the lower-side first end-side region 131b of the first bonding layer 131 should be made thicker than the inner region 131a to satisfy t1/t0 ≥ 1.2 to effectively reduce accumulation of liquid crystal on the lower side.

In the above example, when the height in the up and down direction was 280 mm, the range of the first end-side region 131b was set to a range in which the distance from the location corresponding to the end of the liquid crystal cell 110 was greater than or equal to 0 mm and less than 80 mm. When the height in the up and down direction was 280 mm, the range of the inner region 131a was set to a range in which the distance from the location corresponding to the end of the liquid crystal cell 110, which the first end-side region 131b overlaps, was greater than or equal to 80 mm and less than 180 mm. In other words, the range of the inner region 131a was set to a range in which a distance from a location adjacent to the first end-side region 131b was greater than or equal to 0 mm and less than 100 mm. A location where accumulation of liquid crystal occurs remains almost unchanged even when the height in the up and down direction is higher than or lower than 280 mm. Therefore, when the range of the first end-side region 131b and the range of the inner region 131a adopt the above-described dimensional range even in the case of the liquid crystal cell 110 with a different height in the up and down direction, it is possible to effectively reduce accumulation of liquid crystal.

According to the present embodiment, the first bonding layer 131 is disposed between the first glass plate 141 and the liquid crystal cell 110, and the second bonding layer 132 is disposed between the second glass plate 142 and the liquid crystal cell 110. The first bonding layer 131 and the second bonding layer 132 each are a bonding element containing a non-pressure-sensitive adhesive component. With this configuration, in a manufacturing process for the liquid crystal device 101, the liquid crystal cell 110 is not exposed to a high-pressure condition, and the liquid crystal device 101 can be manufactured under a normal pressure. Therefore, a high pressure is not applied to the surface of the liquid crystal cell 110, so it is possible to reduce accumulation of liquid crystal that is a phenomenon in which the liquid crystal of the liquid crystal cell 110 is locally unevenly distributed. As a result, it is possible to enhance the quality and external appearance of the liquid crystal device 101.

According to the present embodiment, the first bonding layer 131 is made of an OCR with high heat resistance, and the second bonding layer 132 is made of an OCA with high heat resistance. With this configuration, even when, for example, the liquid crystal device 101 is put in a high-temperature environment, such as inside a vehicle in midsummer, an OCA and an OCR having high heat resistance do not soften, so it is possible to reduce accumulation of liquid crystal that is a phenomenon in which a relatively large amount of liquid crystal is locally present in the liquid crystal cell 110. When the liquid crystal device 101 is disposed in an upright position on a vertical wall surface or the like in a high-temperature environment, it is possible to suppress falling of part of the liquid crystal of the liquid crystal layer 114 downward in the vertical direction due to gravity and distribute the amount of liquid crystal of the liquid crystal layer 114 uniform in the plane of the liquid crystal device 101. As a result, it is possible to suppress a phenomenon in which unevenness occurs in the external appearance of the liquid crystal device 101 (gravity unevenness) and enhance the quality and external appearance of the liquid crystal device 101.

Furthermore, according to the present embodiment, an application distribution of the OCR of the first bonding layer 131 was adjusted, and the lower-side first end-side region 131b of the first bonding layer 131 was made thicker than the inner region 131a. With this configuration, even when, for example, the liquid crystal device 101 is put in a high-temperature environment, such as inside a vehicle in midsummer, it is possible to suppress widening of the cell gap of the liquid crystal cell 110 due to expansion of liquid crystal, with the result that it is possible to effectively reduce accumulation of liquid crystal. When the liquid crystal device 101 is disposed in an upright position on a vertical wall surface or the like in a high-temperature environment, it is possible to suppress falling of part of the liquid crystal of the liquid crystal layer 114 downward in the vertical direction due to gravity and distribute the amount of liquid crystal of the liquid crystal layer 114 uniform in the plane of the liquid crystal device 101. Particularly, when t1/t0 ≥ 1.2, it is possible to further effectively exercise the above-described effect. As a result, it is possible to reduce accumulation of liquid crystal in the liquid crystal device 101 exposed to a high-temperature environment and enhance the quality and external appearance of the liquid crystal device 101.

### (Modified Configurations)

The configuration is not limited to the embodiments described above, and various alterations and changes are possible. The scope of the present embodiment also encompasses them.
(1) In the present embodiment, the example in which each of the first bonding layer 131 and the third bonding layer 133 is an OCR and the second bonding layer 132 is an OCA has been described. The configuration is not limited thereto. For example, the first bonding layer, the second bonding layer, and the third bonding layer each may be an OCR. In this case, the layer thickness of the second bonding layer may also be configured with a layer thickness difference, and the effect of reducing accumulation of liquid crystal can be enhanced.
(2) In the present embodiment, the example in which the liquid crystal cell 110 is a light modulating cell that adjusts the transmittance of light has been described. The configuration is not limited thereto. The present disclosure is suitably applicable to a liquid crystal device including a liquid crystal cell that displays information.
(3) In the present embodiment, the example in which the liquid crystal device 101 has a square shape in a plan view has been described. The configuration is not limited thereto. For example, the liquid crystal device 101 may have a rectangular shape in a plan view or may be a parallelogram shape, a trapezoidal shape, or the like. The shape in a plan view may be modified as needed.
(4) In the present embodiment, the example in which the liquid crystal cell 110 has a square shape in a plan view has been described. The configuration is not limited thereto. For example, the liquid crystal cell may have a rectangular shape in a plan view or may have a parallelogram shape, a trapezoidal shape, or the like. The shape in a plan view may be modified as needed.

### (Fifth Embodiment)

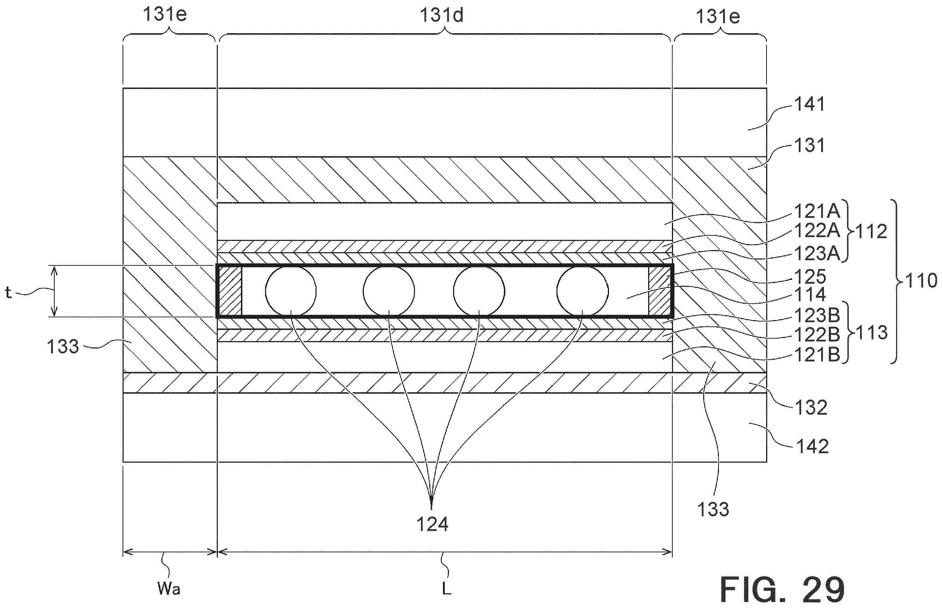

Next, a fifth embodiment will be described with reference to Fig. 29 to Fig. 35. Fig. 29 to Fig. 35 are views showing the fifth embodiment. In the fifth embodiment shown in Fig. 29 to Fig. 35, mainly, the configurations of the first bonding layer and the liquid crystal layer are different. In Fig. 29 to Fig. 35, like reference signs are assigned to the same portions as those of the fourth embodiment shown in Fig. 18 to Fig. 28, and the detailed description is omitted.

As shown in Fig. 29, the liquid crystal device 101 (laminated glass) according to the present embodiment includes the first glass plate 141, the first bonding layer 131, the liquid crystal cell 110, the second bonding layer 132, and the second glass plate 142. The first glass plate 141, the first bonding layer 131, the liquid crystal cell 110, the second bonding layer 132, and the second glass plate 142 are laminated in this order. The third bonding layer 133 is disposed at an outer circumferential part of the liquid crystal cell 110.

In the present embodiment, the first bonding layer 131 is disposed between the first glass plate 141 and the liquid crystal cell 110. The first bonding layer 131 is a member that joins the first glass plate 141 and the liquid crystal cell 110 with each other. The first bonding layer 131 is greater in size in a plan view than the liquid crystal cell 110. In the present embodiment, the first bonding layer 131 is made of an optical clear resin (OCR).

As shown in Fig. 29, in the present embodiment, a region of the first bonding layer 131, overlapping the liquid crystal cell 110, is referred to as central region 131d, and a region of the first bonding layer 131, disposed outside the liquid crystal cell 110, is referred to as peripheral region 131e. The thickness of the central region 131d of the first bonding layer 131 needs to be set to an appropriate thickness. This point will be described later. The size of the first bonding layer 131 may be the same as the size of each of the first glass plate 141 and the second glass plate 142 or may be greater than or equal to the size of the liquid crystal cell 110 and less than the size of each of the first glass plate 141 and the second glass plate 142.

The second bonding layer 132 is disposed between the second glass plate 142 and the liquid crystal cell 110. The second bonding layer 132 is a member that joins the second glass plate 142 and the liquid crystal cell 110 with each other. The second bonding layer 132 is greater in size in a plan view than the liquid crystal cell 110. In the present embodiment, the second bonding layer 132 is made of an optical clear adhesive (OCA).

In the present embodiment, the first bonding layer 131 directly joins the first glass plate 141 with the liquid crystal cell 110. The second bonding layer 132 directly joins the second glass plate 142 with the liquid crystal cell 110. The configuration is not limited thereto. For example, a film, such as an ultraviolet (UV) light cut film, may be interposed at least one of a location between the first glass plate 141 and the liquid crystal cell 110 and a location between the second glass plate 142 and the liquid crystal cell 110.

The outer circumference of the third bonding layer 133 may coincide with the outer circumference of each of the first glass plate 141 and the second glass plate 142 or may be located outside the outer circumference of each of the first glass plate 141 and the second glass plate 142. The inner circumference of the third bonding layer 133 preferably coincides with the outer circumference of the liquid crystal cell 110. The details of the peripheral region 131e of the first bonding layer 131 and a width Wa (see Fig. 29) of the third bonding layer 133 will be described later.

The first bonding layer 131, the second bonding layer 132, and the third bonding layer 133 each are a bonding element containing a non-pressure-sensitive adhesive component. Here, the "bonding element containing a non-pressure-sensitive adhesive component" is a bonding element that does not need application of pressure to be appropriately bonded to an adjacent object and that can be moderately bonded to the adjacent object under a normal pressure.

In the present embodiment, the liquid crystal layer 114 has the sealant 125 annular or frame-shaped in a plan view such that the sealant 125 surrounds liquid crystal at the outer circumferential end between the first multilayer body 112 and the second multilayer body 113 of the liquid crystal cell 110. With the sealant 125, the first multilayer body 112 and the second multilayer body 113 are held together, and leakage of the liquid crystal material is suppressed.

The viscosity of liquid crystal used for the liquid crystal layer 114 preferably ranges from 40 cp to 110 cp at a room temperature and ranges from 4 cp to 11 cp at 80°C, and more preferably ranges from 50 cp to 100 cp at a room temperature and ranges from 5 cp to 10 cp at 80°C. The viscosity of liquid crystal should be measured at a share rate of 10 sec⁻¹ to 1000 sec⁻¹ by using a parallel plate with a rheometer HR2 as a measuring device.

The liquid crystal device 101 according to the present embodiment can be manufactured as in the case of the fourth embodiment (see Fig. 20).

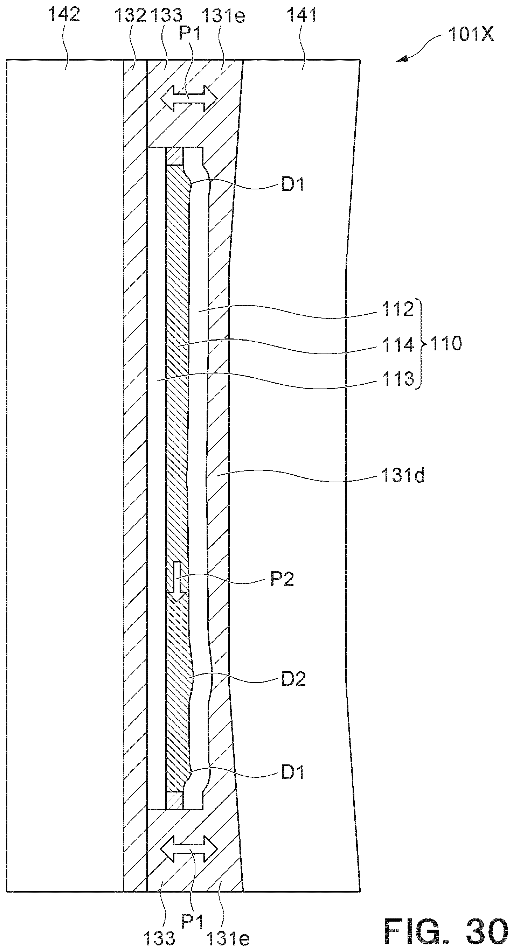

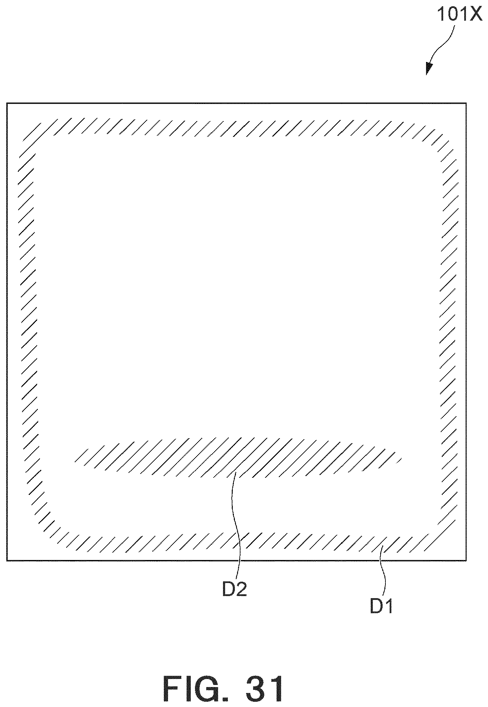

Here, accumulation of liquid crystal that tends to occur in a state where the liquid crystal device is exposed to a high-temperature environment will be described. Fig. 30 is a view showing a state where the liquid crystal device 101X according to the comparative example in which the thickness of the central region 131d is not set to an appropriate thickness is disposed in an upright position and exposed to a high-temperature environment. Fig. 31 is a view showing the liquid crystal device 101X of Fig. 30 in a plan view.

The liquid crystal device 101X shown in Fig. 30 has a similar configuration to the liquid crystal device 101 according to the present embodiment except that the thickness of the central region 131d is not set to an appropriate thickness and is thinner than the thickness of the central region 131d according to the present embodiment, so the description will be made by assigning the same reference signs as those of the liquid crystal device 101. In Fig. 30, the first transparent electrode 122A, the first alignment layer 123A, the second transparent electrode 122B, the second alignment layer 123B, the bead spacers 124, and the like are not shown. The direction of an arrow P2 in Fig. 30 is the direction of gravity. A state where the liquid crystal device is disposed in an upright position is a state where a major surface of the liquid crystal device is disposed along the gravity direction.

As described above, since there is a small difference between the elastic modulus at a high temperature (for example, 90°C) and the elastic modulus at a room temperature (25°C) of the first bonding layer 131, even when, for example, the liquid crystal device 101 is used in a high-temperature environment, such as inside a vehicle, it is possible to reduce accumulation of liquid crystal that is a phenomenon in which a relatively large amount of liquid crystal is locally present in the liquid crystal cell 110. However, if there is the third bonding layer 133 that is a thick wall part in the peripheral region 131e of the first bonding layer 131 like the liquid crystal device 101X according to the comparative example, an expanding force increases like the arrow P1 due to thermal expansion at this part. Due to the expanding force in the peripheral region 131e, the first substrate 121A is pulled in a direction in which the gap of the liquid crystal layer 114 widens near the peripheral region 131e, with the result that liquid crystal may accumulate in this area to cause accumulation of liquid crystal D1.

In addition, due to an expanding force like the arrow P1 also in the overall liquid crystal layer 114, the first substrate 121A is pulled in a direction in which the gap of the liquid crystal layer 114 widens, and liquid crystal is attracted by gravity in the direction of the arrow P2, with the result that liquid crystal may accumulate on the lower side to cause accumulation of liquid crystal D2.

In contrast, in the present embodiment, accumulation of liquid crystal is reduced with three-type configurations shown as Configuration 1 to Configuration 3 below.

### (Configuration 1)

When there is a sufficient force that the first bonding layer 131 pushes back the liquid crystal cell 110 by thermal expansion in a high-temperature environment against a phenomenon in which accumulation of liquid crystal D1, D2, or the like occurs, the shape of the liquid crystal cell 110 can be maintained. The force pushing back the liquid crystal cell 110 increases as the thickness of the first bonding layer 131 increases. A phenomenon in which accumulation of liquid crystal D1, D2, or the like occurs receives the influence depending on the amount of the liquid crystal layer 114 of the liquid crystal cell 110. Since the amount of the liquid crystal layer 114 of the liquid crystal cell 110 is proportional to the sectional area of the liquid crystal layer 114, it is presumable that the thickness of the first bonding layer 131 needed to reduce accumulation of liquid crystal changes according to the sectional area of the liquid crystal layer 114. The presence or absence of accumulation of liquid crystal was evaluated while the thickness of the first bonding layer 131 was changed for each of a plurality of liquid crystal cells 110 with different sectional areas of the liquid crystal layer 114. In this evaluation, the plate surface was disposed in an upright position along the gravity direction on the assumption of an actual use state, and the presence or absence of accumulation of liquid crystal after being exposed for an hour to a high-temperature environment of 85°C was checked.

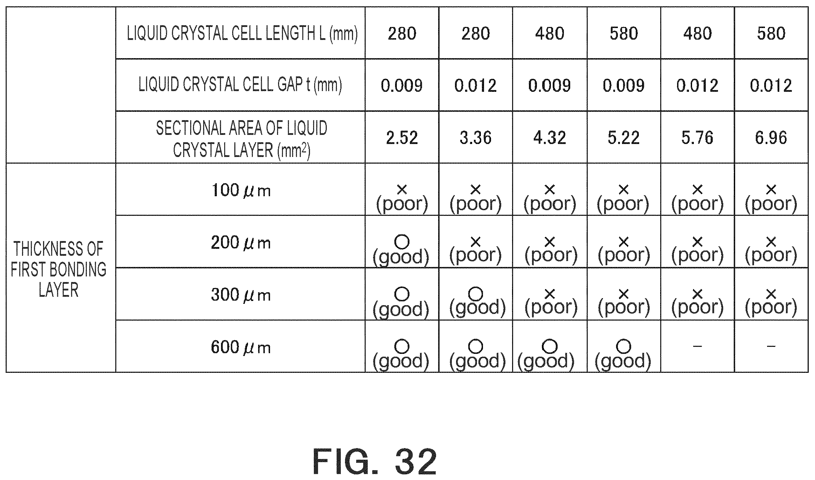

Fig. 32 is a table showing results obtained by evaluating accumulation of liquid crystal while the sectional area of the liquid crystal layer 114 and the thickness of the first bonding layer 131 are changed. The thickness of the first bonding layer 131 in Fig. 32 is a thickness in a range overlapping the liquid crystal cell 110. A liquid crystal cell gap t in Fig. 32 is a gap between the first multilayer body 112 and the second multilayer body 113, shown in Fig. 29. A liquid crystal cell length L in Fig. 32 is a length of the liquid crystal cell 110 shown in Fig. 29 and is a length of the liquid crystal cell 110 in the vertical direction when the liquid crystal device 101 is disposed in an upright position along the gravity direction on the assumption of an actual use state.

Here, the sectional area of the liquid crystal layer 114 can be obtained by t × L and is the area of the range surrounded by the wide line in Fig. 29. As described above, the liquid crystal layer 114 has the sealant 125. Thus, the sectional area of the liquid crystal layer 114 according to the present disclosure includes not only the sectional area of a part filled with liquid crystal but also the sectional area of the sealant 125. Because the surface shape of the liquid crystal device 101 has a curved surface, when the surface shape of the liquid crystal cell 110 also has a curved surface, the length L of the liquid crystal cell 110 is a length of the liquid crystal cell 110 in the vertical direction along the curved surface of the liquid crystal cell 110. The length L of the liquid crystal cell 110 is the length of a straight line longest among straight lines each connecting two opposite sides of the liquid crystal cell 110 while being perpendicular to at least one of the two opposite sides. In other words, the sectional area of the liquid crystal layer 114 used for evaluation is assumed as a cross section of which the sectional area is the largest among cross sections taken along the vertical direction when the liquid crystal device 101 is disposed in an upright position such that the plate surface is aligned along the gravity direction on the assumption of an actual use state. In other words, the cross section of which, when the liquid crystal cell gap t is uniform, the liquid crystal cell length L is the greatest is assumed. The coefficient of linear expansion of the first bonding layer 131 used in evaluation of Fig. 32 is 30.6 (E⁻⁵/°C), and the width Wa of the peripheral region of the first bonding layer 131 disposed outside the liquid crystal cell 110 and the width Wa of the third bonding layer 133 each are greater than or equal to 10 mm.

In Fig. 32, the evaluation × (poor) indicates that accumulation of liquid crystal has occurred, and the evaluation ∘ (good) indicates that accumulation of liquid crystal has not occurred. As is apparent from Fig. 32, when the sectional area of the liquid crystal layer 114 changes, the minimum thickness of the first bonding layer 131 needed to reduce accumulation of liquid crystal also changes, and there is a certain relationship. For each sectional area of the liquid crystal cell 110, the minimum thickness of the first bonding layer 131 needed to reduce accumulation of liquid crystal was picked up, and a relationship therebetween was graphed and analyzed.

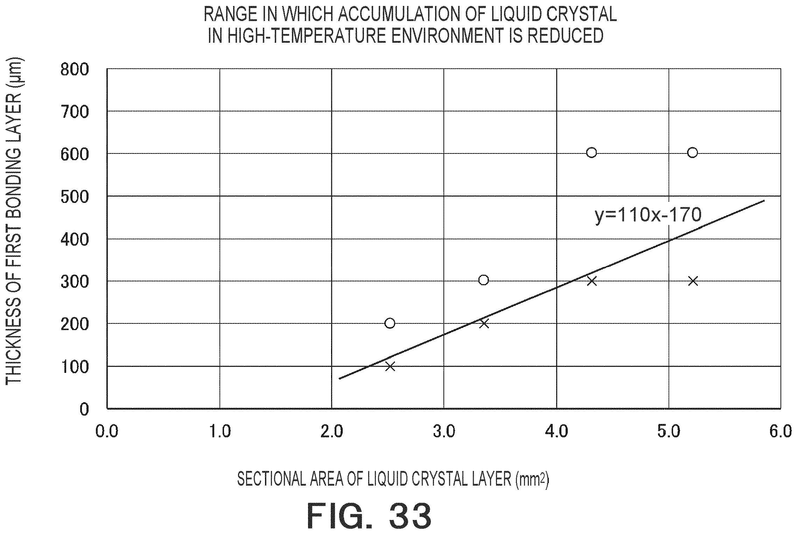

Fig. 33 is a graph showing the sectional area of the liquid crystal layer 114 and a range in which accumulation of liquid crystal is reduced. In Fig. 33, the sectional area of the liquid crystal layer 114 is X, and the thickness of the first bonding layer 131 in a range overlapping the liquid crystal cell 110 is Y. In Fig. 33, data around a boundary between a range in which accumulation of liquid crystal can be reduced and a range in which accumulation of liquid crystal cannot be reduced from among pieces of data in Fig. 32 are extracted and plotted. In Fig. 33, the plots "∘" represent data at which accumulation of liquid crystal can be reduced, the plots "×" are data at which accumulation of liquid crystal cannot be reduced. The straight line shown in the graph can be expressed by the following expression. $Y = 110 X - 170$

Therefore, when the thickness of the first bonding layer 131 is set to greater than or equal to the thickness Y of the first bonding layer 131, obtained by the above expression, accumulation of liquid crystal when exposed to a high-temperature environment can be reduced. Thus, the sectional area X of the liquid crystal layer 114 and the thickness Y of the first bonding layer 131 preferably satisfy the following relationship. $Y \geq 110 X - 170$

### (Configuration 2)

When the coefficient of linear expansion of an OCR used for the first bonding layer 131 varies, it is presumable that a force that the first bonding layer 131 pushes back the liquid crystal cell 110 in a high-temperature environment varies. The presence or absence of accumulation of liquid crystal in a high-temperature environment was evaluated by using a plurality of samples each having a different coefficient of linear expansion of an OCR used for the first bonding layer 131. Two types 100 µm and 300 µm were used as the layer thickness of the first bonding layer 131. In this evaluation, the plate surface was disposed in an upright position along the gravity direction on the assumption of an actual use state, and the presence or absence of accumulation of liquid crystal after being exposed for an hour to a high-temperature environment of 85°C was checked. The sectional view of the liquid crystal layer 114 used in this evaluation is 3.36 mm², and the width Wa of the peripheral region 131e of the first bonding layer 131 and the width Wa of the third bonding layer 133 each are 10 mm.

A thermo-mechanical analysis (TMA) was used to measure an average coefficient of linear expansion. Measurement conditions are as follows.
Measuring device: Small constant load thermal expansion system made by Rigaku Corporation
Measurement mode: Constant temperature rising measurement
Measurement temperature range: 25°C to 85°C
Temperature rising speed: 2°C/min
Measurement atmosphere: In nitrogen
Reference: Quartz glass
Load: 0.5 g (compressive load)
Number of measurements n: 1
Measurement direction: Thickness direction of specimen under test

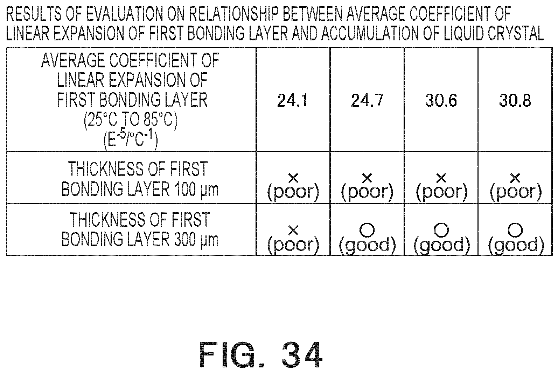

Fig. 34 is a table showing results obtained by evaluating whether there occurs accumulation of liquid crystal in a high-temperature environment while an average coefficient of linear expansion of an OCR used for the first bonding layer 131 is changed. In Fig. 34, the evaluation × (poor) indicates that accumulation of liquid crystal has occurred, and the evaluation ∘ (good) indicates that accumulation of liquid crystal has not occurred.

In the evaluation of Fig. 32 above, the average coefficient of linear expansion of the OCR used for the first bonding layer 131 was 30.6(E⁻⁵/°C), so the evaluation was ∘ (good) when the thickness of the first bonding layer 131 was 300 µm. However, it appears from the evaluation results of Fig. 34 that, even when the above condition Y ≥ 110X - 170 is satisfied, accumulation of liquid crystal cannot be reduced when the average coefficient of linear expansion is too small. As is apparent from Fig. 34, the average coefficient of linear expansion of the OCR used for the first bonding layer 131 in the range from 25°C to 85°C is desirably higher than or equal to 24.7(E⁻⁵/°C) to reduce accumulation of liquid crystal.

### (Configuration 3)

As has been described above with reference to Fig. 30, a significant factor of accumulation of liquid crystal is that the third bonding layer 133 that is a thick wall part is present in the peripheral region 131e of the first bonding layer 131. Therefore, when the way of expansion in the peripheral region 131e is changed, there is a possibility that accumulation of liquid crystal can be controlled. Accumulation of liquid crystal was evaluated while the width Wa of the peripheral region 131e of the first bonding layer 131 and the width Wa of the third bonding layer 133 were changed. The evaluation was conducted under conditions similar to those in evaluation of Fig. 34 above except that the average coefficient of linear expansion of the OCR used for the first bonding layer 131 was 30.6 (E⁻⁵/°C) and the thickness of the first bonding layer 131 was set to 300 µm.

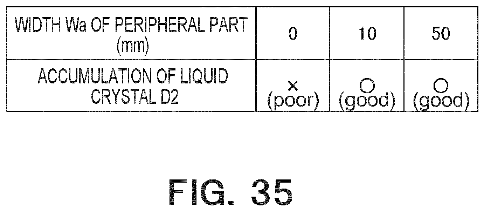

Fig. 35 is a table showing results obtained by evaluating accumulation of liquid crystal D2 while the width Wa of the peripheral region 131e of the first bonding layer 131 and the width Wa of the third bonding layer 133 are changed. In Fig. 35, the evaluation × (poor) indicates that accumulation of liquid crystal D2 has occurred, and the evaluation ∘ (good) indicates that accumulation of liquid crystal D1, D2 has not occurred. The evaluation in Fig. 35 is an evaluation focusing on accumulation of liquid crystal D2, shown in Fig. 31.

From the results of Fig. 35, to reduce accumulation of liquid crystal that occurs inside the liquid crystal cell 110 like accumulation of liquid crystal D2, the width Wa of the peripheral region 131e of the first bonding layer 131 and the width Wa of the third bonding layer 133 each are desirably greater than or equal to 10 mm. When the width Wa of the peripheral region 131e of the first bonding layer 131 and the width Wa of the third bonding layer 133 each are widened, the expansion force of each of the first bonding layer 131 and the third bonding layer 133 at the outer circumference of the liquid crystal cell 110 increases. Thus, it is presumable that warpage of each of the first glass plate 141 and the second glass plate 142 increases and a force pushing the center side of the liquid crystal cell 110 increases to reduce accumulation of liquid crystal D2. From the results of Fig. 35, when importance is placed on reducing accumulation of liquid crystal D2, the width Wa of the peripheral region 131e of the first bonding layer 131 and the width Wa of the third bonding layer 133 each are desirably greater than or equal to 10 mm.

According to the present embodiment, the first bonding layer 131 is disposed between the first glass plate 141 and the liquid crystal cell 110, and the second bonding layer 132 is disposed between the second glass plate 142 and the liquid crystal cell 110. The first bonding layer 131 and the second bonding layer 132 each are a bonding element containing a non-pressure-sensitive adhesive component. With this configuration, in a manufacturing process for the liquid crystal device 101, the liquid crystal cell 110 is not exposed to a high-pressure condition, and the liquid crystal device 101 can be manufactured under a normal pressure. Therefore, a high pressure is not applied to the surface of the liquid crystal cell 110, so it is possible to reduce accumulation of liquid crystal that is a phenomenon in which the liquid crystal of the liquid crystal cell 110 is locally unevenly distributed. As a result, it is possible to enhance the quality and external appearance of the liquid crystal device 101.

According to the present embodiment, the first bonding layer 131 is made of an OCR with high heat resistance, and the second bonding layer 132 is made of an OCA with high heat resistance. With this configuration, even when, for example, the liquid crystal device 101 is put in a high-temperature environment, such as inside a vehicle in midsummer, an OCA and an OCR having high heat resistance do not soften, so it is possible to reduce accumulation of liquid crystal that is a phenomenon in which a relatively large amount of liquid crystal is locally present in the liquid crystal cell 110. When the liquid crystal device 101 is disposed in an upright position on a vertical wall surface or the like in a high-temperature environment, it is possible to suppress falling of part of the liquid crystal of the liquid crystal layer 114 downward in the vertical direction due to gravity and distribute the amount of liquid crystal of the liquid crystal layer 114 uniform in the plane of the liquid crystal device 101. As a result, it is possible to suppress a phenomenon in which unevenness occurs in the external appearance of the liquid crystal device 101 (gravity unevenness) and enhance the quality and external appearance of the liquid crystal device 101.

Furthermore, according to the present embodiment, when the sectional area X of the liquid crystal layer 114 and the thickness Y of the first bonding layer 131 satisfy the relationship Y ≥ 110X - 170, it is possible to further reliably reduce accumulation of liquid crystal. When design is performed so as to satisfy the above relationship, it is possible to significantly reduce a development time like searching for appropriate conditions by repeating making a prototype and conducting an experiment. When the average coefficient of linear expansion of the OCR used for the first bonding layer 131 is set to an appropriate value and, in addition, the width Wa of the peripheral region 131e of the first bonding layer 131 and the width Wa of the third bonding layer 133 each are set to an appropriate size, it is possible to further effectively reduce accumulation of liquid crystal. As a result, it is possible to reduce accumulation of liquid crystal in the liquid crystal device 101 exposed to a high-temperature environment and enhance the quality and external appearance of the liquid crystal device 101.

### (Modified Configurations)

The configuration is not limited to the embodiments described above, and various alterations and changes are possible. The scope of the present embodiment also encompasses them.
(1) In the present embodiment, the example in which each of the first bonding layer 131 and the third bonding layer 133 is an OCR and the second bonding layer 132 is an OCA has been described. The configuration is not limited thereto. For example, the first bonding layer, the second bonding layer, and the third bonding layer each may be an OCR.
(2) In the present embodiment, the example in which the liquid crystal cell 110 is a light modulating cell that adjusts the transmittance of light has been described. The configuration is not limited thereto. The present disclosure is suitably applicable to a liquid crystal device including a liquid crystal cell that displays information.
(3) In the present embodiment, the example in which the liquid crystal device 101 has a square shape in a plan view has been described. The configuration is not limited thereto. For example, the liquid crystal device 101 may have a rectangular shape in a plan view or may be a parallelogram shape, a trapezoidal shape, or the like. The shape in a plan view may be modified as needed.

### (Sixth Embodiment)

Next, a sixth embodiment will be described with reference to Fig. 36 to Fig. 40. Fig. 36 to Fig. 40 are views showing the sixth embodiment which is according to the claimed subject-matter. In the sixth embodiment shown in Fig. 36 to Fig. 40, mainly, the configuration of the first bonding layer is different. In Fig. 36 to Fig. 40, like reference signs are assigned to the same portions as those of the fourth embodiment shown in Fig. 18 to Fig. 28, and the detailed description is omitted.

Fig. 36 is an exploded perspective view showing the configuration of the liquid crystal device 101 according to the present embodiment. As shown in Fig. 36, the liquid crystal device 101 according to the present embodiment includes the first glass plate 141, the first bonding layer 131, the liquid crystal cell 110, the second bonding layer 132, and the second glass plate 142, which are laminated in this order in the thickness direction.

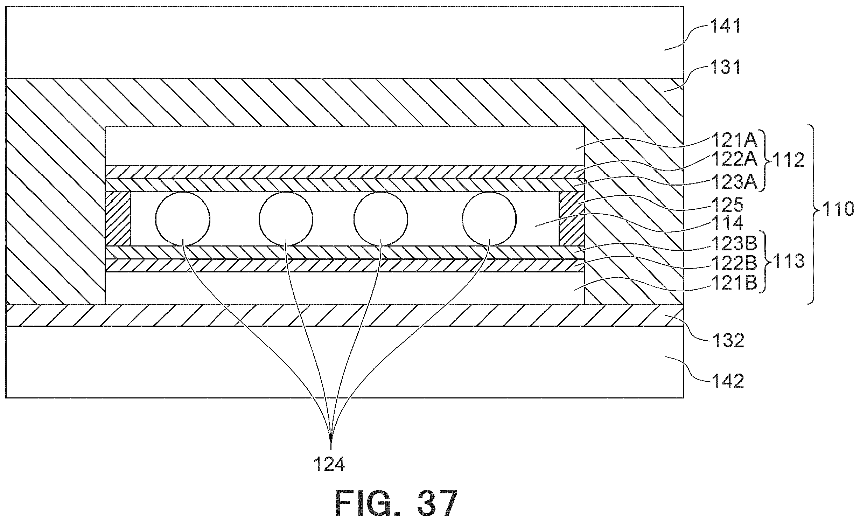

As shown in Fig. 37, in a sectional view, the first bonding layer 131 is formed not only in a region overlapping the liquid crystal cell 110 but also around the liquid crystal cell 110 and connected to the second bonding layer 132 at this part. When the first bonding layer 131 is formed in this way, it is possible to suppress exposure of the side of the liquid crystal cell 110 or part of the side to the side of the liquid crystal device 101 and also to reduce entry of moisture or the like from the side of the liquid crystal device 101 and further enhance the water shut-off capability of the liquid crystal device 101.

In the present embodiment, the first bonding layer 131 is made of an optical clear resin (OCR). The OCR is a cured material obtained by curing a liquid curing adhesive layer composition containing a polymerizable compound. Specifically, the OCR is the one obtained by applying a liquid resin that is a mixture of a base resin, such as an acrylic resin, a silicone resin, and a urethane resin, with an additive, onto an object and curing the resin with ultraviolet (UV) light. The first bonding layer 131 has optical transparency and preferably further has heat resistance up to at least about 120°C, moist heat resistance, and weather resistance.

From the viewpoint of reducing liquid crystal unevenness that occurs when the liquid crystal device 101 is exposed to a high-temperature environment, a difference between the storage elastic modulus of the first bonding layer 131 in a room-temperature (25°C) environment and the storage elastic modulus of the first bonding layer 131 in a high-temperature (for example, 85°C) environment is preferably small.

Specifically, the storage elastic modulus of the first bonding layer 131 in a room-temperature (25°C) environment is defined as E1, the storage elastic modulus in a high-temperature (85°C) environment is defined as E2, and the ratio of these storage elastic moduli is defined as E2/E1. At this time, the amount of change (the rate of change) V(%) from the storage elastic modulus in a room-temperature environment to the storage elastic modulus in a high-temperature environment is expressed by the following expression. $V = 1 - \left(E2/E1\right)$ (1)

The amount of change V(%) in storage elastic modulus, obtained from the expression (1), is higher than or equal to 0% and lower than or equal to 30%. Furthermore, from the viewpoint of reducing liquid crystal unevenness that occurs when the liquid crystal device 101 is exposed to a high-temperature environment, the amount of change V is more preferably higher than or equal to 2.7% and lower than or equal to 22.7%.

The storage elastic modulus of the first bonding layer 131 can be measured with, for example, a DMA measuring device (a dynamic mechanical analysis device, for example, Rheogel-E4000 made by UBM Co., Ltd.). The amount of change V in the storage elastic modulus of the first bonding layer 131 will be described in detail later.

Next, from the viewpoint of reducing liquid crystal unevenness, the cure shrinkage of the first bonding layer 131 is desirably lower than or equal to 2.3%. A cure shrinkage (%) can be obtained by 1 - (Specific gravity of liquid resin)/(Specific gravity of cured resin). A specific gravity can be measured with a hydrometer. The cure shrinkage of the first bonding layer 131 will be described in detail later.

The thickness of the first bonding layer 131 may be selected as needed according to the material or the like. Specifically, the thickness of the first bonding layer 131 in a region overlapping the liquid crystal cell 110 in a plan view may be greater than or equal to 30 µm and less than or equal to 1000 µm. The size of the first bonding layer 131 may be the same as the size of each of the first glass plate 141 and the second glass plate 142 or may be greater than or equal to the size of the liquid crystal cell 110 and less than the size of each of the first glass plate 141 and the second glass plate 142.

The second bonding layer 132 is disposed between the second glass plate 142 and the liquid crystal cell 110. The second bonding layer 132 is a member that joins the second glass plate 142 and the liquid crystal cell 110 with each other. The second bonding layer 132 is greater in size in a plan view than the liquid crystal cell 110. In the present embodiment, the second bonding layer 132 is made of an optical clear adhesive (OCA).

The second bonding layer 132 made of an OCA has optical transparency and preferably further has heat resistance up to at least about 120°C, moist heat resistance, and weather resistance. In the present embodiment, an example in which the second bonding layer 132 is made of an OCA will be described; however, the configuration is not limited thereto. As in the case of the first bonding layer 131, the second bonding layer 132 may be made of an OCR.

In the present embodiment, the first bonding layer 131 directly joins the first glass plate 141 with the liquid crystal cell 110. The second bonding layer 132 directly joins the second glass plate 142 with the liquid crystal cell 110. The configuration is not limited thereto. For example, a film, such as an ultraviolet (UV) light cut film, may be interposed at least one of a location between the first glass plate 141 and the liquid crystal cell 110 and a location between the second glass plate 142 and the liquid crystal cell 110.

In the present embodiment, as described above, the first bonding layer 131 is disposed between the first glass plate 141 and the liquid crystal cell 110, and the second bonding layer 132 is disposed between the second glass plate 142 and the liquid crystal cell 110. The first bonding layer 131 joins the first glass plate 141 and the liquid crystal cell 110 with each other. The second bonding layer 132 joins the second glass plate 142 and the liquid crystal cell 110 with each other. With this configuration, even when the liquid crystal device 101 is put in a high-temperature environment, such as inside a vehicle in midsummer, an OCR and an OCA having high heat resistance do not soften, so the effect of reducing accumulation of liquid crystal or the like that is a phenomenon in which the liquid crystal of the liquid crystal cell 110 is unevenly distributed and reducing liquid crystal unevenness can be expected.

The liquid crystal device 101 preferably does not include a bonding element containing a pressure-sensitive adhesive component. Examples of the bonding element containing a pressure-sensitive adhesive component include an interlayer made of polyvinyl butyral (PVB) resin or the like. The "bonding element containing a pressure-sensitive adhesive component" is a bonding element that needs application of pressure (that is, a pressure higher than a normal pressure) to be appropriately bonded to an adjacent object. The normal pressure is an environmental pressure. The normal pressure is ordinarily equal to atmospheric pressure and can be a standard atmospheric pressure. Such an interlayer, such as PVB, may soften in a high-temperature environment, and, therefore, liquid crystal unevenness, such as accumulation of liquid crystal in which the liquid crystal of the liquid crystal cell 110 is unevenly distributed may occur. In contrast, in the liquid crystal device 101 according to the present embodiment, no interlayer, such as a PVB resin, is interposed between the first glass plate 141 and the liquid crystal cell 110 or between the second glass plate 142 and the liquid crystal cell 110, so it is possible to reduce liquid crystal unevenness as described above.

### (Manufacturing Method for Light Modulating Device)

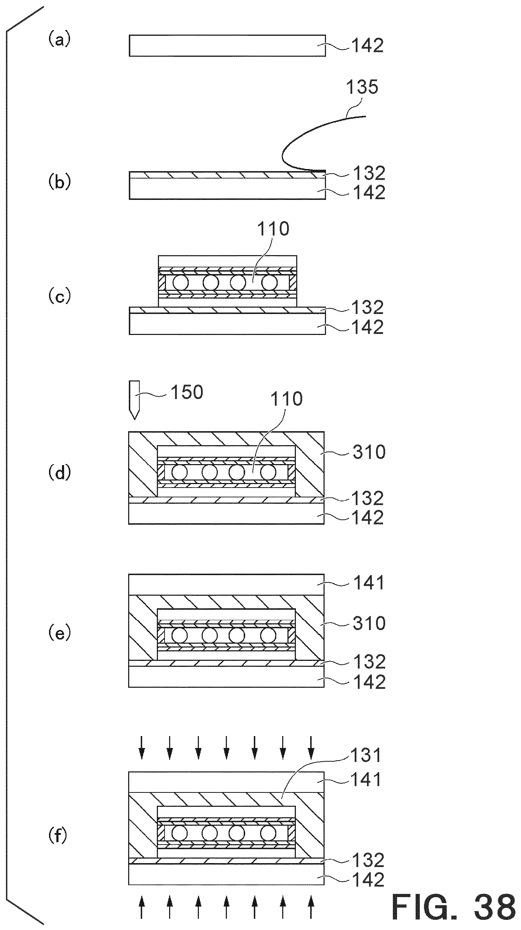

Next, a manufacturing method for the liquid crystal device 101 according to the present embodiment will be described with reference to Fig. 38. Fig. 38 shows views showing the manufacturing method for the liquid crystal device 101 according to the present embodiment. Fig. 38 illustrates the manufacturing method with the sectional views of the liquid crystal device 101.

Initially, as shown in Fig. 38(a), the second glass plate 142 is prepared.

Subsequently, as shown in Fig. 38(b), the second bonding layer 132 made of an OCA is laminated onto the second glass plate 142. In this case, for example, an OCA sheet including the second bonding layer 132 and the mold releasing film 135 is laminated to the second glass plate 142, and then the mold releasing film 135 is peeled and removed, with the result that the second bonding layer 132 is laminated onto the second glass plate 142. The second bonding layer 132 may be laminated to the entire region or part of the region of one side of the second glass plate 142.

Subsequently, as shown in Fig. 38(c), the separately manufactured liquid crystal cell 110 is laminated onto the second bonding layer 132, and the liquid crystal cell 110 is laminated to the second glass plate 142 by the second bonding layer 132. Known various techniques may be used for the manufacturing method for the liquid crystal cell 110. The second bonding layer 132 made of an OCA is a bonding element containing a non-pressure-sensitive adhesive component as described above. For this reason, the liquid crystal cell 110 and the second glass plate 142 are bonded without application of pressure (that is, under an environmental pressure (ordinarily, under atmospheric pressure)). The second bonding layer 132 is bonded to the liquid crystal cell 110 and the second glass plate 142 at a room temperature (for example, higher than or equal to 10°C and lower than or equal to 30°C).

Subsequently, as shown in Fig. 38(d), an uncured liquid first bonding material 310 is applied onto the liquid crystal cell 110. The first bonding material 310 is the one that will be the first bonding layer 131 after being cured and is an OCR material containing an OCR. The OCR material is a liquid curing adhesive layer composition containing a polymerizable compound and may be a liquid curing adhesive layer composition obtained by mixing a base resin, such as an acrylic resin, a silicone resin, and a urethane resin, with an additive. The first bonding material 310 is applied to the entire region or part of the region of one side of the liquid crystal cell 110 with the application nozzle 150, such as a dispenser and a slit coater.

Subsequently, as shown in Fig. 38(e), the first glass plate 141 is prepared, the first glass plate 141 is laminated onto the first bonding material 310, and the first glass plate 141 is laminated to the liquid crystal cell 110 by the first bonding material 310. The first bonding material 310 is an OCR material containing an OCR as described above and is a bonding element containing a non-pressure-sensitive adhesive component. For this reason, the first glass plate 141 is bonded to the liquid crystal cell 110 without application of pressure (that is, under an environmental pressure (ordinarily, under atmospheric pressure)). The first glass plate 141 is bonded to the liquid crystal cell 110 and the second glass plate 142 at a room temperature (for example, higher than or equal to 10°C and lower than or equal to 30°C).

After that, as shown in Fig. 38(f), the first bonding material 310 is cured by applying ultraviolet (UV) light to the second glass plate 142, the second bonding layer 132, the liquid crystal cell 110, the first bonding material 310, and the first glass plate 141 laminated with one another. When the first bonding material 310 is cured, the first bonding layer 131 made of an OCR is formed.

In this way, the liquid crystal device 101 in which the first glass plate 141, the first bonding layer 131, the liquid crystal cell 110, the second bonding layer 132, and the second glass plate 142 are laminated with one another is obtained.

### (Amount of Change V in Storage Elastic Modulus)

Subsequently, the amount of change V from the storage elastic modulus E1 in a room-temperature (25°C) environment to the storage elastic modulus E2 in a high-temperature (85°C) environment is higher than or equal to 0% and lower than or equal to 30%

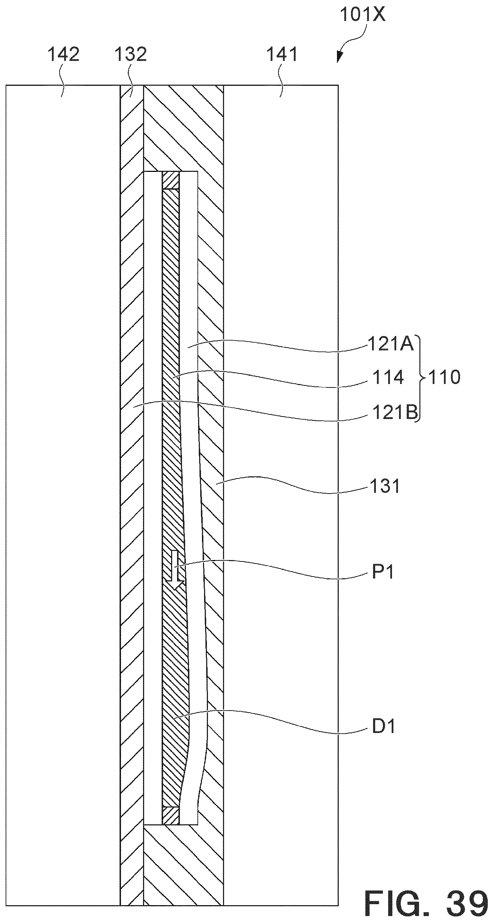

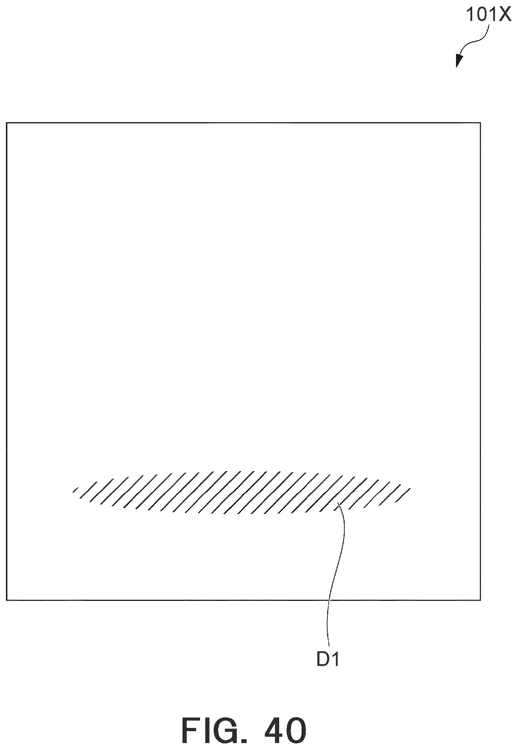

Fig. 39 is a view showing a state where the liquid crystal device 101X according to the comparative example is disposed in an upright position and exposed to a high-temperature environment. Here, a state where the liquid crystal device is disposed in an upright position means a state where the major surface of the liquid crystal device is disposed along the gravity direction (vertical direction). Fig. 40 is a view showing the liquid crystal device 101X shown in Fig. 39 in a plan view.

The liquid crystal device 101X shown in Fig. 39 has a similar configuration to the liquid crystal device 101 according to the present embodiment except that the amount of change V in storage elastic modulus is higher than 30%, so the description will be made by assigning the same reference signs as those of the liquid crystal device 101. Fig. 39 shows the cross section of the liquid crystal device 101X, and the first transparent electrode 122A, the first alignment layer 123A, the second transparent electrode 122B, the second alignment layer 123B, the bead spacers 124, and the like are not shown. The direction of the arrow P1 in Fig. 39 is the direction of gravity.

In a room-temperature environment, in the liquid crystal device 101X, forces that the liquid crystal layer 114, the first bonding layer 131, and the like push each other are kept in balance, and displacement or the like of liquid crystal is suppressed. However, when the liquid crystal device 101X is used in a high-temperature environment, such as in a vehicle, the liquid crystal of the first bonding layer 131 or the liquid crystal layer 114 expands or the first substrate 121A, the second substrate 121B, or the like softens. Thus, the above-described balance collapses, and the first substrate 121A is pulled in a direction in which the gap (thickness) of the liquid crystal layer 114 widens, due to expansion of the liquid crystal layer 114. In addition, since liquid crystal is attracted by gravity in the direction of the arrow P1, liquid crystal may accumulate on the lower side and accumulation of liquid crystal D1 as shown in Fig. 40 may occur into liquid crystal unevenness.

In contrast, in the present embodiment, the amount of change V from the storage elastic modulus E1 in a room-temperature (25°C) environment to the storage elastic modulus E2 in a high-temperature (85°C) environment is higher than or equal to 0% and lower than or equal to 30%, and the amount of change V is more preferably higher than or equal to 2.7% and lower than or equal to 22.7%. Thus, even in a high-temperature environment, forces that the layers such as the liquid crystal layer 114 and the first bonding layer 131 push each other are kept in balance, so widening of the gap of the liquid crystal layer 114 due to expansion of liquid crystal can be suppressed. Thus, the gap of the liquid crystal layer 114 is maintained, so it is possible to suppress movement of liquid crystal downward due to gravity, it is possible to reduce accumulation of liquid crystal D1 or the like, and it is possible to significantly improve liquid crystal unevenness.

Here, Specimens 1 to 6 of the first bonding layer 131 made of an OCR were prepared with different amounts of change V in storage elastic modulus, these were applied to the liquid crystal device 101 according to the present embodiment, and the presence or absence of liquid crystal unevenness in a high-temperature environment was evaluated.

A measuring device and measurement conditions for the storage elastic modulus of each specimen are as follows.
Measuring device: DMA measuring device (Rheogel-E4000 made by UBM Co., Ltd.).
Measurement conditions
Compression measurement
Initial load Automated static load
Frequency 1Hz
Strain Static load 0.5%
Temperature 25°C, 85°C

Each specimen had 10 mm × 10 mm and had a thickness greater than or equal to 1.0 mm and less than or equal to 2.5 mm. The liquid crystal devices 101 were manufactured by respectively using the first bonding layers 131 of Specimens 1 to 6, and the presence or absence of liquid crystal unevenness after being left standing for 60 minutes in a high-temperature environment was checked by visual inspection.

At this time, in the liquid crystal device 101 in which the first bonding layer 131 of each Specimen is used, the thickness (gap) of the liquid crystal layer 114 is 12 µm, and the thickness of the liquid crystal cell 110 is 260 µm. The thickness of the first bonding layer 131 in a region corresponding to the liquid crystal cell 110 is 300 µm, the size of the liquid crystal device in a plan view is 300 mm x 300 mm, and the size of the liquid crystal cell 110 in a plan view is 280 mm × 280 mm.

**[Table 1]**

| | SPECIMEN 1 | SPECIMEN 2 | SPECIMEN 3 | SPECIMEN 4 | SPECIMEN 5 | SPECIMEN 6 |
|---|---|---|---|---|---|---|
| STORAGE ELASTIC MODULUS E1 IN ROOM-TEMPERATURE (25° C) ENVIRONMENT [Pa] | 1.9×10⁶ | 6.9×10⁶ | 1.4×10⁶ | 1.2×10⁵ | 9.7×10⁴ | 1.3×10⁵ |
| STORAGE ELASTIC MODULUS E2 IN HIGH-TEMPERATURE (85° C) ENV IRONMENT [Pa] | 9.2×10⁵ | 3.5×10⁶ | 7.5×10⁵ | 9.5×10⁴ | 8.1×10⁴ | 1.2×10⁵ |
| RATIO E2/E1 [%] | 47.1 | 51.0 | 55.0 | 77.3 | 83.3 | 97.3 |
| AMOUNT OF CHANGE V [%] | 52.9 | 49.0 | 45.0 | 22.7 | 16.7 | 2.7 |
| LIQUID CRYSTAL UNEVENNESS IN HIGH-TEMPERATURE ENVIRONMENT | × (poor) | × (poor) | × (poor) | ○ (good) | O (good) | ○ (good) |

Table 1 is a table summarizing the amount of change V in storage elastic modulus, the presence or absence of liquid crystal unevenness in a high-temperature environment, and the like, of each of Specimens 1 to 6. As shown in Table 1, in the liquid crystal devices respectively including the first bonding layers 131 of Specimens 4, 5, and 6 that satisfy that the amount of change V in storage elastic modulus is higher than or equal to 0% and lower than or equal to 30%, no liquid crystal unevenness occurred in a high-temperature environment. On the other hand, in the liquid crystal devices respectively including the first bonding layers 131 of Specimens 1, 2, and 3 of which the amount of change V in storage elastic modulus exceeds 30%, liquid crystal unevenness occurred. Thus, according to the claimed subject-matter, for the first bonding layer 131 made of an OCR, the amount of change V from the storage elastic modulus E1 in a room-temperature (25°C) environment to the storage elastic modulus E2 in a high-temperature (85°C) environment is higher than or equal to 0% and lower than or equal to 30% and preferably higher than or equal to 2.7% and lower than or equal to 22.7%.

### (Cure Shrinkage)

Next, the reason why the cure shrinkage of the first bonding layer 131 is defined will be described.

As described above, the first bonding layer 131 is made of an OCR. The first bonding layer 131 is liquid in an uncured state and is cured when irradiated with ultraviolet (UV) light. When the cure shrinkage at this time is higher than 2.3%, the liquid crystal cell 110 that is in contact with the first bonding layer 131 is pulled as a result of shrinkage on curing of the first bonding layer 131, with the result that a force retaining the gap (thickness) of the liquid crystal layer 114 decreases, and liquid crystal unevenness occurs when curing is complete. From the above, the cure shrinkage of the first bonding layer 131 is preferably lower than or equal to 2.3%.

The first bonding layers 131 of the above-described Specimens 1 to 6 were prepared, these were respectively applied to the liquid crystal devices 101 according to the present embodiment, and liquid crystal unevenness of the first bonding layer 131 of each Specimen after being cured was evaluated. Specimens 1 to 6 have different cure shrinkages as follows.

Specimen 1 has a cure shrinkage of 3.0%. Specimen 2 has a cure shrinkage of 2.3%. Specimen 3 has a cure shrinkage of 2.5%. Specimen 4 has a cure shrinkage of 1.7%. Specimen 5 has a cure shrinkage of 1.5%. Specimen 6 has a cure shrinkage of 0.8%.

The presence or absence of liquid crystal unevenness was checked by visual inspection when the first bonding layer 131 of each Specimen made of an OCR was cured by application of ultraviolet light to provide a liquid crystal device and then the liquid crystal device was placed flat (the liquid crystal device was disposed such that the major surface is oriented along the horizontal direction).

**[Table 2]**

| | SPECIMEN 6 | SPECIMEN 5 | SPECIMEN 4 | SPECIMEN 2 | SPECIMEN 3 | SPECIMEN 1 |
|---|---|---|---|---|---|---|
| CURE SHRINKAGE [%] | 0.8 | 1.5 | 1.7 | 2.3 | 2.5 | 3.0 |
| LIQUID CRYSTAL UNEVENNESS AFTER BEING CURED | ○ (good) | ○ (good) | ○ (good) | ○ (good) | × (poor) | × (poor) |

Table 2 is a table summarizing the cure shrinkage, the presence or absence of liquid crystal unevenness in a high-temperature environment, and the like, of each of Specimens 1 to 6. In Table 2, Specimens are written from the left side in Table in ascending order of cure shrinkage. As shown in Table 2, in the liquid crystal devices respectively including the first bonding layers 131 of Specimens 2, 4, 5, and 6 of which the cure shrinkage was lower than or equal to 2.3%, no liquid crystal unevenness after being cured was visually recognized. In contrast, in the liquid crystal devices respectively including the first bonding layers 131 of Specimens 1 and 3 of which the cure shrinkage was higher than 2.3%, liquid crystal unevenness after being cured was visually recognized. Thus, the cure shrinkage of the first bonding layer 131 made of an OCR is preferably lower than or equal to 2.3%.

From the above, according to the claimed subject-matter, for the first bonding layer 131, the amount of change V from the storage elastic modulus E1 in a room-temperature (25°C) environment to the storage elastic modulus E2 in a high-temperature (85°C) environment is higher than or equal to 0% and lower than or equal to 30% and preferably higher than or equal to 2.7% and lower than or equal to 22.7%. Furthermore, the first bonding layer 131 preferably has a cure shrinkage lower than or equal to 2.3%. The liquid crystal devices respectively including the first bonding layers 131 of Specimens 4, 5, and 6 that satisfy the above-described conditions are good liquid crystal devices for which liquid crystal unevenness is suppressed.

As described above, according to the present embodiment, the first bonding layer 131 is disposed between the first glass plate 141 and the liquid crystal cell 110, and the second bonding layer 132 is disposed between the second glass plate 142 and the liquid crystal cell 110. The first bonding layer 131 and the second bonding layer 132 each are a bonding element containing a non-pressure-sensitive adhesive component. With this configuration, in a manufacturing process for the liquid crystal device 101, the liquid crystal cell 110 is not exposed to a high-pressure condition, and the liquid crystal device 101 can be manufactured under a normal pressure. Therefore, a high pressure is not applied to the surface of the liquid crystal cell 110, so it is possible to reduce accumulation of liquid crystal that is a phenomenon in which the liquid crystal of the liquid crystal cell 110 is locally unevenly distributed. As a result, it is possible to enhance the quality and external appearance of the liquid crystal device 101.

According to the present embodiment, the first bonding layer 131 is made of an OCR with high heat resistance, and the second bonding layer 132 is made of an OCA with high heat resistance. With this configuration, even when, for example, the liquid crystal device 101 is put in a high-temperature environment, such as inside a vehicle in midsummer, an OCA and an OCR having high heat resistance do not soften, so it is possible to reduce liquid crystal unevenness, such as accumulation of liquid crystal.

According to the claimed subject-matter, the amount of change V is the amount of change (rate of change) from the storage elastic modulus E1 in a room-temperature (25°C) environment to the storage elastic modulus E2 in a high-temperature (85°C) environment, of the first bonding layer 131 made of an OCR. The amount of change V obtained by the above-described expression (1) is higher than or equal to 0% and lower than or equal to 30% and more preferably higher than or equal to 2.7% and lower than or equal to 22.7%. Therefore, when the liquid crystal device 101 is disposed in an upright position in a high-temperature environment, it is possible to suppress liquid crystal unevenness due to falling of part of the liquid crystal of the liquid crystal layer 114 downward in the vertical direction due to gravity and distribute the amount of liquid crystal of the liquid crystal layer 114 uniform in the plane of the liquid crystal device 101. Thus, it is possible to enhance the quality and external appearance of the liquid crystal device 101.

According to the present embodiment, the first bonding layer 131 is made of an OCR, and the cure shrinkage of the first bonding layer 131 is lower than or equal to 2.3%, so it is possible to reduce liquid crystal unevenness, such as accumulation of liquid crystal that occurs when curing of the first bonding layer 131 is complete.

### (Modified Configurations)

The configuration is not limited to the embodiments described above, and various alterations and changes are possible. The scope of the present embodiment also encompasses them.
(1) In the present embodiments, the example in which the liquid crystal cell 110 is a light modulating cell that adjusts the transmittance of light has been described. The configuration is not limited thereto. The present embodiment is suitably applicable to a liquid crystal device including a liquid crystal cell that displays information.
(2) In the present embodiments, the example in which the first bonding layer 131 is an OCR and the second bonding layer 132 is an OCA has been described. The configuration is not limited thereto. For example, the first bonding layer and the second bonding layer each may be an OCR. In this case, in the manufacturing process of the liquid crystal device 101, the second bonding layer 132 is preferably formed such that an OCR material is applied to the second glass plate 142 and half-cured and then the liquid crystal cell 110 and the like are laminated and disposed on the OCR material. In this case, the second bonding layer 132 made of an OCR, as in the case of the first bonding layer 131, is preferably such that the cure shrinkage is lower than or equal to 2.3% and the amount of change V in storage elastic modulus, expressed by the above-described expression (1), is higher than or equal to 0% and lower than or equal to 30%.

## Claims

1. A liquid crystal device (101) comprising:
a first transparent substrate (141);
a second transparent substrate (142);
a liquid crystal cell (110) disposed between the first transparent substrate (141) and the second transparent substrate (142);
a first bonding layer (131) disposed between the first transparent substrate (141) and the liquid crystal cell (110); and
a second bonding layer (132) disposed between the second transparent substrate (142) and the liquid crystal cell (110), wherein
the first bonding layer (131) is an optical clear resin, OCR, and has an amount of change V from a storage elastic modulus E1 in a room-temperature environment of 25°C to a storage elastic modulus E2 in a high-temperature environment of 85°C which is higher than or equal to 0% and lower than or equal to 30%
where V = 1 - (E2/E1).

2. The liquid crystal device (101) according to Claim 1, wherein
the amount of change V is higher than or equal to 2.7% and lower than or equal to 22.7%.

3. The liquid crystal device (101) according to Claim 1 or 2, wherein
a cure shrinkage of the first bonding layer (131) is lower than or equal to 2.3%.

4. The liquid crystal device (101) according to any one of Claims 1 to 3, wherein
a bonding element containing a pressure-sensitive adhesive component is not included.

## Patentansprüche

1. Flüssigkristallvorrichtung (101), umfassend:
ein erstes transparentes Substrat (141);
ein zweites transparentes Substrat (142);
eine Flüssigkristallzelle (110), angeordnet zwischen dem ersten transparenten Substrat (141) und dem zweiten transparenten Substrat (142);
eine erste Verbindungsschicht (131), angeordnet zwischen dem ersten transparenten Substrat (141) und der Flüssigkristallzelle (110); und
eine zweite Verbindungsschicht (132), angeordnet zwischen dem zweiten transparenten Substrat (142) und der Flüssigkristallzelle (110), wobei
die erste Haftschicht (131) ein optisch klares Harz, OCR, ist und eine Änderung V des Speicherelastizitätsmoduls von E1 bei Raumtemperatur (25 °C) zu E2 bei hoher Temperatur (85 °C) aufweist, die größer oder gleich 0 % und kleiner oder gleich 30 % ist,
wobei V = 1 - (E2/E1).

2. Flüssigkristallvorrichtung (101) nach Anspruch 1, wobei
die Änderungsrate V größer oder gleich 2,7 % und kleiner oder gleich 22,7 % ist.

3. Flüssigkristallvorrichtung (101) nach Anspruch 1 oder 2, wobei
die Aushärtungsschrumpfung der ersten Haftschicht (131) niedriger als oder gleich 2,3% ist.

4. Flüssigkristallvorrichtung (101) nach einem der Ansprüche 1 bis 3, wobei
ein Verbindungselement mit einer druckempfindlichen Klebstoffkomponente nicht enthalten ist.

## Revendications

1. Dispositif à cristal liquide (101) comprenant:
un premier substrat transparent (141);
un second substrat transparent (142);
une cellule à cristal liquide (110) disposée entre le premier substrat transparent (141) et le second substrat transparent (142);
une première couche de liaison (131) disposée entre le premier substrat transparent (141) et la cellule à cristal liquide (110); et
une seconde couche de liaison (132) disposée entre le second substrat transparent (142) et la cellule à cristal liquide (110), où
la première couche de liaison (131) est une résine optiquement transparente, ROT, et a une quantité de changement V d'un module élastique de conservation E1 dans un environnement à température ambiante de 25°C à un module élastique de conservation E2 dans un environnement à haute température de 85°C qui est supérieure ou égale à 0 % et inférieure ou égale à 30 %
où V = 1 - (E2/E1)

2. Dispositif à cristal liquide (101) selon la revendication 1, où la quantité de changement V est supérieure ou égale à 2,7 % et inférieure ou égale à 22,7 %.

3. Dispositif à cristal liquide (101) selon la revendication 1 ou 2, où un retrait au durcissement de la première couche de liaison (131) est inférieur ou égal à 2,3 %.

4. Dispositif à cristal liquide (101) selon l'une quelconque des revendications 1 à 3, où un élément de liaison contenant un composant adhésif sensible à la pression n'est pas inclus.
